(19) Europäisches Patentamt
European Patent Office
Office européen des brevets

(11) EP 1 055 926 A2

(12) EUROPEAN PATENT APPLICATION

(43) Date of publication:
**29.11.2000 Bulletin 2000/48**

(51) Int. Cl.[7]: **G01N 27/30**, G01N 33/20, G01N 33/493

(21) Application number: **00107380.8**

(22) Date of filing: **05.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **09.03.2000 JP 2000064360**
**28.05.1999 JP 14914399**
**30.06.1999 JP 18452599**
**09.07.1999 JP 19517399**
**15.07.1999 JP 20108899**
**01.06.1999 JP 15350699**
**20.08.1999 JP 23345699**
**19.07.1999 JP 20439499**

(71) Applicants:
- **Kabushiki Kaisha Meidensha**
**Shinagawa-ku, Tokyo 141-0032 (JP)**
- **Fujishima, Akira**
**Kawasaki-shi, Kanagawa-ken 211-0012 (JP)**

(72) Inventors:
- **Fujishima, Akira**
**Kawasaki-shi, Kanagawa 211-0012 (JP)**
- **Tryk, Donald Alexander**
**Setagaya-ku, Tokyo 155-0033 (JP)**
- **Popa, Elena**
**Tokyo 158-0095 (JP)**
- **Manivannan, Ayyakannu**
**Morgantown, West Virginia 26506 (US)**
- **Rao, Tata Narasinga**
**Misato-shi, Saitama 341-0003 (JP)**
- **Sarada, Bulusu Venkata**
**Misato-shi, Saitama 341-0003 (JP)**

(74) Representative:
**Manitz, Finsterwald & Partner**
**Postfach 22 16 11**
**80506 München (DE)**

(54) **Electrochemical assay using an electroconductive diamond-coated electrode, and electrochemical assay system based thereon**

(57) Electrochemical assay using a conductive diamond electrode comprising:
transferring part of a test object to the surface of a conductive diamond electrode by rubbing the surface of test object against the surface of conductive diamond electrode;
immersing the conductive diamond electrode in an electrolyte solution;
altering the potential of the conductive diamond electrode from negativity towards a positive side, thereby to dissolve the transferred test object into the solution; and detecting the current change in response to the potential change, thereby to analyze the test object.

Furthermore a conductive diamond electrode is used for analyzing plural components in a solution by using electroplating and changing of polarity thereafter.

It is also used for uric acid assay when anodically oxodized.

FIG.1

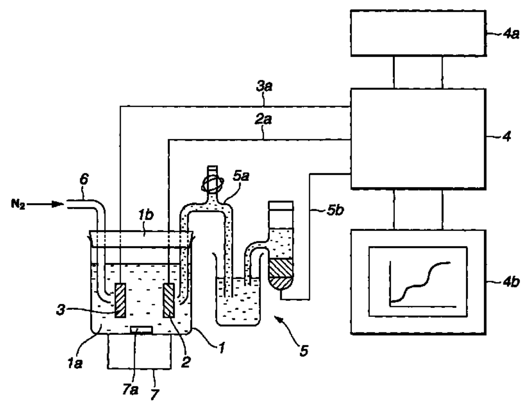




Printed by Xerox (UK) Business Services
2.16.7 (HRS)/3.6

## Description

### BACKGROUND OF THE INVENTION

Field of the Invention

The present invention relates, in its first aspect, to electrochemical assay using an electroconductive diamond-coated electrode suitable for quantification of solid metals wherein a test metal is transferred by friction to the electrode, in its second aspect to the same assay suitable for quantification of ionizing metals wherein a test metal is transferred by electroplating to the electrode, in its third aspect to a flow-injection electrochemical assay system using an electroconductive diamond-coated electrode or an anodically oxidized diamond-coated electrode suitable for sequential quantification of organic sample solutions, and in its fourth aspect to uric acid assay suitable for selective quantification of uric acid separately from ascorbic acid which is often coexistent in the same biological test material, and a uric acid assay system based thereon.

Prior Art

Recently it becomes known that diamond has an excellent electrochemical property (particularly in stability), and is expected that diamond will replace conventional carbon electrodes in electrochemical analysis. Diamond itself has a high electric resistance, and exists as an excellent insulating body. However, when doped with boron as an impurity, diamond lowers its resistance. Thus by adjusting the amount of boron to be added to diamond, it is possible to place the resistance of diamond at any desired position between that of a highly conductive metal and that of a semiconductor.

The boron-doped diamond electrode has a number of additional merits: it has a wide potential window, and gives a low background current when used as an electrode, as compared with conventional electrodes. Thus, the prospect of introducing a diamond electrode in chemical analysis has attracted general attention. Indeed, the boron-doped diamond electrode will enable detection of electrochemical oxidation occurring at a high potential level, because it has a wide potential window.

Electrochemical assay is widely used in various fields including metal industry, environmental science, energy chemistry, imaging engineering, electronics, biology, medicine, etc.

Conventionally, for such electrochemical analysis a system as depicted in Fig. 1 is used. The system is used, for example, for assay of a test object (e.g., a metal) in a solution. In this figure, 1 represents a vessel for assay. It contains an electrolyte solution 1a which contains a test object to be assayed (e.g., metal ion). The vessel is closed with a closing member 1b. An active electrode 2 and an opposite electrode 3 are placed such that they are immersed in the electrolyte solution 1a within the assay vessel 1 with a specified distance between each other. The active electrode 2 consists of, for example, a graphite electrode, glassy carbon electrode, mercury electrode (e.g., mercury coated electrode or mercury drop), or the like. The opposite electrode 3 consists of, for example, an electrode made of platinum or carbon.

To a potentiostat 4 are connected the active electrode 2 and opposite electrode 3 via wires 2a and 3a, respectively. To the potentiostat 4 are further connected a potential sweeper 4a and recorder 4b. A reference electrode 5 (or base electrode) is electrically connected via a capillary 5a to the active electrode 2, and via a wire 5b to the potentiostat 4. The reference electrode 5 consists of a saturated calomel electrode.

A feeder tube 6 is to supply nitrogen gas ($N_2$) to the vicinity of the opposite electrode 3. A stirrer 7 rotates a disc 7a on the bottom of the assay vessel 1, to thereby stir the electrolyte solution 1a within the assay vessel 1.

Next, the method whereby the system in Fig. 1 analyzes metals will be described. Firstly, the potentiostat 4 sweeps the potential of active electrode 2 from a natural level towards negativity, thereby depositing metal ions in the electrolyte solution one after another by electroplating to the surface of active electrode 2 (reduction condensation).

Then, the potentiostat 4 sweeps the potential of the active electrode 2 towards positivity, thereby dissolving by anode stripping the metals deposited on the active electrode into the electrolyte solution 1a. Each deposited metal dissolves at a characteristic oxidizing potential level. Thus, it is possible, when a metal dissolves into the electrolyte solution 1a, to analyze the metal by detecting, at a desired sweeping speed, a change in electric current in response to the potential change of the active electrode 2.

True, a system as depicted in Fig. 1 enables electrochemical assay of metal ions in an electrolyte solution. However, if the test substance is solid, it must be dissolved in the electrolyte solution before it is deposited on the active electrode for analysis. This requires time, and may damage the test substance during handling. Thus, such a system is applicable only for a limited range of substances.

The conventional system as depicted in Fig. 1 poses another problem even if the test object occurs as metal ion. Take, as an example, conventional electrochemical assay using a mercury drop electrode or a mercury-coated

electrode (mercury electrode hereinafter). This method consists of reducing metal ion in a solution at the surface of mercury electrode, thereby assimilating the metal to the surface of mercury electrode, or amalgamating it to the mercury electrode, sweeping the potential of the amalgamated electrode, thereby subjecting the electrode to anode stripping, and measuring the current in response to the potential change.

A conventional system incorporating a carbon electrode or mercury electrode was used for assay of an electrolyte solution containing 1.0 x $10^{-6}$ M $Pb(NO)_3$, 1.0 x $10^{-6}$ M $ZnSO_4$, 1.0 x $10^{-6}$ M $Cu(NO_3)_2$, 0.10M KCl and $H_2O$ (pH 3.3).

Assay consisted of holding the potential of active electrode at -1200 mV for 90 seconds, thereby depositing metal ions on the surface of active electrode, sweeping the potential of active electrode towards positivity, and measuring the current change in response to the potential change at a sweep speed of 50 mV/s.

The results are given by traces g (assay based on carbon electrode) and h (assay based on mercury electrode) in Fig. 2. As shown by the traces, the current changes in response to the potential changes at which deposited metals dissolve into the electrolyte solution are recorded. It is possible to analyze Zn, Pb and Cu by reading the potentials at which current peaks (troughs in this case) occur.

With this system, however, when the carbon electrode was used, peaks ascribable to Cu and Zn ion became indistinct. On the other hand, when the mercury electrode was used, a peak ascribable to Hg ion is observed at a potential higher than the potential causing the current peak ascribable to Cu ion. The reason why Hg ion is detected which was not given to the solution deliberately may be accounted for by dissolution into the solution of Hg coated on the electrode. Thus, with this system based on a mercury electrode, it is impossible to detect metal ions such as Pt that have an oxidation potential higher than does Hg ion.

Moreover, with the conventional system as depicted in Fig. 1, it is impossible to completely oxidize the deposited metals, because the metals persist by amalgamation as impurities in the electrode. This degrades progressively the reliability of the mercury electrode after each assay.

Therefore, if the same mercury electrode is repeatedly used for analysis, the impurities must be disposed of after each assay. This requires time. If the mercury electrode is replaced with a new electrode each time analysis is required, cost involved in analysis will increase.

Moreover, mercury is harmful, and will become a pollutant to the environment if disposed of carelessly. Thus, disposal of mercury from the mercury electrodes that have become useless after repeated use, will pose another problem.

Electrochemical assay of organic substances in a solution is as important as assay of metals in a solution. This is particularly true for organic materials contained in biological samples.

Take, as an example, assay of histamine. Histamine is an amine indispensable for the maintenance of biological activity. Indeed, in nature, small amounts of histamine exist in a wide variety of vegetables and fruits, and it is not harmful as long as it exists in a small amount. However, if fermented food and drink such as beer, fish oiled for preservation, wine, etc., are not treated in a sufficiently sanitary manner, their histamine content will increase, and if man eat such a food by accident, he may suffer from a disorder in the digestive tract, cardiovascular system, or nervous system. Histamine is a chemical transmitter responsible for evocation of the vascular contraction associated with obesity and a variety of allergic reactions. Therefore, detection of histamine in a test sample is very important.

For assay of histamine, the electrochemical analysis system incorporating a flow-cell has been widely used, because it enables sequential analysis when combined with liquid chromatography.

Analysis with the electrochemical assay system incorporating a flow-cell consists of guiding each of sample solutions containing a test object dissolved in buffer into the flow-cell via a pump, applying a voltage between an active electrode and opposite electrode in the flow-cell, thereby causing a reaction between the active and opposite electrodes to generate a signal, and sending the signal to an assay unit comprising a potentiogalvanostat and analyzer (personal computer or the like), where the signal is controlled and analyzed for assay. The buffer in this system is a solution to be added to a test substance to facilitate electrochemical assay, or, for example, a solution to be added for controlling the pH of the sample solution.

In such an electrochemical assay system, conventionally, a glassy carbon electrode has been used as the active electrode to be kept in the flow-cell.

The reason why a glassy carbon electrode is used as the active electrode may be ascribed to the fact that glassy carbon, like pyrolytic graphite, is highly conductive, stable to chemical actions, and impermeable to gas, and, in addition, it is cheap, and has a comparatively high overpotential in the presence of hydrogen or oxygen.

However, for assay of histamine, the conventional system using a grassy carbon electrode will present with difficulty, because electrochemical oxidation of histamine occurs at a high potential.

Moreover, when a sane grassy carbon electrode is used repeatedly over a long time, it is found that the accuracy of assay progressively degrades, and thus it is impossible to repeatedly obtain accurate assay results over a long time using the same electrode.

Fig. 3 shows the assay result of 50 μM dehydronicotinamide adenine dinucleotide (NADH) in 0.1M buffer pH

7 obtained with an electrochemical assay system in which a grassy carbon electrode was placed as the active electrode. As shown in the figure, the characteristics chart obtained at the initial phase of assay with a fresh glassy carbon electrode, and that obtained with the same electrode one hour after the assay are widely different from each other.

The same problem is more acute in the case of distinguishing uric acid from ascorbic acid which often coexists in a same biological sample.

Uric acid is a terminal product of the metabolism of purines in the body: it is derived extrinsically from purines contained in meals, and intrinsically as decomposed products of tissue nucleic acids, or as a product synthesized directly and not by way of nucleic acids. In serum, part of uric acid binds to albumin and the rest exists free. It exists in red cells at a concentration half as high as that of serum. The total amount of uric acid contained in human adult is 1 to 2g, and the majority thereof exists out of the cardiovascular system. Daily urinary excretion of uric acid is 0.4 to 0.8g in human adult, and its amount reflects the metabolism of purines in the body.

Uric acid is filtered out by renal glomeruli, but the majority of thus filtered-out uric acid is reabsorbed by renal tubules. Thus, uric acid contained in urine is mostly secreted by renal tubules. Hyperuricemia is caused partly by the increased production of purines in the body (e.g., in gout) and partly by the abnormally increased secretion of uric acid from the kidney. However, hyperuricemia is also observed in hypertension and obesity. Thus, hyperuricemia has attracted attention as a disease indicative of abnormal metabolism.

For the assay of uric acid, the reduction method and uricase (enzyme) method have been employed.

(a) Reduction method

The reduction method is based on the reaction through which uric acid, when allowed to contact with phosphotungstate in an alkaline solution, reduces it into the compound giving the tungsten blue. Various alkalinizing agents have been developed to enhance the sensitivity of the reaction, to prevent turbidity of the reaction solution, or to stabilize the coloration. Among them, the Caraway's method using sodium carbonate and its modifications are widely used. Reactive substances in serum other than uric acid include ascorbic acid, SH compounds, and phenol. Contribution from ascorbic acid can be essentially eliminated by adding an alkali substance to the sample, or to the protein-deprived sample, and then leaving the resulting sample. Next, the phosphotungstate reduction method will be described.

Firstly, its principle will be introduced. Sodium carbonate is added to serum filtrate deprived of protein through the addition of tungstate, to decompose chromogens irrelevant of uric acid. Then, the phosphotungstate reagent is added and the developed tungsten blue is subjected to colorimetry. Urea is also added to prevent the reaction solution from developing turbidity.

The reagents to be used include the protein-removing tungstate reagent, an original phosphotungstate solution, a phosphotungstate solution appropriately adjusted for use, 14% sodium carbonate-urea solution, and a uric acid standard solution with a concentration of 100 mg/dl uric acid. To obtain a standard curve, the 100 mg/dl uric acid standard solution was serially diluted with water, before assay. The concentrations of diluted solutions correspond to that of uric acid in serum. If the standard curve is found to be linear, a standard curve for a given test will be obtained only by determining the reaction intensities of water (blank) and a standard solution of 0.5 mg/dl uric acid.

The test run proceeds as follows. Firstly, 1.0 ml of serum, 8.0 ml of water and 0.5 ml of 2/3N sulfuric acid are put into a flask for mixture, 0.5 ml of 10% sodium tungstate is added thereto, and they are mixed with stirring, and left for 20 minutes. The content is transferred to middle-sized test tubes, which are then centrifuged at 3000 rpm for 10 minutes. Then, three middle-sized test tubes A, S and B are taken: tube A receives 3.0 ml of supernatant; tube S 3.0 ml of standard solution, and tube B 3.0 ml of water as blank. One milliliter of sodium carbonate and 1 ml of urea solution are added to each test tube for mixture, and the mixtures are left for 20 minutes. A 0.5 ml of appropriately adjusted phosphotungstate solution is added to each test tube for thorough mixture, and the mixtures are left for 15 minutes for complete coloration. Within 30 minutes thereafter, the light absorption of tubes A and S is determined at 710 nm (or 660 nm may be used) with the absorption of tube B serving as control. If the relative absorption measurements of tubes A and S thus determined are designated as $E_A$ and $E_S$, the serum concentration of uric acid can be obtained from the following equation:

$$\text{Serum concentration of uric acid} = (E_A/E_S) \times 5 \text{ mg/dl}.$$

(b) Uricase method

Uricase is an enzyme to oxidize uric acid into allantoin and $H_2O_2$, is highly specific to uric acid, and has been widely used for the determination of uric acid content in a biological sample.

The method includes a number of varieties: (1) a method, utilizing the fact that uric acid has the maximum absorption at 293 nm, measures the light absorption of a sample at 293 nm before and after the sample reacts with uricase, and determines the uric acid content in the sample by measuring a reduction in light absorption after the reaction;

(2) another method is to allow uricase to covalently bind with peroxidase, thereby producing $H_2O_2$ in the presence of uric acid which then oxidizes a 4-aminoantipyrine-phenol system (or aniline system) or an MBTH-DMA system to develop coloration; (3) a further method is to allow uricase to covalently bind with catalase, thereby producing $H_2O_2$ in the presence of uric acid which then oxidizes methanol into formaldehyde which is then made to develop coloration by the acetylacetone method; and (4) a still further method is based on an enzyme-fixed membrane electrode which is obtained by fixing uricase on a membrane selectively permeable to $H_2O_2$, and wrapping an $H_2O_2$ electrode with the membrane. Next, the uricase-catalase and uricase-peroxidase method will be described. The uricase-catalase method will be given firstly.

Its principle will be introduced. According to this method, uricase is allowed to react with uric acid, to give $H_2O_2$; $H_2O_2$ oxidizes methanol in the presence of catalase to give formaldehyde; formaldehyde develops a yellowish color under the influence of acetylacetone and an ammonium salt; and the color is subjected to colorimetry at 410 nm. This method is excellent in specificity and accuracy, being uninfluenced from disturbing effects of various coexistent substances. However, this method requires a blank because it uses a beam of rather short wavelength. The blank is prepared in two ways: one is deprived of protein and the other is the solvent itself. Generally, the latter is used.

The necessary reagents include a methanol/acetone solution, catalase/ammonium salt solution, uricase/catalase/ammonium salt solution, uric acid stock solution of 100 mg/dl, uric acid standard solution of 10 mg/dl, etc. Usually, the uric acid standard stock solution of 100 mg/dl is serially diluted into solutions of 2, 4, 6, 8 and 10 gm/dl; the uric acid content of each solution is determined by the same method as used for test, to prepare a standard curve; and if the curve is found to be essentially linear, it is only necessary to determine the current intensity corresponding to a standard solution containing uric acid at 10 mg/dl, whenever it is required to determine the uric acid content of a given sample.

The test run proceeds as follows. Firstly, four test tubes A, B, S and SB are taken: each of tubes A and B receives 2.0 ml of sample (if the sample is urine, it is diluted 10 fold with water); and each of tubes S and SB receives 0.2 ml of standard solution containing uric acid at 10 mg/dl. One milliliter of methanol/acetone solution is added to each test tube for mixture. Then, test tubes A and S for assay receive 2.0 ml of reaction agent, while test tubes B and SB to serve as blank receive 2.0 ml of blank reagent, for mixture. The tubes are warmed at 37°C for 70 minutes. On completion of the reaction, the tubes are cooled with water, and subjected to colorimetry at 710 nm with water serving as blank, to determine the light absorption of the tubes or $E_A$, $E_S$, $E_B$ and $E_{SB}$. The serum concentration of uric acid in the test sample can be obtained from the following equation:

$$\text{Serum concentration of uric acid (mg/dl)} = 10x(E_A - E_B)/(E_s - E_{SB}).$$

If the sample is urine, the above result must be multiplied 10 times.

Next, the uricase/peroxidase method will be described. Its principle will be firstly given. According to the method, uricase is allowed to oxidize uric acid to generate $H_2O_2$ which helps 4-aminoantipyrine and a coupling reagent to condense through oxidation in the presence of POD, to generate a quinone pigment which is then measured by colorimetry. Because the molar concentration of uric acid in serum is low, a coupling agent of aniline or m-toluidine compound is used which will give a quinone pigment having the maximum absorption at 550-600 nm, or a range of rather long wavelength. This is to raise the sensitivity of measurement and to preventing hemoglobin and bilirubin contained in the same sample from affecting the coloration of the pigment. Here a method incorporating N-ethyl N-(3-methylphenyl)-N'-acetylethylenediamine (EMAE) or a m-toluidine compound as the coupling agent will be described.

The reagents used include 0.1M phosphate buffer pH 6.0 as buffer, coloration reagent containing 1.2 mM of original EMAE solution, and 10 mg/dl uric acid standard solution. For measurement, three test tubes A, S and B are taken, and 50 µl of sample, standard solution and purified water are put into tubes A, S and B, respectively. Then, 3.0 ml of coloration reagent is put into each test tube, and the mixture is warmed at 37°C for five minutes. Later, the light absorption of-test tubes A and S is determined with test tube B serving as blank, to give $E_A$ and $E_S$. The uric acid concentration is calculated from the following equation:

$$\text{Uric acid concentration} = 10 \times E_A/E_S \text{ mg/dl}.$$

The conventional assay of uric acid as described above, however, requires skill and time. In recent years, trials have been made to develop a method whereby one can easily determine the uric acid concentration of a sample at site, whether he is skilled or not. One of such methods includes the use of an enzyme sensor. Recently, the diamond-coated electrode is developed, and a trial is being made to apply the diamond-coated electrode to uric acid assay.

However, it is not possible for the diamond-coated electrode to directly detect uric acid in a sample. Usually, biological fluid contains ascorbic acid together with uric acid. For example, the concentration of uric acid in urine and serum (blood) is about 2-2.5 mmol/l and 50-60 µl/l, respectively. However, the coexistent concentration of ascorbic acid is about 20 to 30 times that of uric acid in blood. In urine, ascorbic acid coexists at same concentration. To meet this

situation, a sample used for uric acid assay must be diluted about 100-5000 fold before assay, because such dilution will serve to lessen the matrix effect (effect exerted by, for example, certain proteins or other electrochemically active biological substances) of the sample.

Since uric acid coexists with ascorbic acid as described above, it is difficult for a uric acid sensor incorporating a diamond-coated electrode to distinguish uric acid from ascorbic acid as they produce current signal at the same potential.

## SUMMARY OF THE INVENTION

In view of above problems, this invention has been proposed, and aims at providing, in its first aspect, sensitive, accurate, and rapid electrochemical assay using a conductive diamond-coated electrode suitable particularly for quantification of solid metals. The method consists of using a polycrystal conductive diamond electrode doped with a high concentration of boron, rubbing the conductive diamond electrode against a test object, for example, a solid metal such as gold, to allow thereby part of the metal to be transferred by friction to the surface of the conductive electrode, immersing the conductive electrode carrying the metal in an electrolyte solution, shifting stepwise the potential of the conductive electrode from a negative level towards positivity by differential pulse voltametry, thereby dissolving the metal adhered to the electrode into the electrolyte solution, and detecting the current change in response to the stepwise shift of potential.

The invention, in its second aspect, provides electrochemical assay suitable particularly for quantification of ionizing metals. The method consists of using a conductive diamond-coated electrode doped with a high concentration of boron as an active electrode, immersing the electrode in a solution containing a test object, for example, an ionizing metal such as Pb, Cd or the like, together with a reference electrode, and sweeping a potential towards negativity with respect to the reference electrode, thereby depositing the metal on the surface of the conductive diamond electrode. Then, the potential of the conductive diamond electrode is swept towards positivity in a stepwise manner, thereby dissolving the metal deposited thereon to the solution, and the current change in response to the potential step is measured, to obtain the current characteristics as a function of potential. Finding peaks in the current characteristics, and determining at what potentials those peaks occur enable analysis of the test metal contained in the solution.

The invention, in its third aspect, provides a flow-injection type electrochemical assay system using a conductive diamond-coated electrode or an anodically oxidized diamond-coated electrode suitable particularly for quantification of organic materials whereby plural test materials are stably assayed sequentially. The method consists of using, as an active electrode, a boron-doped diamond electrode, or alternatively an anodically oxidized boron-doped diamond electrode which is obtained by immersing a boron-doped diamond electrode in an acidic or alkaline solution, passing current sufficiently strong to bring about an oxidation reaction on the diamond electrode, thereby applying anodic oxidation to the diamond electrode. The method is based on a flow-cell incorporating such a boron-doped diamond electrode, or an anodically oxidized boron-doped diamond electrode together with reference and opposite electrodes, and an electrochemical assay system connected to the flow-cell. Thus, the method further consists of introducing a sample solution containing a test object, for example, an organic material such as histamine, into the flow-cell, applying a voltage between the active electrode and opposite electrode for electrochemical analysis, disposing of the solution after analysis, and repeating the same process for another test object, until the whole series of samples are completely analyzed. This flow-cell based electrochemical assay system is so stable in operation over a long time as to be useful for sequential analysis of samples including a wide variety of chemical compounds including those like histamine that have a high oxidation potential.

The invention, in its fourth aspect, provides electrochemical assay using an anodically oxidized diamond-coated electrode particularly suitable for selective quantification of uric acid separately from ascorbic acid which is often coexistent in a same biological sample. The method is based on a uric acid sensor incorporating an anodically oxidized boron-doped diamond electrode together with reference and opposite electrodes, and an electrochemical assay system connected to the uric acid sensor. Thus, the method consists of introducing a sample solution containing a test object, for example, uric acid in a biological sample which may also contain ascorbic acid, into the sensor, applying a voltage between the active electrode and opposite electrode, measuring the current change in response to the potential step thereby to obtain the current characteristics as a function of potential, in which a peak ascribable to uric acid is sufficiently separated from a peak ascribable to ascorbic acid owing to the anodic oxidation of the active electrode, and selectively determining the concentration of uric acid in the sample free from the disturbing effects from ascorbic acid. The method still further consists of modifying the uric acid sensor into a flow-cell, and connecting the flow-cell to an electrochemical assay system incorporating a flow-injection unit, and using the resulting flow-cell based electrochemical assay system for sequential, selective analysis of uric acid in plural samples.

BRIEF DESCRIPTION OF THE DRAWINGS

Fig. 1 is a schematic diagram of a generally known system used for analysis of metals.

Fig. 2 gives current characteristics charts as a function of potential representing the results of assay with the assay system as depicted in Fig. 1 performed on an electrolyte solution containing various metal ions.

Fig. 3 gives current characteristics charts representing the assay results with an electrochemical assay system using a glassy carbon electrode performed on 50 μM NADH in 0.1M buffer pH 7.

Fig. 4 gives a current characteristics chart as a function of potential obtained in Example 1 where sample S1 containing lead was assayed.

Fig. 5 gives a current characteristics chart as a function of potential obtained in Example 1 where sample S2 containing iron was assayed.

Fig. 6 gives a current characteristics chart as a function of potential obtained in Example 1 where sample S3 containing gold was assayed.

Fig. 7 gives a current characteristics chart as a function of potential obtained in Example 2 where sample S4 containing copper was assayed.

Fig. 8 gives a current characteristics chart as a function of potential obtained in Example 3 where sample S5 containing an alloy or brass was assayed.

Fig. 9 gives a current characteristics chart as a function of potential obtained in Example 4 where sample S6 composed of a number of metal elements was assayed.

Fig. 10 gives a current characteristics chart as a function of potential obtained in Example 5 where sample S7 or a Japanese ¥100 coin was assayed.

Fig. 11 gives a current characteristics chart as a function of potential obtained in Example 5 where sample S8 or a Japanese ¥500 coin was assayed.

Fig. 12 gives a current characteristics chart as a function of potential obtained in Example 5 where sample S9 or a US 25 cent coin (quarter) was assayed.

Fig. 13 gives a current characteristics chart as a function of potential obtained in Example 6 where sample 510 or a Japanese ¥100 coin was assayed.

Fig. 14 gives a current characteristics chart as a function of potential obtained in Example 6 where sample S11 or a US one cent coin (dime) was assayed.

Fig. 15 gives a current characteristics chart as a function of potential obtained in Example 7 where sample solution S11 containing 1 x $10^{-6}$ M $Pb(NO_3)_2$ was assayed.

Fig. 16 gives current characteristics charts as a function of potential obtained in Example 8 where sample solutions S12 to S16 containing different amounts of $Pb(NO_3)_2$ were assayed.

Fig. 17 gives a standard dose-response graph based on the peak currents of S12 to S16 in Fig. 16 after contributions from background currents were corrected.

Fig. 18 gives a current characteristics chart as a function of potential obtained in Example 9 where sample solution S17 containing 1 x $10^{-6}$ M $Cd(NO_3)_2$ was assayed.

Fig. 19 gives current characteristics charts as a function of potential obtained in Example 10 where sample solutions 518 to 522 containing different amounts of $Cd(NO_3)_2$ were assayed.

Fig. 20 gives a standard dose-response graph based on the peak currents of S18 to S22 in Fig. 19 after contributions from background currents were corrected.

Fig. 21 gives a current characteristics chart as a function of potential obtained in Example 11 where sample solution S23 containing 1 x $10^{-6}$ M $Zn(NO_3)_2$ was assayed.

Fig. 22 gives a current characteristics chart as a function of potential obtained in Example 12 where sample solution S24 containing 1 x $10^{-6}$ M $HAuCl_4$ was assayed.

Fig. 23 gives a current characteristics chart as a function of potential obtained in Example 13 where sample solution 525 containing 1 x $10^{-6}$ M $Pb(NO_3)_2$ was assayed.

Fig. 24 gives a current characteristics chart as a function of potential obtained in Example 14 where sample solution S26 containing 5 x $10^{-7}$ M Cd and Pb ion was assayed.

Fig. 25 gives a current characteristics chart as a function of potential obtained in Example 15 where sample solution S27 containing 1 x $10^{-6}$ M $Cu(NO_3)_2$ was assayed.

Fig. 26 gives current characteristics charts as a function of potential obtained in Example 16 where sample solutions S28 to S32 containing different amounts of $Cu(NO_3)_2$ were assayed.

Fig. 27 gives a standard dose-response graph based on the peak currents of S28 to S32 in Fig. 26 after contributions from background currents were corrected.

Fig. 28 gives a current characteristics chart as a function of potential obtained in Example 17 where sample solution S33 containing different metal ions was assayed.

Fig. 29 is a schematic diagram of an electrochemical assay system (flow injection analysis system) incorporating a conductive diamond electrode representing an embodiment of this invention.

Fig. 30 gives a current characteristic chart obtained with an electrochemical assay system representing an embodiment of this invention when 20 μl of 100 μM NADH was repeatedly injected at one minute interval together with 0.1M phosphate buffer via an injection valve into the system.

Figs. 31A, 31B and 31C give current characteristic charts obtained with the electrochemical assay system representing an embodiment of this invention when 20 μl of 1 μM, 100 nM or 50 nM NADH was repeatedly injected at one minute interval together with 0.1M phosphate buffer via an injection valve into the system.

Fig. 32 gives characteristic charts relating potential with current obtained when 20 μl of 100 μM NADH in 0.1M phosphate buffer was injected into the system at 0.5 ml/min.

Fig. 33 gives voltage-current characteristics charts obtained one from an electrochemical assay system using a conductive diamond electrode and the other from the same assay system using a conductive glassy carbon electrode performed on 100 μM histamine in 0.1M buffer pH7.

Fig. 34 gives a current characteristics chart obtained with an electrochemical assay system representing an embodiment of this invention, when 100 μM histamine was repeatedly injected at one minute interval into the system.

Fig. 35A gives a current characteristics chart obtained with the electrochemical assay system representing an embodiment of this invention, when 20 μl of 50 μM, 20 μM, 10 μM and 1 μM histamine was repeatedly injected at one minute interval via an injection valve into the system.

Fig. 35B gives a graph relating the concentration of histamine with the peak current.

Fig. 36 gives a comparison of potential windows obtained from a conductive diamond electrode, glassy carbon electrode, platinum electrode and gold electrode in 0.5M sulfuric acid in water.

Fig. 37 is a schematic diagram of a uric acid sensor representing an embodiment of this invention.

Fig. 38 is a schematic diagram of a uric acid assay system representing a further embodiment of this invention.

Fig. 39 gives an assay result of a sample containing uric acid and ascorbic acid obtained by the assay of this invention.

Fig. 40 is a diagram to illustrate the mode how potential pulses are given in DPV, and how the resulting currents are sampled.

Fig. 41 is a differential pulse voltamgram.

Fig. 42 gives response characteristics charts when samples containing a very minute amount of test object were assayed by potential step chronoamperometry.

Fig. 43 gives characteristics charts of background current obtained by potential step chronoamperometry.

Fig. 44 gives standard dose-response graphs for uric acid.

Fig. 45 gives current characteristics charts obtained one with a diamond electrode not undergoing anodic oxidation and the other with an anodically oxidized diamond electrode, for a sample containing uric acid and ascorbic acid.

Figs. 46A and 46B gives current characteristics charts in assay of uric acid before the conductive diamond electrode received anodic oxidation (Fig. 46A) and after it had received anodic oxidation(Fig. 46B).

Figs. 47A and 47B gives current characteristics charts in assay of ascorbic acid before the conductive diamond electrode received anodic oxidation (Fig. 47A) and after it had received anodic oxidation(Fig. 47B).

Fig. 48 gives graphs plotting Ep's or potentials giving current peaks in terms of pH.

Fig. 49 gives a current characteristics chart representing the result of assay based on flow injection.

## DESCRIPTION OF THE PREFERRED EMBODIMENTS

### Preparation of Boron-Doped Diamond-Coated Electrode

A boron-doped polycrystalline diamond film was prepared as follows under a high pressure (pressure employed in plasma assisted CVD is kept several times as high as that employed in ordinary CVD which occurs at 133.322 Pa) by plasma-assisted CVD using micro-wave with a frequency of 2.45 GHz. A microwave CVD film preparation apparatus provided by ASTeX was used.

A silicone substrate {Si(100)} was used. The substrate was subjected to texture treatment (for example, polished with diamond powder of 0.5 μm in size) and set in place in a substrate holder. The material for film formation included a mixture of acetone and methanol (9:1 in volume ratio), to which was added boron oxide ($B_2O_3$) to give a mixture having a boron/carbon ratio (B/C ratio) of $10^4$ ppm.

Pure $H_2$ gas to serve as carrier gas was passed through the material for film formation, to be introduced in a chamber to which was also introduced hydrogen through another line (for example at a flow rate of 532 cc/min) to give gas having a specified pressure (for example, 115 x 133.322 Pa). Then, a microwave with a frequency of 2.45 GHz was

applied for discharge, and the power was adjusted to 5 kW. After stabilization, $H_2$ gas to serve as carrier gas was allowed to flow through the material (liquid) for film formation. Film formation proceeds at 1-4 µm/h. The duration of film formation was adjusted to give a film of about 30 µm in thickness. With this apparatus, the substrate was not deliberately heated, but in normal operation the substrate is heated to about 850-950°C.

Thus, a polycrystal diamond film doped with boron ($B^{3+}$) (conductive diamond electrode hereinafter) was prepared. Its raman spectrum gives a single peak at 1333 $cm^{-1}$, without any activities at 1400-1600 $cm^{-1}$ suggestive of the existence of amorphous carbon. Its electrical conductivity is about $10^{-3}$ Ù.cm, and its cyclic voltamogram obtained in 0.5M $H_2SO_4$ revealed that it has a wide potential window of -1.25 - +2.3V (with respect to SHE).

Assay of Solid Metals with Assay System Using Boron-Doped Diamond Electrode

An assay system as shown in Fig. 1 in which a conventional active electrode had been substituted for a conductive diamond electrode of this invention was used. The electrolyte solution consisted of 0.1M KCl (reagent class) whose pH had been adjusted to pH 1 through addition of HCl (reagent class). A potentiostat (Model HZ 3000 provided by Hokuto Electric Co.) was used. The conductive diamond electrode was inserted into the assay system so as to make the surface area of its tip immersed in the solution to be 0.4 $cm^2$. Assay was made at room temperature unless stated otherwise.

(Example 1)

A sample S1 consisting of solid lead (99% purity) was used for assay. Firstly, the conductive diamond electrode was rubbed two to three times against the sample simply by hand, so that part of the sample was transferred onto the surface of the electrode. The adherence of the sample onto the surface of conductive diamond electrode was inspected by SEM: the sample invaded into spaces among fine crystals on the electrode surface, but its adhered amount was very minute (several nano-gram according to estimation). Then, the conductive diamond electrode was placed in the assay system.

The potential of the conductive diamond electrode with respect to the reference electrode was moved in a stepwise manner from the negative side toward the positive side at a sweeping speed of 20 mV/s for differential anode stripping voltametry. Namely, through this process, the sample adhered onto the surface of conductive diamond electrode was dissolved to the electrolyte solution, and the current change in response to the potential step was measured to obtain a current characteristics chart (differential pulse voltamgram) as a function of potential (with respect to the reference electrode). A peak current ascribable to the test object was read from the current characteristics chart, and a potential at which the current peak occurred was determined for analysis of sample S1.

In another run, a sample consisting of solid iron (99% purity) was assayed under the same condition as above. Namely, part of sample S2 was transferred by friction to the surface of conductive diamond electrode, and dissolved in the solution for analysis.

In a further run, a sample S3 consisting of solid gold (99.95% purity) was assayed under the same condition. Namely, part (very minute amount) of sample S3 was transferred by friction to the surface of conductive diamond electrode, and dissolved in the solution for analysis.

The assay results of samples S1, S2 and S3 are given by the current characteristics charts of Figs. 4, 5 and 6, respectively. As shown in Fig. 4, a distinctive peak is obtained when the potential is -0.48V which indicates sample S1 consists of lead. Referring to Fig. 5, a distinctive peak is obtained when the potential is 0.8V which indicates sample S2 consists of iron. Then, referring to Fig. 6, a distinctive peak is obtained when the potential is about 0.95V which indicates sample S3 consists of gold.

The peak current of sample S1 shown in Fig. 4 has a width (half peak width being 0.3V or less) larger than that of the peak current of sample S2 shown in Fig. 5. Such difference in current width may be accounted for by the rapid dissolution of sample S1 into the solution as compared with sample S2.

In this example, it was confirmed that the assay system based on an conductive diamond electrode of this invention can assay solid objects, particularly solid metals including lead, iron, gold or the like. Further, the system is applicable even for assay of metals such as gold that have a comparatively high oxidation potential.

(Example 2)

Of all metals, for example, if copper is dissolved through oxidation into an electrolyte solution having a high concentration of chloride (e.g., KCl), $Cu^+$ progressively stabilizes by turning into chlorides. Thus, Cu is oxidized in a complicated manner (copper undergoes oxidation via three steps) as represented by the following reaction formulae (1) to (3).

$$Cu^0 \rightarrow Cu^+ \quad (1)$$

$$Cu^+ \rightarrow Cu^{2+} \quad (2)$$

$$Cu^0 \rightarrow Cu^{2+} \quad (3)$$

As a comparison, if copper is dissolved through oxidation into a chloride-free electrolyte solution (or an electrolyte solution having a very low concentration of chloride), oxidation will proceed according to the reaction formula (3) above (oxidation via one step).

In this example, a sample S4 consisting of solid copper was used. Part (a very minute amount) of sample S4 was allowed to adhere to the surface of conductive diamond electrode, and dissolved in an electrolyte solution (having a high concentration of chloride) for assay. The assay results of sample S4 is given by the current characteristics chart of Fig. 7. As shown in Fig. 7, three current peaks are observed at different potentials which indicates sample S4 consists of copper.

In this example, it was confirmed that the assay system based on an conductive diamond electrode of this invention can assay solid objects, particularly solid metals (such as copper) that may undergo a number of steps in oxidation.

(Example 3)

In this example, a sample S5 consisting of an alloy, that is, brass (made from 65% copper and 35% zinc, Nilaco) was used. Part (a very minute amount) of sample S5 was allowed to adhere to the surface of conductive diamond electrode, and dissolved in an electrolyte solution for assay. The assay results of sample S5 is given by the current characteristics chart of Fig. 8.

As shown in Fig. 8, three current peaks occur at the potentials of -0.85, -0.02 and 0.42V. The current peak occurring at -0.85V may be ascribed to zinc contained in the adherent which dissolved through oxidation (Zn/Zn+) to the solution. The current peaks occurring at -0.02 and 0.42V are close to each other, which may be generated by copper contained in the adherent having undergone oxidation. This indicates sample S5 consists of zinc and copper. The reason why copper produces two current peaks as described above may be accounted for by the fact that $Cu^+$ stabilizes by turning into chlorides: copper contained in the adherent undergoes oxidation via two steps ($Cu^0$ --> $Cu^+$ and $Cu^+$ --> $Cu^{2+}$).

In this example, it was confirmed that the assay system based on a conductive diamond electrode of this invention can assay solid objects, particularly alloys comprising various metals such as brass, and can analyze, for an alloy comprising a number of metals, the respective contributions of those metal components, and their interactions. It was also found that the assay system of this invention is also useful for the assay of an alloy that contains, as its component, a metal such as copper which undergoes oxidation through a number of steps.

(Example 4)

In this example, a sample S6 consisting of a metal compound composed of zinc, cadmium, lead, aluminum, cobalt, nickel, and chromium was used. Part (a very minute amount) of sample S6 was allowed to adhere to the surface of conductive diamond electrode, and dissolved in an electrolyte solution for assay. The assay results of sample S6 is given by the current characteristics chart of Fig. 9.

As shown in Fig. 9, there are several current peaks at different potentials. On the basis of potentials giving the current peaks, it was confirmed that sample S6 contains zinc, cadmium, lead, aluminum, cobalt, nickel, copper, and chromium.

From this it was confirmed that the system based on a conductive diamond electrode can analyze a metal compound composed of a number of metal elements.

(Example 5)

In this example, samples S7, S8 and S9 were used: sample S7 and S8 consisted of Japanese coins (¥100 coin and ¥500 coin respectively) which are silver on appearance, but are made of cupronickel (75% copper and 25% nickel); and sample S9 consisted of a US 25 cent coin (quarter) made of cupronickel containing 8.33% nickel by weight.

Parts (very minute amounts) of samples S7 to S9 were allowed to adhere to the surface of conductive diamond electrode, and dissolved in an electrolyte solution for assay. The assay results of samples S7 to S9 are given by the current characteristics charts of Figs. 10 to 12.

In Figs. 10 and 11, current peaks appear at the same potentials. From this it was confirmed that samples S7 and S8 have the same composition. In contrast, Fig. 12 gives current peaks different from those of Figs. 7 and 8. The reason for this is accounted for by the fact that the ¥100 coin (or ¥500 coin) has a different composition from that of quarter, and possibly by the different processes adopted for the fabrication of the two kinds of coins.

(Example 6)

In this example, samples S10 and S11 were used: sample S10 consisted of a Japanese coin (¥10 coin) which is brown on appearance, and is made of bronze (95% copper, 3-4% zinc and 1-2% tin); and sample 11 consisted of a US one cent coin (dime) made of copper plated on a zinc base. Parts (very minute amounts) of samples S10 and S11 were allowed to adhere to the surface of conductive diamond electrode, and dissolved in an electrolyte solution for assay. The assay results of samples S10 and S11 are given by the current characteristics charts of Figs. 13 and 14.

In Figs. 13 and 14, current peaks appear at different potentials. The reason for this is accounted for by the fact that the ¥10 coin has a different composition from that of dime, and possibly by different processes adopted for the fabrication of the two kinds of coins.

From above it was confirmed as was described in Example 5 that the system based on a conductive diamond electrode is applicable for the analysis of any coins, and usable, for example, for discriminating between authentic coins and fraud coins.

As shown above, the electrochemical assay based on a conductive diamond electrode representing the first aspect of this invention enables highly accurate and sensitive analysis of a test object made particularly of inert metals and alloys. In addition, because the system requires only a very small amount (nanogram order) of a test object for assay, it will keep the original test object practically intact (non-destructive analysis).

The conductive diamond electrode used in the assays system of this invention is not limited to any particular form, or take any form as required as long as it is suitable for capturing part of a test object by friction.

<u>Assay of Ionizing Metals with Assay System Using Boron-Doped Diamond Electrode</u>

An assay system as shown in Fig. 1 in which a conventional active electrode had been substituted for a boron-doped diamond electrode of this invention was used. The system is suitable for the assay of an electrochemically active test object in a solution. Assay consisted of using a conductive diamond electrode as an active electrode, placing the active electrode and opposite electrode in a solution containing a test object, and sweeping the potential of active electrode from a natural level towards negativity, thereby to electroplate the electrochemically active test object to the surface of active electrode. Then, the potential of the active electrode is swept in a stepwise manner towards positivity, so that the electroplated test object is dissolved to solution, and simultaneously the current change in response to the potential step is detected for analysis of the electrochemically active test object.

(Example 7)

In this example, a sample S12 consisting of 1 x $10^{-6}$ M $Pb(NO_3)_2$ in 0.2M acetate buffer (pH 5) was used. Assay consisted of sweeping the potential of conductive diamond electrode towards negativity with respect to the reference electrode, and keeping the potential at -1.0V for two minutes, thereby to electroplate Pb ion ($Pb^{2+}$) in sample solution S12 onto the surface of conductive diamond electrode, to produce a Pb deposit there.

Then, passing a series of pulses (100mV in height and 50ms in duration with a period of 100ms) at a sweep speed of 100 mV/s shifted the potential of conductive diamond electrode in a stepwise manner towards the positive side, thereby to dissolve the test object deposited on the diamond electrode to solution, and simultaneously the current change in response to the potential step was detected.

The assay result is given by the current characteristics chart of Fig. 15. As shown in Fig. 15, a distinctive peak is obtained, and reading of the potential at which the current peak is obtained indicates sample electrolyte solution S12 contains Pb ion.

(Example 8)

In this example, samples S13 to S17 were prepared by dissolving different amounts of $Pb(NO_3)_2$ into 0.2M acetate buffer (pH 5): S13 contained 2.0 x $10^{-6}$ M, S14 1.6 x $10^{-6}$ M, S15 1.2 x $10^{-6}$ M, 516 0.8 x $10^{-6}$ M, and S17 0.4 x $10^{-6}$ M $Pb(NO_3)_2$ in 0.2M acetate buffer (pH 5).

Assay consisted of sweeping the potential of conductive diamond electrode towards negativity with respect to the reference electrode, and keeping the potential at -1.0V for five minutes, thereby to electroplate Pb ion in the sample solution onto the surface of conductive diamond electrode, to produce a Pb deposit there.

Then, passing a series of pulses (100mV in height and 50ms in duration with a period of 100ms) at a sweep speed of 100 mV/s shifted the potential of conductive diamond electrode in a stepwise manner towards positivity, thereby to dissolve the test object deposited on the diamond electrode to solution, and simultaneously the current change in response to the potential step was detected.

The assay result is given by the current characteristics charts of Fig. 16. As shown in Fig. 16, distinctive current peaks representing Pb ion in the sample electrolyte solutions S13 to S17 are obtained.

Fig. 17 gives a standard dose-response curve after correction has been made for the background currents observed in the individual peak currents (S13 to S17). It was confirmed from the dose-response curve of Fig. 17 that the height of peak currents (S13 to S17) increases in proportion with the concentration of $Pb(NO_3)_2$ of the sample solution.

(Example 9)

In this example, a sample S18 consisting of 1 x $10^{-6}$ M $Cd(NO_3)_2$ in 0.2M acetate buffer (pH 5) was used. Assay was made in the same manner as in Example 7 above. The assay result is given by the current characteristics chart of Fig. 18. As shown in Fig. 18, a distinctive peak is obtained, and reading of the potential at which the current peak is obtained indicates sample electrolyte solution S18 contains Cd ion (Cd2+).

(Example 10)

In this example, samples S19 to S23 were prepared by dissolving different amounts of $Cd(NO_3)_2$ into 0.2M acetate buffer (pH 5): S19 contained 2.0 x $10^{-6}$ M, S20 1.6 x $10^{-6}$ M, S21 1.2 x $10^{-6}$ M, S22 0.8 x $10^{-6}$ M, and S23 0.4 x $10^{-6}$ M $Pb(NO_3)_2$ in 0.2M acetate buffer. Assay was made in the same manner as in Example 8 above. The assay result is given by the current characteristics charts of Fig. 19. As shown in Fig. 19, distinctive peak currents representing Cd ion in the sample electrolyte solutions S13 to S17 are obtained.

Fig. 20 gives a standard dose-response curve after correction has been made for the background currents observed in the individual peak currents (S19 to S23). It was confirmed from the dose-response curve of Fig. 20 that the height of peak currents (S19 to S23) increases in proportion with the concentration of $Cd(NO_3)_2$ of the sample solution.

(Example 11)

In this example, a sample S24 consisting of 1 x $10^{-6}$ M $Zn(NO_3)_2$ in 0.2M acetate buffer (pH 5) was used. Assay consisted of sweeping the potential of conductive diamond electrode towards negativity with respect to the reference electrode, and keeping the potential at -1.3V for ten minutes, thereby to electroplate Pb ion in the sample solution onto the surface of conductive diamond electrode, to produce a Zn deposit there.

Then, passing a series of pulses (100mV in height and 50ms in duration with a period of 100ms) at a sweep speed of 100 mV/s shifted, in a stepwise manner, the potential of conductive diamond electrode towards positivity, thereby to dissolve the test object deposited on the diamond electrode to solution, and simultaneously the current change in response to the potential step was detected.

The assay result is given by the current characteristics chart of Fig. 21. As shown in Fig. 21, a distinctive current peak representing Zn ion in sample electrolyte solution S24 is obtained.

(Example 12)

In this example, a sample S25 consisting of 1 x $10^{-6}$ M $HAuCl_4$ in aqua regia comprising 0.1M HCl and 0.3M $HNO_3$ was used. Assay consisted of sweeping the potential of conductive diamond electrode towards negativity with respect to the reference electrode, and keeping the potential at -1.0V for 600 seconds, thereby to electroplate Au ion in the sample solution onto the surface of conductive diamond electrode, to produce an Au deposit there.

Then, passing a series of pulses (50mV in height and 50ms in duration with a period of 100ms) at a sweep speed of 100 mV/s shifted, in a stepwise manner, the potential of conductive diamond electrode towards positive potential, thereby to dissolve the test object deposited on the diamond electrode to solution, and simultaneously the current change in response to the potential step was detected.

The assay result is given by the current characteristics chart of Fig. 22. As shown in Fig. 22, a distinctive peak current is obtained, and reading of the potential at which the peak current is obtained indicates sample electrolyte

solution S25 contains Au ion.

(Example 13)

Currently the Metropolitan Water Distribution Bureau restricts the concentration of Pb ion contained in tap water to 2.4 x $10^{-7}$ M (50 μg/l) or lower, while the water distribution bureau of West Virginia in US regulates the same to be 1.8 x $10^{-7}$ M (37.9 μg/l) or lower. Generally, the concentration in tap water of Pb ion in the order of $10^{-7}$ M is determined by ICP or atomic absorption spectroscopy. However, this method requires a high cost and time.

To check whether the system of this invention can be applied for the assay of Pb ion at a very low concentration, in this example, a sample S26 consisting of 1 x $10^{-9}$ M $Pb(NO_3)_2$ in 0.1M KCl (pH 1) was used. Assay consisted of sweeping the potential of conductive diamond electrode towards negativity with respect to the reference electrode, and keeping the potential at -1.0V for 15 minutes, thereby to electroplate Pb ion in the sample solution onto the surface of conductive diamond electrode, to produce a Pb deposit there.

Then, passing a series of pulses (100mV in height and 50ms in duration with a period of 100ms) at a sweep speed of 200 mV/s shifted, in a stepwise manner, the potential of conductive diamond electrode towards the positive side, thereby to dissolve the test object deposited on the diamond electrode to solution, and simultaneously the current change in response to the potential step was detected.

The assay result is given by the current characteristics chart of Fig. 23. As shown in Fig. 23, a distinctive peak current representing Pb ion in the solution is obtained. From this it was confirmed that the system of this invention can easily assay Pb ion at a low cost, even if Pb ion exists at a very low concentration in an electrolyte solution (or, for example, in tap water).

(Example 14)

In this example, a sample S27 consisting of 5 x $10^{-7}$ M Cd and Pb ion in 0.1M KCl whose pH had been adjusted to pH 1 through the addition of HCl, was used. Assay was made in the same manner as in Example 8 above. The assay result is given by the current characteristics chart of Fig. 24.

As shown in Fig. 24, two distinctive current peaks are observed at different potentials, and reading of the potentials at which the current peaks are obtained indicates sample electrolyte solution S27 contains Cd and Pb ion. From this it was confirmed that the system of this invention can assay, even if a sample solution contains plural metal ions, those metals ions separately from each other.

(Example 15)

In this example, a sample S28 consisting of 1 x $10^{-6}$ M $Cu(NO_3)_2$ in 0.2M acetate buffer (pH 5) was used. Assay was made in the same manner as in Example 7 above. The assay result is given by the current characteristics chart of Fig. 25. As shown in Fig. 25, a distinctive peak current is obtained, and reading of the potential at which the current peak is obtained indicates sample electrolyte solution S28 contains Cu ion.

(Example 16)

In this example, samples S29 to S33 were prepared by dissolving different amounts of $Cu(NO_3)_2$ into 0.2M acetate buffer (pH 5): S29 contained 2.0 x $10^{-6}$ M, S30 1.6 x $10^{-6}$ M, S31 1.2 x $10^{-6}$ M, S32 0.8 x $10^{-6}$ M, and S33 0.4 x $10^{-6}$ M $Cu(NO_3)_2$ in the buffer. Assay was made in the same manner as in Example 8 above. The assay result is given by the current characteristics charts of Fig. 26. As shown in Fig. 26, distinctive current peaks representing Cu ion in the sample electrolyte solutions S29 to S33 are obtained.

Fig. 27 gives a standard dose-response curve after correction has been made for the background currents observed in the individual peak currents (S29 to S33). It was confirmed from the dose-response curve of Fig. 27 that the height of current peaks (S29 to S33) increases in proportion with the concentration of $Cu(NO_3)_2$ of the sample solution.

In the assay results shown in Figs. 25 and 26, only one peak current is obtained for Cu ion in the solution. However, if a sample solution consists of copper dissolved in an electrolyte solution having a high concentration of chloride (high concentration of chlorine ion), $Cu^+$ progressively stabilizes by turning into chlorides. Thus, Cu is oxidized in a complicated manner as represented by the following reaction formulae (1) to (3),

$$Cu^0 \rightarrow Cu^+ \quad (1)$$

$$Cu^+ \rightarrow Cu^{2+} \quad (2)$$

$$Cu^0 \rightarrow Cu^{2+} \quad (3)$$

and may generate three different peak currents.

It was confirmed from above that the system of this invention can analyze a metal ion in an electrolyte solution such as Cu ion that may take complicated steps in oxidation, by paying a due attention to the nature of the electrolyte solution.

(Example 17)

In this example, a sample S34 consisting of 2 x $10^{-7}$ M Zn, Cd, Pb and Cu ion in 0.1M KCl whose pH had been adjusted to pH 1 through the addition of $HNO_3$, was used. Assay consisted of sweeping the potential of conductive diamond electrode towards negativity with respect to the reference electrode, and keeping the potential at -1.2V for 300 sec, thereby to electroplate Zn, Cd, Pb and Cu ion in the sample solution onto the surface of conductive diamond electrode, to produce a Zn, Cd, Pb and Cu deposit there.

Then, passing a series of pulses (100mV in height and 50ms in duration with a period of 100ms) at a sweep speed of 200 mV/s shifted, in a stepwise manner, the potential of conductive diamond electrode towards the positive side, thereby to dissolve the test objects deposited on the diamond electrode to solution, and simultaneously the current change in response to the potential step was detected.

The assay result is given by the current characteristics chart of Fig. 28. As shown in Fig. 28, several current peaks are observed at different potentials, and reading of the potentials at which the current peaks are obtained indicates sample electrolyte solution S34 contains Zn, Cd, Pb and Cu ion.

It was further confirmed that it is also possible to analyze only metal ions in the solution by limiting, when the potential of diamond electrode is swept towards negativity, the potential shift within a certain range, thereby to restrict the chemical species to be deposited on the diamond electrode only to metal ions in the solution.

As shown above, the electrochemical assay based on a conductive diamond electrode representing the second aspect of this invention is applicable for the assay of electrochemically active test objects that have a comparatively wide range of oxidation potential. The assay enables highly accurate and sensitive analysis (e.g., online monitoring) of electrochemically active substances contained in a solution such as sewage or drinking water.

The assay of this embodiment allows the assay of an electrochemically active substance in an electrolyte solution at a far lower concentration as compared with the conventional assay using a carbon sensor as an active electrode.

The assay of this embodiment is also applicable for the assay of an electrochemically active substance that is scarcely accessible to simple analysis such as Cu ion as described in Example 16, by properly adjusting the assay condition. It is also possible to restrict the assay to electrochemically active substances of interest in a solution.

The assay of this embodiment is also applicable for the assay of a metal ion (e.g., Au ion) that has a comparatively high oxidation potential.

In the above embodiments, only a metal or metals in a solution is used for assay. However, obviously the assay of this invention can be also applied for the assay of various electrochemically active substances contained in a solution such as agrochemicals, environmental hormones, etc Moreover, the conductive diamond electrode used in the assay system of this invention is not limited to any particular form, or may take any form as appropriate.

Anodic Oxidation of Diamond Electrode

The anodic oxidation of a conductive diamond-coated electrode consisted of placing the diamond electrode in 0.1M KOH solution, and applying a voltage of 2.4V (with respect to SCE) for 75 minutes. During this operation, if required, voltage of +4V to -4V (with respect to SCE) is swept three times at a rate of 0.1 V/sec through 0.1M KOH solution, and then voltage is held at 4V for one minute. In the above embodiment, 0.1M KOH is used. However, it may be substituted for 0.1M $H_2SO_4$ solution or $HClO_4$, or any other solution that can apply anodic oxidation on the surface of diamond (for example, $HNO_3$, HCl or alkaline solution such as NaOH).

Assay of Organic Materials with Flow-Cell Based Assay System Using a Boron-Doped Diamond Electrode

Fig. 29 gives the outline of an electrochemical assay system incorporating a flow-cell using a conductive diamond electrode which represents an embodiment of this invention. In the figure, 11 represents a buffer tank to store buffer; 12 a pump for liquid chromatography; and buffer tank 11 and pump 12 constitute a buffer guide means. An injection valve 13 is to inject samples into a flow-cell 14 which contains opposite, active and reference electrodes 15, 16 and 17. A potentiogalvanostat 18 is to control/detect signals delivered by the electrodes, and an analysis unit 19 (personal computer or the like) performs various kinds of analysis based on the signals. The two units 18 and 19 constitute an assay unit 20.

With the assay system having the constitution as described above, buffer is transferred by pump 12 from buffer tank 11 into flow-cell 14, and at the same time a test object is injected via valve 13 into flow-cell 14. Thus, a sample solution comprising the test object and buffer is guided into flow-cell 14. Analysis of the components of the sample consists of applying a voltage between active electrode 16 and opposite electrode 15 in flow-cell 14, and processing the signals generated thereby via assay unit 20. On completion of the assay of the test object, the sample solution is disposed of; the whole system is washed clean; the next test object introduced into the system for renewed analysis, and the assay is repeated until the whole series of test objects are completely assayed.

(Example 18)

Samples each comprising 20 μl of 10 μM dihydronicotinamide adenine dinucleotide (NADH) in 0.1M phosphate buffer were delivered via injection valve 13 at one minute interval into flow-cell 14; and the current change measured for each injection. Then, as shown in Fig. 30, the same current characteristic comprising a peak current on entry of the sample into the flow-cell, and a subsequent fall with elimination of the sample is obtained for each injection.

It was confirmed from this that this electrochemical assay system with an injection valve precisely analyzes the samples repeatedly injected by valve 13.

In this assay, the potential step was set at 600 mV (with respect to Ag/AgCl), and flow speed at 1 ml/min.

(Example 19)

A similar assay was made applying lower concentrations of NADH on the same assay system.

Samples each comprising 20 μl of 1 μM, 100 nM or 50 nM NADH in 0.1M phosphate buffer were delivered via injection valve 13 at one minute interval into flow-cell 14; and the current change measured for each injection. Then, as shown in Figs. 31(a), 31(b) and 31(c), on entry of the sample into the flow-cell, a peak current is obtained for all the concentrations used.

In this assay as in the previous one, the potential step was set at 600 mV (with respect to Ag/AgCl), and flow speed at 1 ml/min.

It was confirmed from this that this system accurately analyzes a sample, even if it contains a very minute amount of a test object.

It is also evident from Figs. 30 and 31 that with this system based on a flow-cell using a conductive diamond electrode, there was no cross-contamination from previous samples, and repetitive assay of the same samples gave the same results. This is probably because the surface of conductive diamond electrode remains so stable as to prevent the test object from adhering thereto. Namely, the test object, after each measurement, is completely expelled from the flow-cell without adhering to the surface of electrode, which indicates that the conductive diamond electrode is particularly suitable for the present system based on a flow-cell for sequential analysis.

(Example 20)

A 20 μl of 100 μM NADH in 0.1M phosphate buffer pH7.2 was injected under the control of pump 12 into the present assay system, and the relationship between current and voltage (voltamgram) was obtained.

In this assay, the flow speed was set at 1 ml/min.

As a result, a graph A as indicated in Fig. 32 was obtained. From graph A, it was confirmed that the current at 600 mV (with respect to Ag/AgCl) is practically saturated.

Graph B in the same figure represents a voltamgram obtained when only phosphate buffer was flowed into the assay system.

It was confirmed from the results of Fig. 32 that the system assays NADH, and from the experiment where only phosphate buffer was flowed into the system that the conductive diamond electrode gives a very low background current.

Generally, with an assay system based on a flow-cell, pulsation gives a significant effect on the analysis

result. However, it was confirmed from the results of Fig. 32 that the conductive diamond electrode gives a very low background current, and that the present system using such a conductive diamond electrode is so much unaffected of pulsation that it enables more accurate analysis than the conventional flow-cell based system.

(Example 21)

The present assay system using a conductive diamond electrode as an active electrode was compared with a conventional system otherwise similar but using a glassy carbon electrode as an active electrode.
A sample consisting of 100 μM histamine in 0.1M phosphate buffer pH7 was used.
Fig. 33 gives linear sweep voltamgrams (relationship between current and potential) of the two kinds of assay. From this it was confirmed that, with the present system using a conductive diamond electrode as compared with the conventional system using a glassy carbon electrode, background current is effectively inhibited up to a higher potential level: the background current, for example, at 1300 mV (with respect to SCE) is far lower, and the potential window is wider.
In another run, 500 μM histamine was used, and it was found that the signal/noise (S/B) ratio obtained with the conductive diamond electrode, even when the electrode does not undergo anodic oxidation (which will be described later), is 10 times as high as that obtained with the conventional glassy carbon electrode.

(Example 22)

Sequential analysis of histamine was performed using the present flow-cell system based on a conductive diamond electrode. Samples each comprising 20 μl of 100 μM histamine in phosphate buffer were delivered at one minute interval into flow-cell 14; the voltage was set at 1.3V (with respect to Ag/Agcl); and flow speed at 0.5 ml/min. The result is shown in Fig. 34.
It was confirmed from the result of Fig. 34 that a peak current appears each time injection of histamine is renewed, which suggests analysis of histamine proceeds securely.
Namely, it was confirmed from the result that the conductive diamond electrode incorporated in the present assay system is highly effective for sequential analysis of histamine.

(Example 23)

A similar assay was performed applying lower concentrations of histamine on the present assay system.
Samples each comprising 20 μl of 10, 20 and 50 μM histamine in 0.1M phosphate buffer were delivered in order via injection valve 13 at one minute interval into flow-cell 14; and the current change measured for each injection. Then, as shown in Fig. 35(a), on entry of the sample into the flow-cell, a peak current is obtained for all the concentrations used.
In this assay, the potential step was set at 1275 mV (with respect to Ag/AgCl), and flow speed at 1 ml/min.
In another run, 100 μM histamine was assayed under the same condition as above, and it was found that the peak current ascribable to histamine is 437.096 nA.
Fig. 35(b) gives the relation of peak current with the concentration of histamine which is obtained from the results of the first run shown in Fig. 35(a), as well as from the results of this run. It was confirmed from this that the peak current is in proportion with the concentration of histamine, and that the system accurately assays very low to high concentrations of histamine.

(Example 24)

The potential windows obtained with a conductive diamond electrode, glassy carbon electrode, platinum electrode and gold electrode in 0.5M sulfuric acid in water were measured for comparison, and the results are shown in Fig. 36. It was confirmed from this that the potential window obtained with the conductive diamond electrode is far wider than that obtained either with the glassy carbon, platinum or gold electrode.
The density of residual current (current used to charge the double layer) at the potential window area was measured for each of the test electrodes. The residual current density obtained with the diamond electrode was several tens to hundreds $nA/cm^2$ while the corresponding density of the other electrodes was about several $\mu A/cm^2$: the former is far lower than the latter.
Moreover, the conductive diamond electrode is well responsive to oxidizing or reducing agents, and the density of current arising as a result of oxidation or reduction is as high as that of a metal electrode.

(Example 25)

The conductive diamond electrode was anodically oxidized, and this electrode was installed in the flow-cell of the present assay system. This system was used for the same assay as above, and it was confirmed from the results that the system was as effective as, or more effective in some kinds of assay than, the foregoing system.
It was further confirmed that the assay system using an anodically oxidized diamond electrode, if combined with a liquid chromatographic unit, gives better results than the otherwise similar assay system using a simple conductive diamond electrode.
From above it was confirmed that the flow-cell based assay system using a conductive diamond electrode inhibits cross-contaminations between samples even when used for sequential analysis, gives a very low background current and is practically unaffected to the effect from pulsation. This is because the diamond electrode has a wide potential window, as compared with the materials commonly used as a sensor electrode.
Particularly, the flow-cell based assay system using an anodically oxidized diamond electrode is effective for sequential analysis of various chemical species when combined with a liquid chromatographic unit.

Uric Acid Assay with Assay System Using an Anodically Oxidized Diamond Electrode

The foregoing assay system using a conductive diamond electrode is not effective for assay of uric acid. This is because uric acid is usually accompanied by ascorbic acid in a biological sample. For example, the concentration of uric acid in urine and serum (blood) is about 2-2.5 mmol/l and 50-60 µl/l, respectively. However, the coexistent concentration of ascorbic acid is about 20 to 30 times as high as that of uric acid. To meet this situation, a sample used for uric acid assay must be diluted about 100-5000 fold in advance, because such dilution will serve to lessen the matrix effect (effect exerted by, for example, certain proteins or other electrically active biological substances) of the sample.
Since uric acid coexists with ascorbic acid as described above, it is difficult even for a uric acid sensor incorporating a conductive diamond electrode to reliably assay uric acid independently of ascorbic acid in the same sample.
The fourth aspect of this invention is to provide uric acid assay using an anodically oxidized diamond electrode which is stable over years of use and capable of definitely distinguishing uric acid from ascorbic acid.
The assay consists of taking a solution containing uric acid as a sample; immersing a diamond-coated electrode having undergone anodic oxidation into the solution together with an opposite electrode; applying a voltage at a constant sweep speed; and selectively detecting the contribution from uric acid from a curve indicative of electric signal changes provided by the anodically oxidized diamond electrode.
The solution containing uric acid may be acid whose pH is preferably pH<2.70 or more preferably close to pH = 1. The pH of the solution may have its lower limit determined as appropriate in order not to damage the apparatuses used for assay. Alternatively, the solution containing uric acid may be alkaline using KOH or NaOH as an alkali agent.

Uric Acid Sensor

Fig. 37 shows the outline of the uric acid sensor. The sensor includes a cavity 31 of a cell body 30 to receive a sample solution 32, and has an active electrode 33 (whose constitution will be described later), and reference and opposite electrodes 34 and 35 immersed in the sample solution 32 within the cavity 31. Active electrode 33 is prepared as follows: an anodically oxidized diamond electrode 33b is formed on the surface of a silicone substrate 33a; the silicone substrate 33 a is fixed onto a joining substrate 33c; the joining substrate 33c is then fastened to a pipe 33d; and the tips of silicone substrate 33a, diamond electrode 33b, joining substrate 33c and pipe 33d are covered with an epoxy resin 33e for fixation.
It is necessary during preparation to pay attention not to apply epoxy resin 33e on the part of surface of diamond electrode 33b that will contact with sample solution 32. A lead wire 36 is connected to diamond electrode 33b, and passes through pipe 33d to go outside. The cell body is shaped like a box, and closed with a lid 37.

Uric Acid Assay System Incorporating a Uric Acid Sensor

Fig. 38 is a diagram to illustrate the outline of the uric acid assay system incorporating a uric acid sensor. The same parts with those of the uric acid sensor depicted in Fig. 37 are indicated by the same symbols. In Fig. 38, 41 represents the uric acid sensor body as described with reference to Fig. 37, and in the cavity 31 of the cell body 30 constituting the uric acid sensor body 41 is placed a sample solution 32 containing uric acid. The uric acid sensor body 41 is provided with an active electrode 33, reference electrode 34 and opposite electrode 35, and electrodes 33, 34 and 35 deliver outward lead wires 36, 43 and 44, respectively. Lead wires 36, 43 and 44 are guided to a signal control/detection portion 45 consisting of a potentiogalvanostat. The signal control/detection portion 45 transfers electric signals

received through the electrodes to an analysis unit 46 consisting of a computer to allow it to analyze a substance of interest in the sample or uric acid in this case.

(Example 26)

Fig. 39 gives a differential pulse voltamgram (DPV) obtained when an anodically oxidized diamond electrode was used for assay of a sample containing ascorbic acid as well as uric acid.

In DPV, the absolute height (Ei,n) of potential level varies while the incremental height of potential pulse ( $\Delta E = |Ei,n - Es,n|$ ) remains constant as shown in Fig. 40. Usually, the incremental height of potential pulse is kept at 10 - 100 mV, brief electrolysis time $\Delta t$ at 5 - 100 ms, and wait time at 0.5 - 180s. Further, current intensity is determined at two points: ts1 or just prior to the entry of a potential step and ts2 or just prior to the withdrawal of the potential step. The difference $\Delta i$ in current intensity between the two points is followed as a function of the height of potential step, and then the trace as depicted in Fig. 41 is obtained. The thus obtained current-potential curve is called DPV.

In the chart of Fig. 39, the peak ascribable to uric acid (UA) is sharp and distinct while the peak ascribable to ascorbic acid (AA) is broad and indistinct. From this result it is obvious that detection of uric acid becomes definitely possible when an anodically oxidized diamond electrode is used.

(1) The result of Fig. 39 was obtained from a sample to which a high concentration of ascorbic acid had been added in addition to 50 μM uric acid.
(2) The uric acid assay, to be useful in actual measurements, must detect uric acid in a very minute amount of sample.
(3) In view of this, we applied the present method for the detection of uric acid in a very minute amount of sample.

(Example 27)

Fig. 42 is response characteristics charts obtained from very minute amounts of sample by potential-step chronoamperometry (PSCA) using an anodically oxidized diamond electrode. It is obvious from the figure that use of an anodically oxidized diamond electrode allows the unequivocal detection of uric acid even when uric acid is present at very low concentrations in a very minute amount of sample. For example, with such an anodically oxidized diamond electrode it is possible to detect 50 nM uric acid in the presence of 5 μM ascorbic acid (the concentration of ascorbic acid being 100 times as high as that of uric acid). PSCA is a method to observe current-over-time response to a potential step: an electric potential is applied to an electrode system kept at equilibrium, from an external circuit; equilibrium is disturbed therewith and electrolytic current flows; the current diminishes over time, to reach zero in an indefinitely long time, to give a current trace over time in response to the potential step.

In Fig. 42, curve a represents the measurement result from 0.1M $HClO_4$ solution, curve b from 5 μM AA + 0.1M $HClO_4$, and curve c from 5 μM AA + 50 nM UA + 0.1M $HClO_4$. The potential step was from 0V to 0.92V (with respect to SCE). The potential step of 0.92V (with respect to SCE) was derived from the peak of UA confirmed in the data of Fig. 45. The sampling time was 500 ms.

Fig. 43 is response characteristics charts of background electric current obtained by PSCA. The test condition was the same as in Fig. 42. There is practically no difference among data a, b and c, suggesting the reliability of the test.

On the basis of the data of Fig. 43 suggesting the reliability of the test as described above, standard dose-response graphs as depicted in Fig. 44 were obtained. In those dose-response graphs, the solid line represents the results when the sample contained no ascorbic acid; the interrupted line represents the same when the sample contained 1 μM ascorbic acid in addition to uric acid, and the dot-dash line when the sample contained 5 μM ascorbic acid in addition to uric acid. From those dose-response graphs it is possible to confirm that the present method allows the detection of uric acid as low as about 0.7 nM.

It was further confirmed through experiments that the anodically oxidized diamond electrode can be stably used over a long period. Thus, the diamond-coated electrode prepared as above is so reliable and stable as to be used for routine analysis of uric acid in biological samples. Table 1 lists the concentrations of uric acid contained in biological samples (urine samples) actually used in above experiment. In the table, A, B. C, E, F and G list the concentrations of uric acid in urine samples from male subjects, while D and H those from female subjects. Inspection of the concentration figures in the table tells us clearly that the electrode in question is usable for analysis of uric acid in biological samples.

Table 1

(Example 28)

The assay system using an anodically oxidized diamond electrode was compared with the otherwise similar system using a simple conductive diamond electrode, for the effectiveness in assay of uric acid in samples which also contain more or less ascorbic acid.

In this example, a mixture comprising 0.2 mM uric acid and 1 mM ascorbic acid was dissolved in 0.1M $HClO_4$ to serve as a sample solution. Fig. 45 gives a cyclic voltamgram representing a result of assay. In Fig. 45, the interrupted line represents the result obtained with a system incorporating a simple conductive diamond electrode, while the solid line represents the result obtained with a system incorporating an anodically oxidized diamond electrode. The potential sweeping speed was kept at 100 mV/s. Inspection of the solid line trace of Fig. 45 makes it clear that it is possible with the use of an anodically oxidized diamond electrode to clearly distinguish uric acid from ascorbic acid.

(Example 29)

A similar comparison was made by using the system incorporating a simple conductive diamond electrode for assay of a sample containing either uric acid or ascorbic acid, removing the electrode to apply anodicoxidation thereto, using the same system including now the anodically oxidized diamond electrode for assay of the same sample, and comparing the results of two assays. The solution tested contained 50 μM UA in 0.1M $HClO_4$ (Fig. 46) or 50 μM AA in 0.1M $HClO_4$ (Fig. 47). The speed of potential sweep was kept at 10 mV/s.

Fig. 46A gives the assay result of a sample containing only uric acid obtained before the diamond electrode received anodic oxidation, while Fig. 46B gives the same obtained after the electrode had received anodicoxidation. Figs. 47A and 47B give the same except that a sample containing only ascorbic acid was used for assay.

Referring to Fig. 46A, the simple conductive diamond electrode certainly gives a peak. However, the same electrode after anodic oxidation gives a higher peak, allowing more definitive detection. In assay of ascorbic acid, the simple conductive diamond electrode gives a distinct current peak at Ep of 0.68V as shown in Fig. 47A, while the same electrode after receiving anodic oxidation does not give any definitive peak. Because of this, when the anodically oxidized diamond electrode is used, it is possible to clearly distinguish uric acid from ascorbic acid.

In Figs. 46A and 47A, UA and AA give distinctive peaks, but both of those peaks occur at the same voltage of 0.7V (with respect to SCE), to overlap with each other. Therefore, if a sample contains AA as well as UA is used for assay, it will be difficult to distinguish UA from AA of the sample, or will be impossible to discriminate the two when the sample is very small in amount. On the other hand, when an anodically oxidized diamond electrode is used instead, the results of which are given in Figs 46B and 47B, the voltages giving peak currents ascribable to UA and AA are displaced from each other. Particularly, the anodically oxidized electrode does not give a definitive peak to ascorbic acid as seen from Fig. 48B, in contrast with the simple conductive diamond electrode which gives a peak (at 0.7V with respect to SCE) under the same condition as seen from Fig. 47A. It is also found that anodic oxidation shifts the potential at which the current peak occurs to 1.15V (with respect to SCE).

From above results, it was confirmed that use of an anodically oxidized diamond electrode makes it possible, even when used for assay of a sample containing AA as well as UA, to determine the concentration of UA independently of AA.

(Example 30)

In this example, to check how the volts Ep's giving current peaks ascribable to uric acid and ascorbic acid vary with pH, a solution containing UA and AA was taken, its pH altered and the volts Ep's giving current peaks ascribable to uric acid and ascorbic acid followed by DPV. The results will be described with reference to Fig. 48. From the results in Fig. 48, it was confirmed that distinguishing uric acid from ascorbic acid is possible practically for all acidic ranges where pH<7, and that particularly for the range where pH<2.70, the Ep's giving current peaks ascribable to uric acid and ascorbic acid become apart from each other with the reduction of pH. From this it can be said that for assay of uric acid, the sample solution preferably should be acidic, and particularly if its pH is kept below 2.70, distinction of uric acid from ascorbic acid will be more perfect. Moreover, the sample should be preferably made pH=<2, or most preferably pH=1, because then uric acid and ascorbic acid are more clearly separated in assay. The lower limit of pH may be determined as appropriate, with a due attention being paid not to damage the measuring apparatuses exposed to such a strongly acidic solution.

Flow-Cell Based Uric Acid Assay System Using an Anodically Oxidized Diamond Electrode

A flow-cell based uric acid assay system was prepared that is practically the same with the flow-cell based assay system as depicted in Fig. 29 except that it uses an anodically oxidized diamond electrode as an active electrode, instead of a simple conductive diamond electrode.

(Example 31)

This assay system based on flow injection was used for assay of plural samples containing uric acid and ascorbic acid, and the results shown in Fig. 49 were obtained. From this it was confirmed that the assay system is effective for separately assaying UA and AA from the peak intensities of current ascribable to them in samples sequentially applied through flow injection. The measurement condition was as follows: the flow-cell had a capacity of 20 µl; the mobile phase was 0.1M $HClO_4$ (pH = 0.9) flowed at 1 ml/min; 500 nM UA or 1 µM AA injected; and the potential step was set at +0.93V (with respect to Ag/AgCl). As a result, as seen in Fig. 49, both uric acid and ascorbic acid gave current peaks clearly distinct from the current peak obtained from blank. It was confirmed from this assay that at pH=0.9 which is in the range of pH<1, this flow injection assay system incorporating an anodically oxidized diamond electrode allows separate measurement of uric acid and ascorbic acid even in sequential analysis.

As discussed above, a diamond-coated electrode receiving anodic oxidation according to this invention makes it possible to clearly distinguish uric acid from ascorbic acid contained in the same sample, allows stable assay over a long period, and also allows the detection of a very low concentration of uric acid. In addition, it allows one to easily determine the uric acid concentration of a sample at site, whether he is skilled or not in the art.

This application is based on 8 Japanese Patent Applications: (1) Appin No. 2000-64360, filed in Japan on March 9, 2000; (2) Appin No. H11(1999)-149143, filed in Japan on May 28, 1999; (3) Appln No. H11(1999)-184525, filed in Japan on June 30, 1999; (4) Appln No. H11(1999)-195173, filed in Japan on July 9, 1999; (5)Appln No. H11(1999)-201088, filed in Japan on July 15, 1999; (6) Appln No. H11(1999)-153506, filed in Japan on June 1, 1999; (7) Appln No. H11(1999)-233456, filed in Japan on August 20, 1999; and (8) Appln No. H11(1999)-204394, filed in Japan on July 19, 1999. The entire contents of these 8 Japanese Patent Applications are herein incorporated by reference.

Table 1

| Urine Samples | Concentration (mg/dl) |
|---|---|
| A: Male | 33.9 |
| B: Male | 55.61 |
| C: Male | 39.4 |
| D: Female | 15.1 |
| E: Male | 34.2 |
| F: Male | 40.3 |
| G: Male | 70.5 |
| H: Female | 102.5 |

**Claims**

**1.** Electrochemical assay using a conductive diamond electrode comprising:

transferring part of a test object to the surface of a conductive diamond electrode by rubbing the surface of test object against the surface of conductive diamond electrode;
immersing the conductive diamond electrode in an electrolyte solution;
altering the potential of the conductive diamond electrode from negativity towards a positive side, thereby to dissolve the transferred test object into the solution; and
detecting the current change in response to the potential change, thereby to analyze the test object.

**2.** Electrochemical assay using a conductive diamond electrode as described in claim 1 wherein the conductive diamond electrode is a boron-doped conductive diamond electrode.

**3.** Electrochemical assay using a conductive diamond electrode as described in claim 1 wherein the potential of conductive diamond electrode is caused to undergo a potential step by differential pulse voltametry, thereby to dissolve the transferred test object into the solution.

**4.** Electrochemical assay using a conductive diamond electrode as described in claim 2 wherein the potential of conductive diamond electrode is caused to undergo a potential step by differential pulse voltametry, thereby to dissolve the transferred test object into the solution.

**5.** Electrochemical assay using a conductive diamond electrode as described in claim 4 wherein the test object is a metal or alloy.

**6.** Assay for an electrochemically active substance in a solution comprising:

using a conductive diamond electrode as an active electrode;
placing the active electrode and an opposite electrode in the solution;
sweeping the potential of active electrode from a natural electrode level towards negativity, thereby to cause the electrochemically active substance to deposit by electroplating onto the surface of active electrode;
sweeping the potential of active electrode towards a positive side in a stepwise manner, thereby to cause the deposited substance to dissolve into the solution; and
detecting simultaneously the current change in response to the potential step, for analysis of the electrochemically active substance.

**7.** Solution assay as described in claim 6 wherein selective deposition of electrochemically active substances of interest on the active electrode is achieved by restricting the limit of negativity towards which the potential of active electrode is swept.

**8.** Solution assay as described in claim 6 wherein the conductive diamond electrode is a boron-doped conductive diamond electrode.

**9.** Solution assay as described in claim 7 wherein the conductive diamond electrode is a boron-doped conductive diamond electrode.

**10.** Solution assay as described in claim 4 wherein the potential of conductive diamond electrode undergoes a potential step being driven by differential pulse voltametry, thereby to dissolve the deposited substance into the solution.

**11.** Solution assay as described in claim 5 wherein the electrochemically active substance is a metal.

**12.** Flow cell for electrochemical assay wherein:

a sample solution is introduced;
a voltage is applied between an active electrode and a reference electrode, thereby to analyze the sample solution;
the sample solution is then disposed of; and
the above process is repeated for sequential electrochemical assay, characterized in that the active electrode includes a conductive diamond electrode.

**13.** Flow cell for electrochemical assay as described in claim 12 wherein the conductive diamond electrode is a boron-doped conductive diamond electrode.

**14.** Flow cell for electrochemical assay as described in claim 12 wherein the conductive diamond electrode receives anodic oxidation which consists of placing the conductive diamond electrode in an acidic or alkaline solution, and flowing electric current sufficiently strong to cause the conductive diamond electrode to undergo oxidation reaction.

**15.** Flow cell for electrochemical assay as described in claim 13 wherein the conductive diamond electrode receives anodic oxidation which consists of placing the conductive diamond electrode in an acidic or alkaline solution, and flowing electric current sufficiently strong to cause the conductive diamond electrode to undergo oxidation reaction.

**16.** Electrochemical assay system comprising:

a flow-cell wherein a sample solution is introduced; a voltage is applied between an active electrode and an opposite electrode, thereby to analyze the sample solution; the sample solution is then disposed of; and the above process is repeated for sequential electrochemical assay, and
an assay unit which is connected to the flow-cell, and controls/detects/analyzes signals delivered by the flow-cell, characterized by that the flow-cell for electrochemical analysis incorporates a conductive diamond electrode as the active electrode as described in claim 15.

**17.** Electrochemical assay system as described in claim 16 further comprising:

a buffer guide means to guide buffer to the flow-cell; and
a sample injection valve to inject samples between the buffer guide means and the flow-cell so that samples, after being injected via the sample injection valve, are guided into the flow-cell.

**18.** Uric acid assay using an anodically oxidized diamond-coated electrode comprises:

taking a solution containing uric acid as a solution to be tested;
immersing a diamond-coated electrode having undergone anodic oxidation into the solution together with an opposite electrode;
applying a voltage at a constant sweeping speed; and
selectively detecting uric acid from a curve indicative of electric signal changes provided by the diamond-coated electrode.

**19.** Uric acid assay using an anodically oxidized diamond-coated electrode as described in claim 18 wherein the solution to be tested is in an acidic range.

**20.** An anodically oxidized diamond-coated electrode which is obtained by putting a diamond-coated electrode into an electrolytic solution either acidic or alkaline, and flowing a sufficient amount of electric current to cause the diamond-coated electrode to undergo oxidation reaction, thereby performing anodic oxidation on that electrode.

**21.** An anodically oxidized diamond-coated electrode as described in claim 20 wherein the acidic solution comprises $H_2SO_4$, $HClO_4$, $HNO_3$ or HCl.

**22.** A diamond-coated electrode as described in claim 20 wherein the alkaline solution comprises KOH or NaOH.

**23.** A uric acid sensor using an anodically oxidized diamond-coated electrode comprising:

a cell body;
a cavity formed in the cell body to receive a solution to be tested;
a diamond-coated electrode having undergone anodic oxidation to serve as an active electrode; and
reference and opposite electrodes immersed in the test solution within the cavity with a constant distance apart from the diamond-coated electrode.

**24.** A uric acid assay system comprising:

a uric acid sensor incorporating a diamond-coated electrode having undergone anodic oxidation to serve as an active electrode, and reference and opposite electrodes in its cavity; and
a signal control/detection portion wherein a test solution is fed into the cavity of the sensor, and signals from the anodically oxidized diamond-coated electrode, and reference and opposite electrodes are controlled/detected; and
an analysis unit to receive the signals controlled/detected by the detection portion, for analysis of a substance of interest.

**25.** A flow-cell based uric acid assay system comprising:

a diamond-coated electrode having undergone anodic oxidation to serve as an active electrode;
a flow-cell incorporating the active electrode, and reference and opposite electrodes in its cavity;

a signal control/detection portion whereby signals from the diamond-coated electrode with anodic oxidation, and reference and opposite electrodes are controlled/detected;

an analysis unit to receive the signals controlled/detected by the detection portion, for analysis; and

a flow injection unit comprising:

- a background solution tank to store background solution;
- a pump to drive background solution;
- a solution guide means with an injection valve to inject samples sequentially under pump pressure into the flow-cell; and
- an outlet to discharge the content of flow-cell after each measurement,

wherein samples are sequentially fed together with background solution through the solution guide means into the flow cell for sequential analysis of substances of interest.

FIG.1

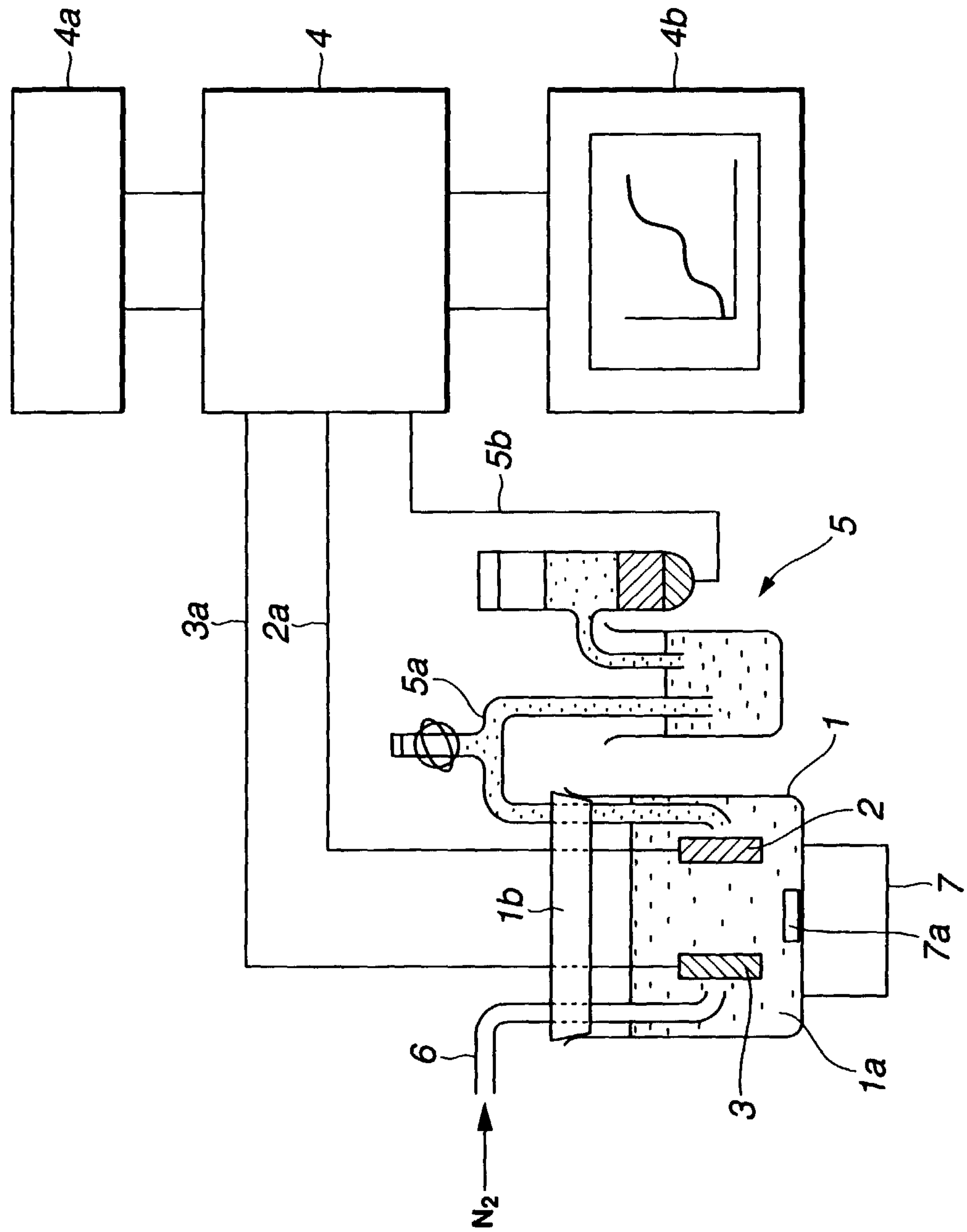

# FIG.2

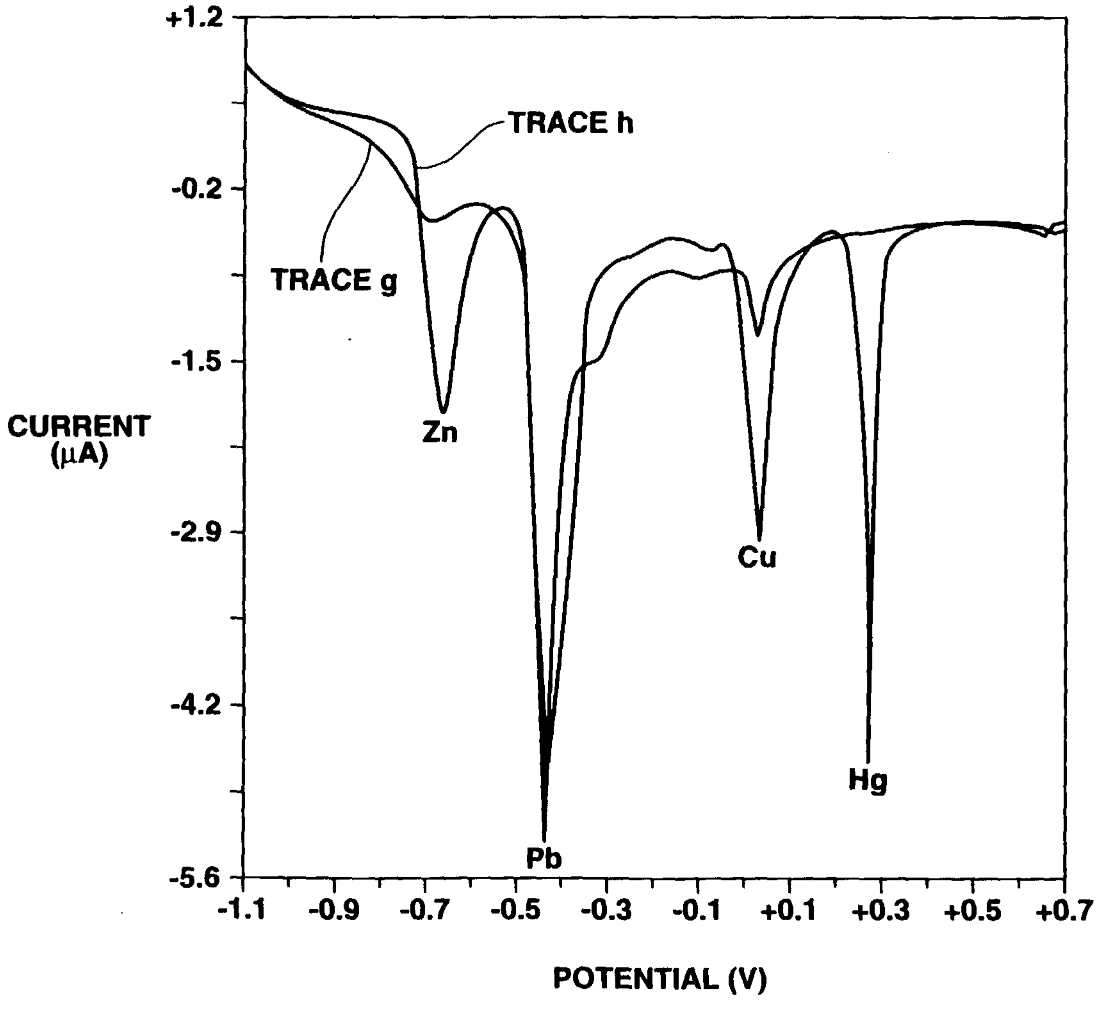
+1.2
-0.2
-1.5
-2.9
-4.2
-5.6
CURRENT
(μA)
TRACE h
TRACE g
Zn
Pb
Cu
Hg
-1.1
-0.9
-0.7
-0.5
-0.3
-0.1
+0.1
+0.3
+0.5
+0.7
POTENTIAL (V)

# FIG.3

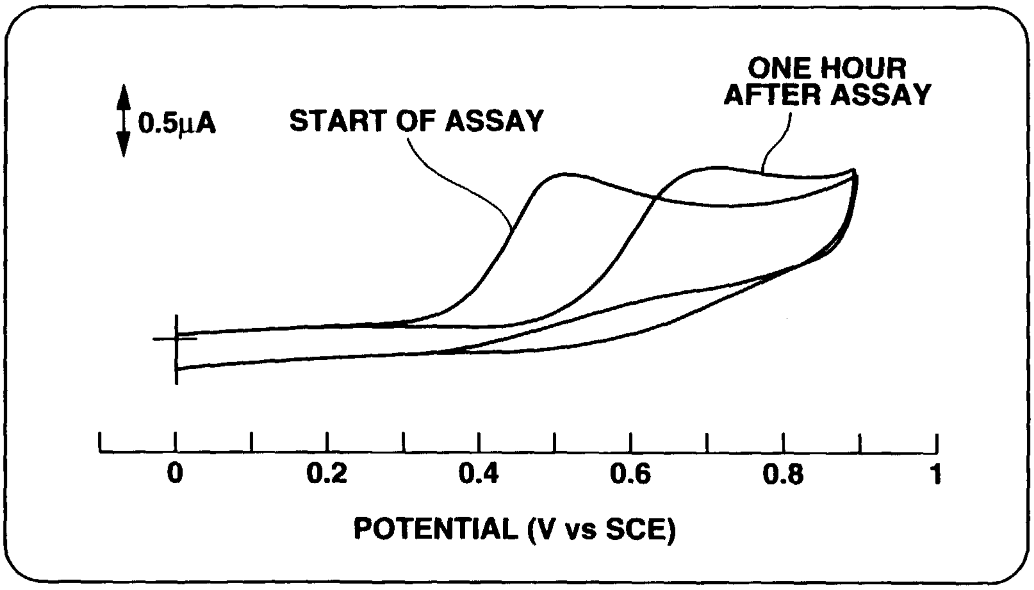
0.5μA
START OF ASSAY
ONE HOUR
AFTER ASSAY
0
0.2
0.4
0.6
0.8
1
POTENTIAL (V vs SCE)

# FIG.4

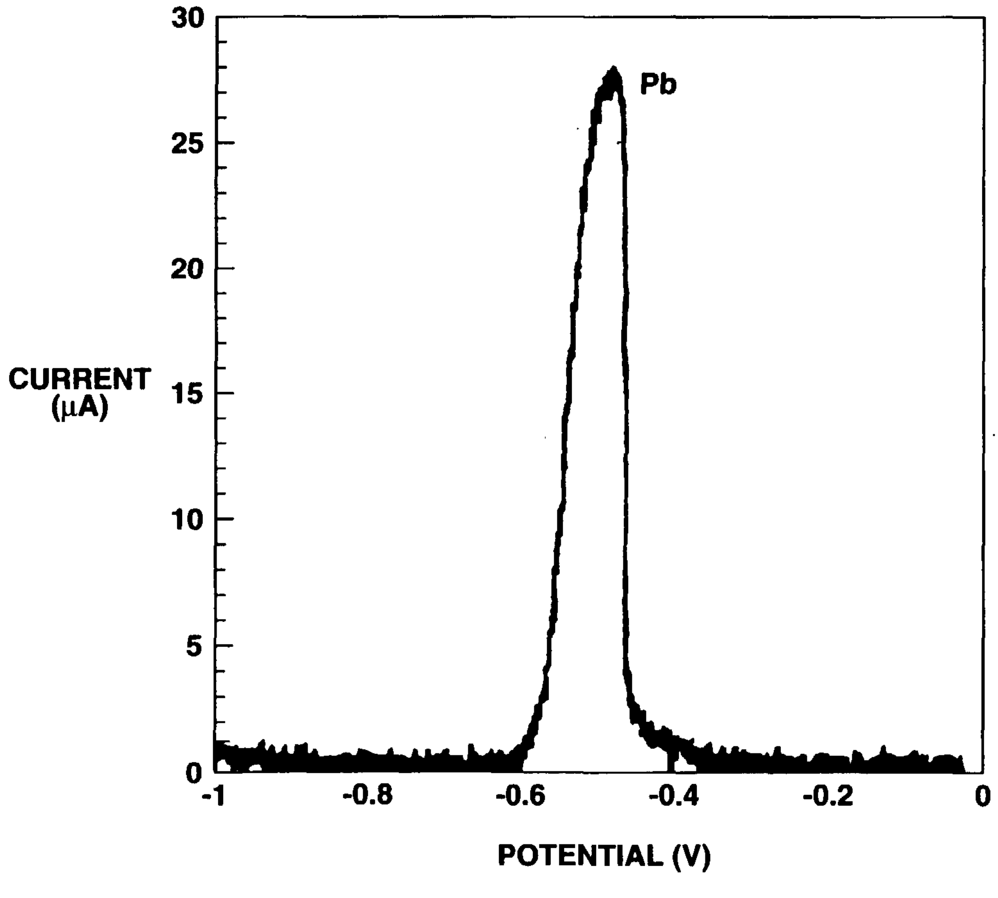

# FIG.5

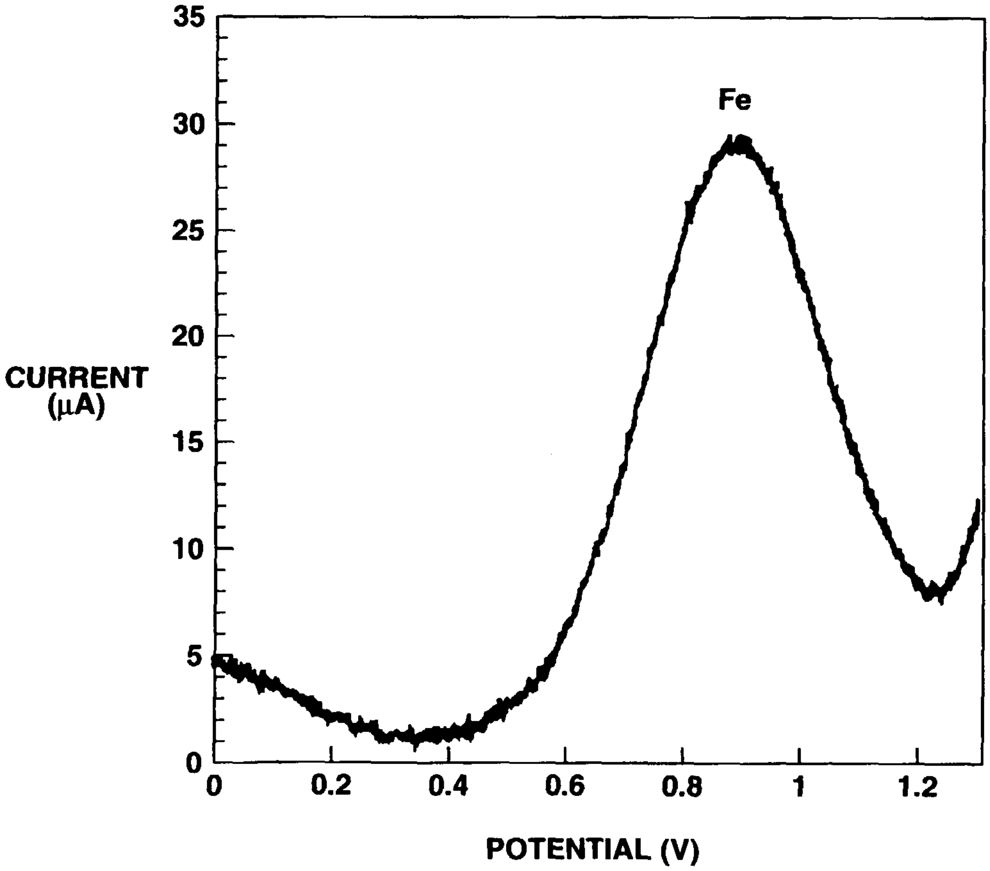

# FIG.6

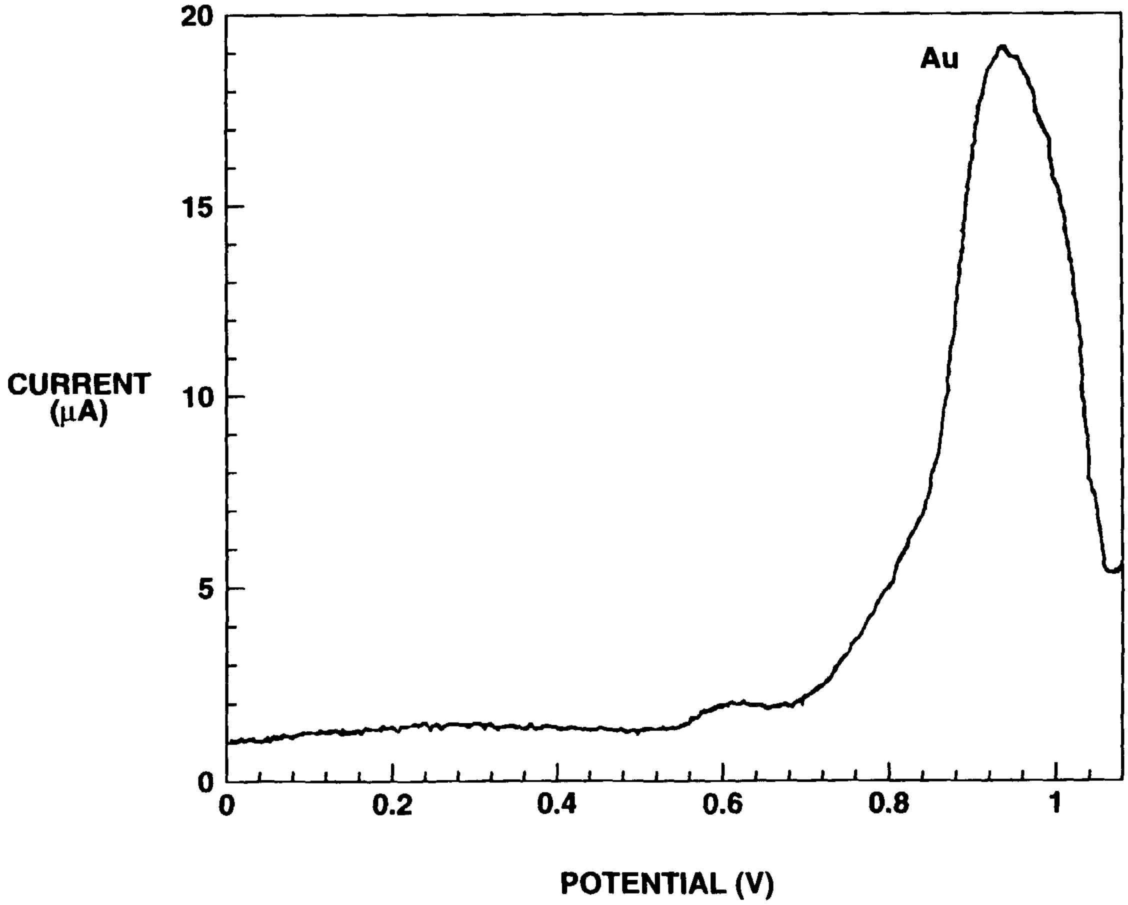

FIG.7

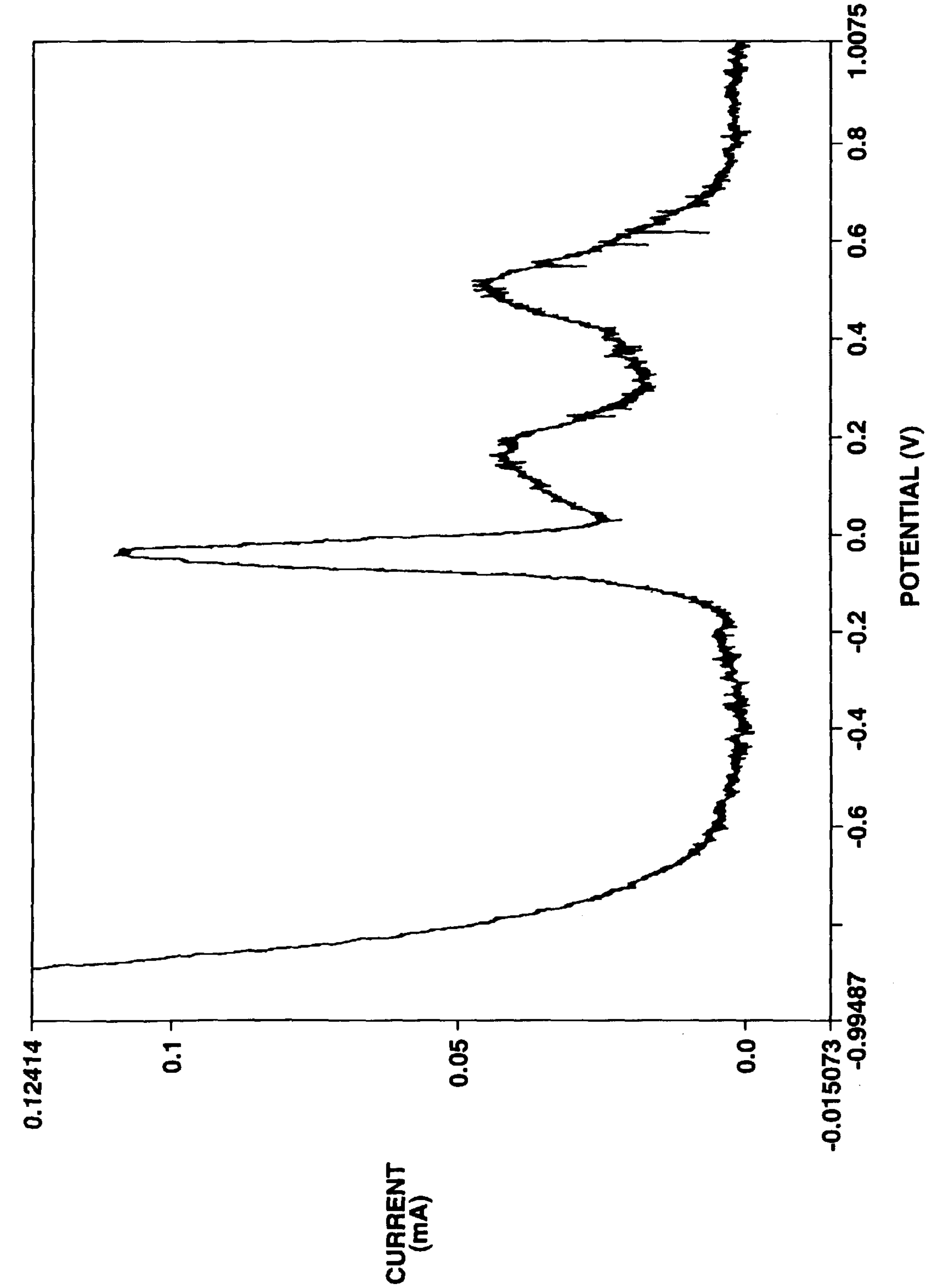
CURRENT (mA)
0.12414
0.1
0.05
0.0
-0.015073
-0.99487
-0.6
-0.4
-0.2
0.0
0.2
0.4
0.6
0.8
1.0075
POTENTIAL (V)

# FIG.8

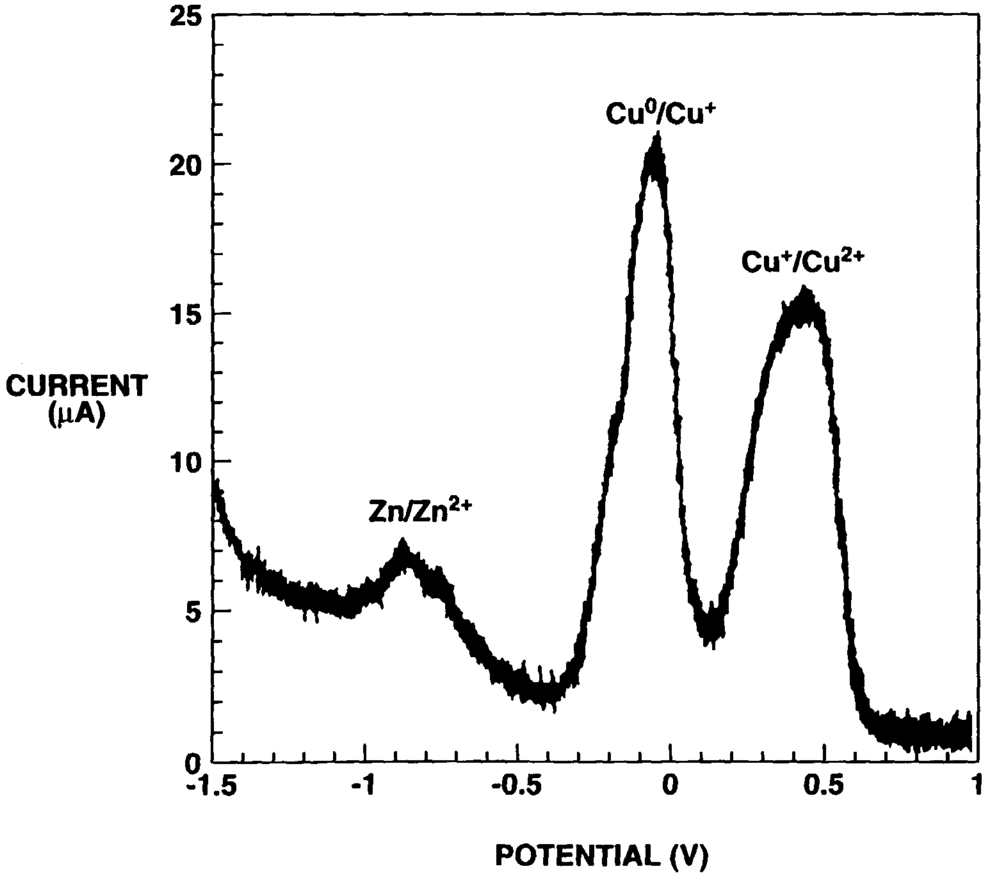

25
20
15
10
5
0
CURRENT
(μA)
Cu0/Cu+
Cu+/Cu2+
Zn/Zn2+
-1.5
-1
-0.5
0
0.5
1
POTENTIAL (V)

# FIG.9

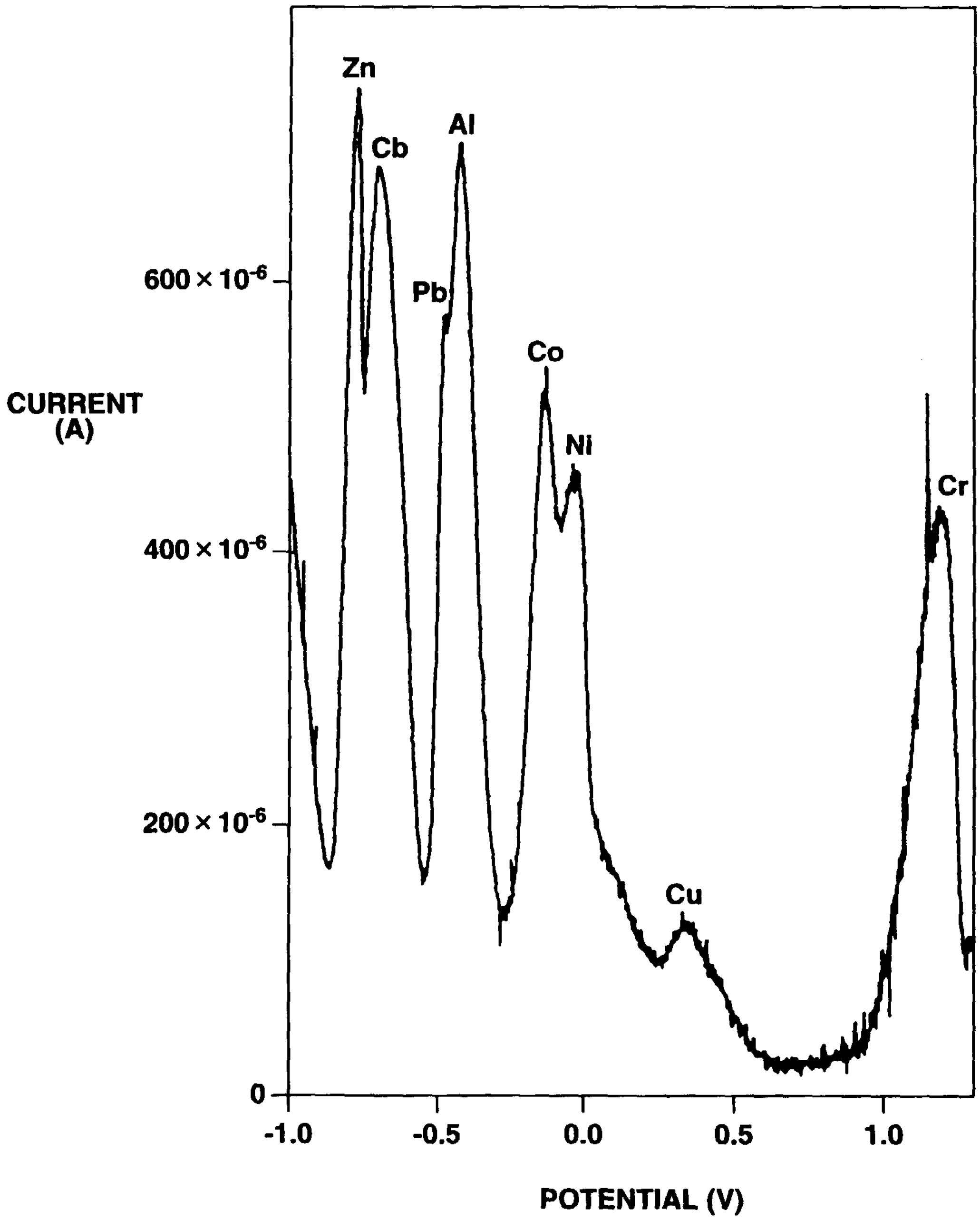

Zn
Cb
Al
Pb
Co
Ni
Cu
Cr
CURRENT (A)
600×10-6
400×10-6
200×10-6
0
-1.0
-0.5
0.0
0.5
1.0
POTENTIAL (V)

FIG.10

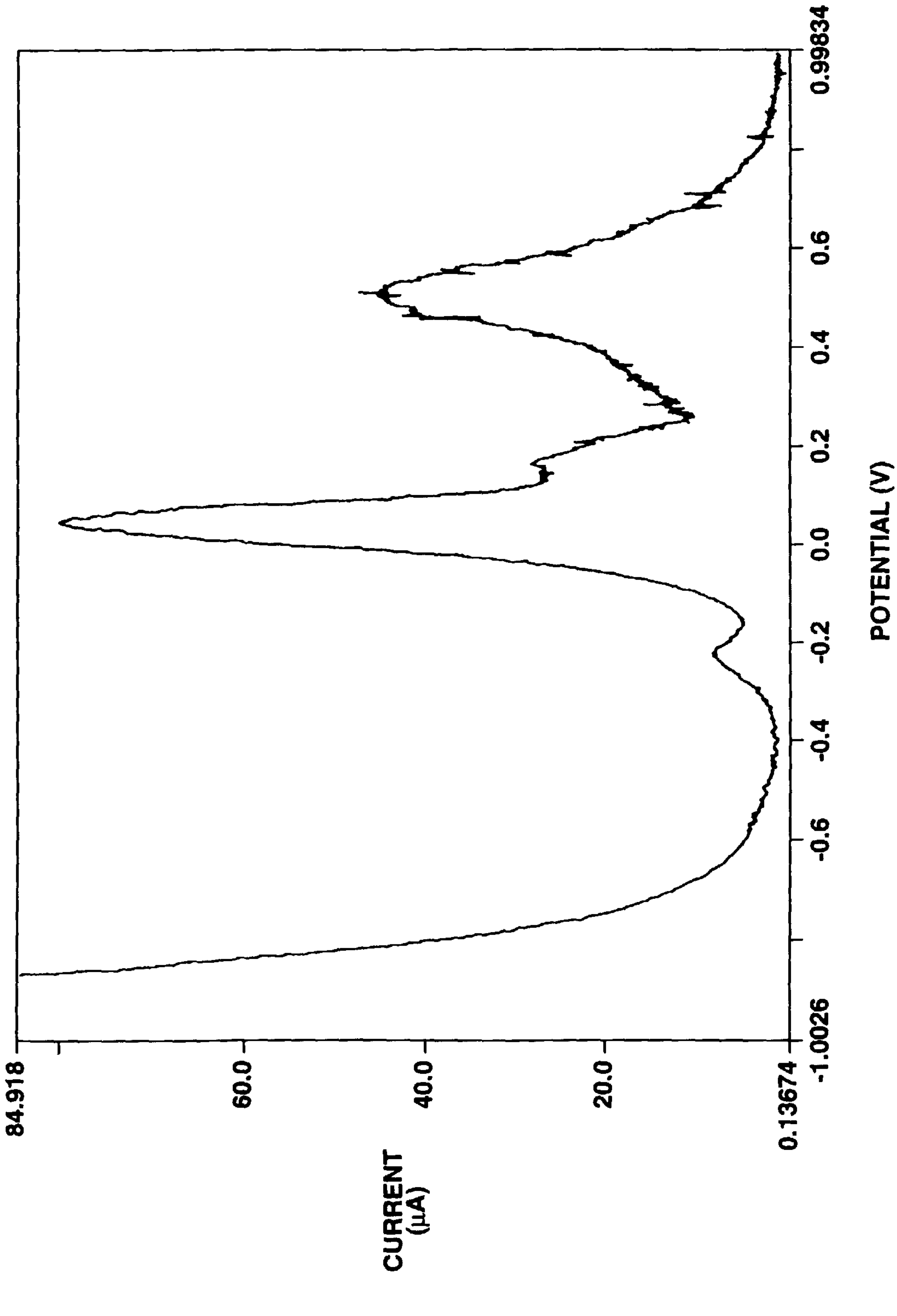
CURRENT
(µA)
84.918
60.0
40.0
20.0
0.13674
-1.0026
-0.6
-0.4
-0.2
0.0
0.2
0.4
0.6
0.99834
POTENTIAL (V)

FIG.11

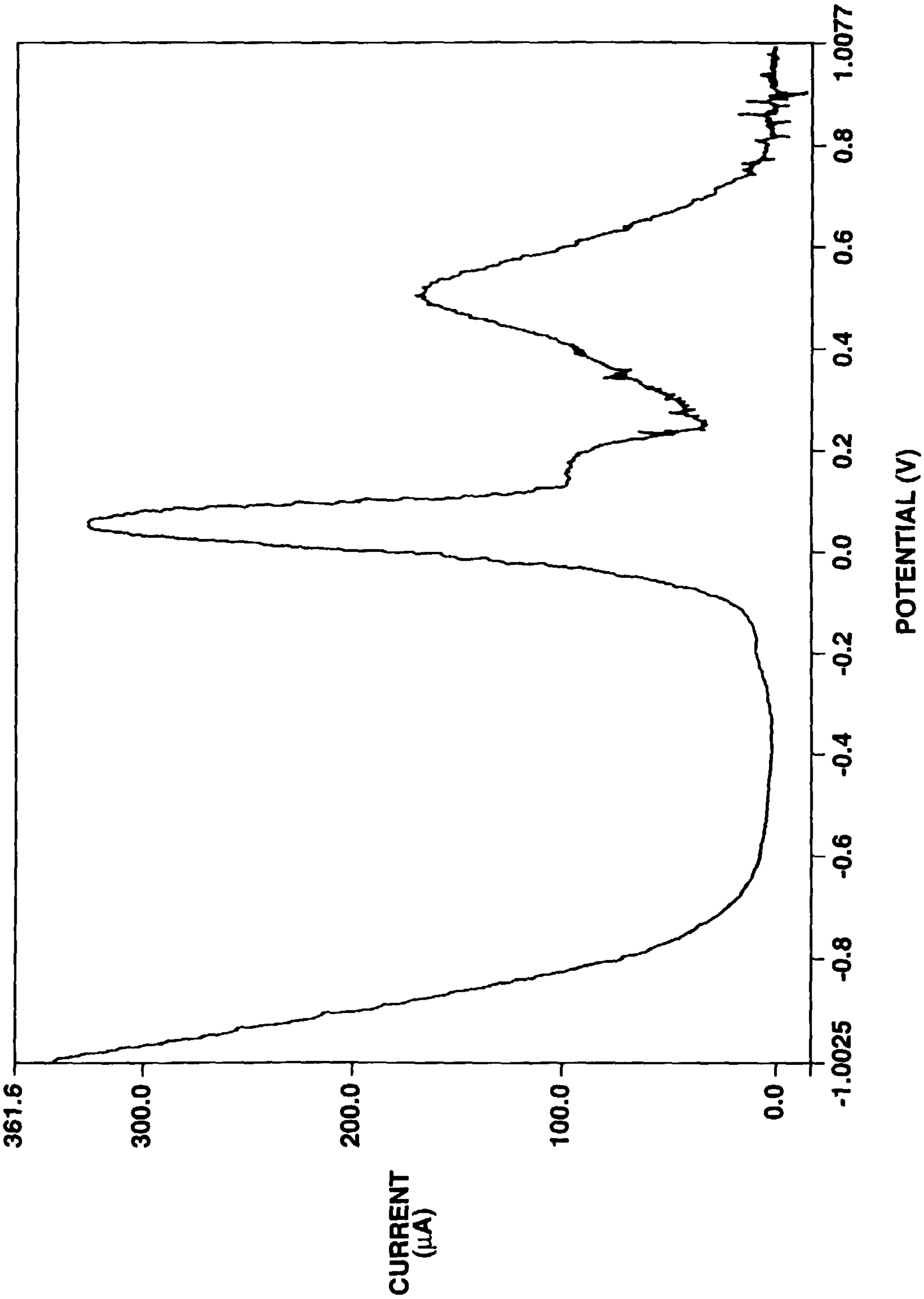
CURRENT
(μA)
361.6
300.0
200.0
100.0
0.0
-1.0025
-0.8
-0.6
-0.4
-0.2
0.0
0.2
0.4
0.6
0.8
1.0077
POTENTIAL (V)

FIG.12

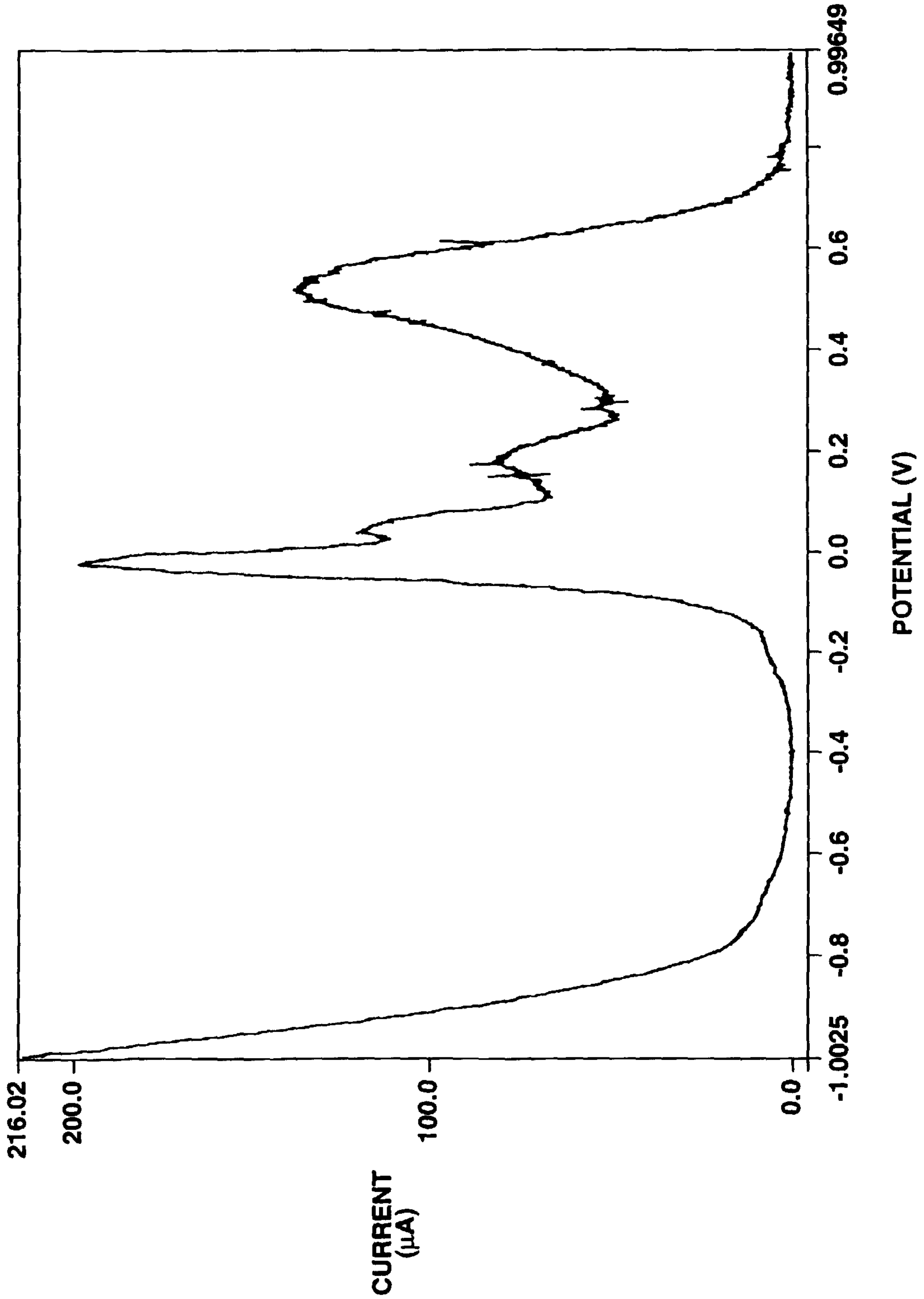
216.02
200.0
100.0
0.0
CURRENT
(µA)
-1.0025
-0.8
-0.6
-0.4
-0.2
0.0
0.2
0.4
0.6
0.99649
POTENTIAL (V)

FIG.13

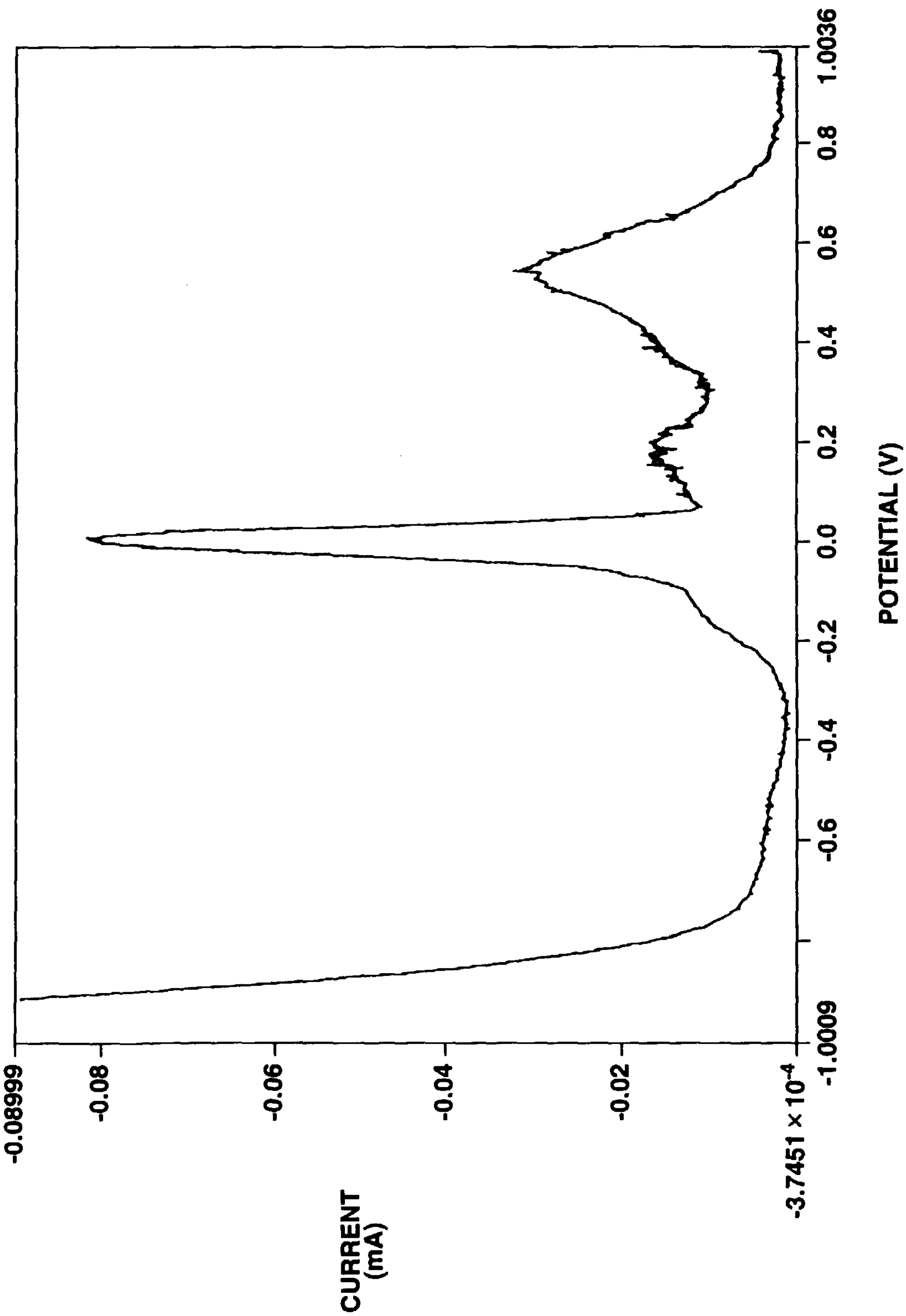
CURRENT
(mA)
-0.08999
-0.08
-0.06
-0.04
-0.02
-3.7451 × 10⁻⁴
POTENTIAL (V)
-1.0009
-0.6
-0.4
-0.2
0.0
0.2
0.4
0.6
0.8
1.0036

FIG.14

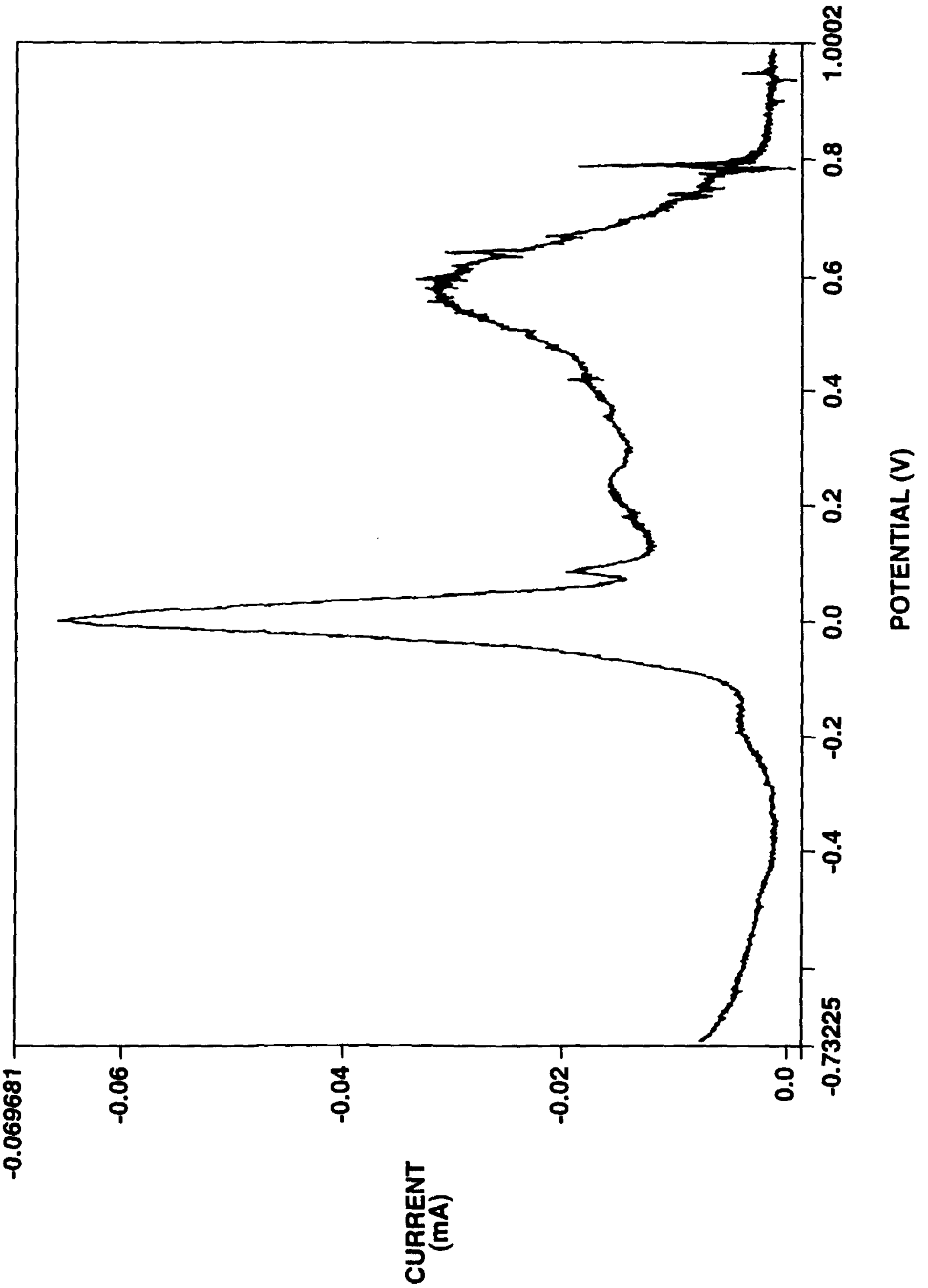
CURRENT (mA)
-0.069681
-0.06
-0.04
-0.02
0.0
-0.73225
-0.4
-0.2
0.0
0.2
0.4
0.6
0.8
1.0002
POTENTIAL (V)

FIG.15

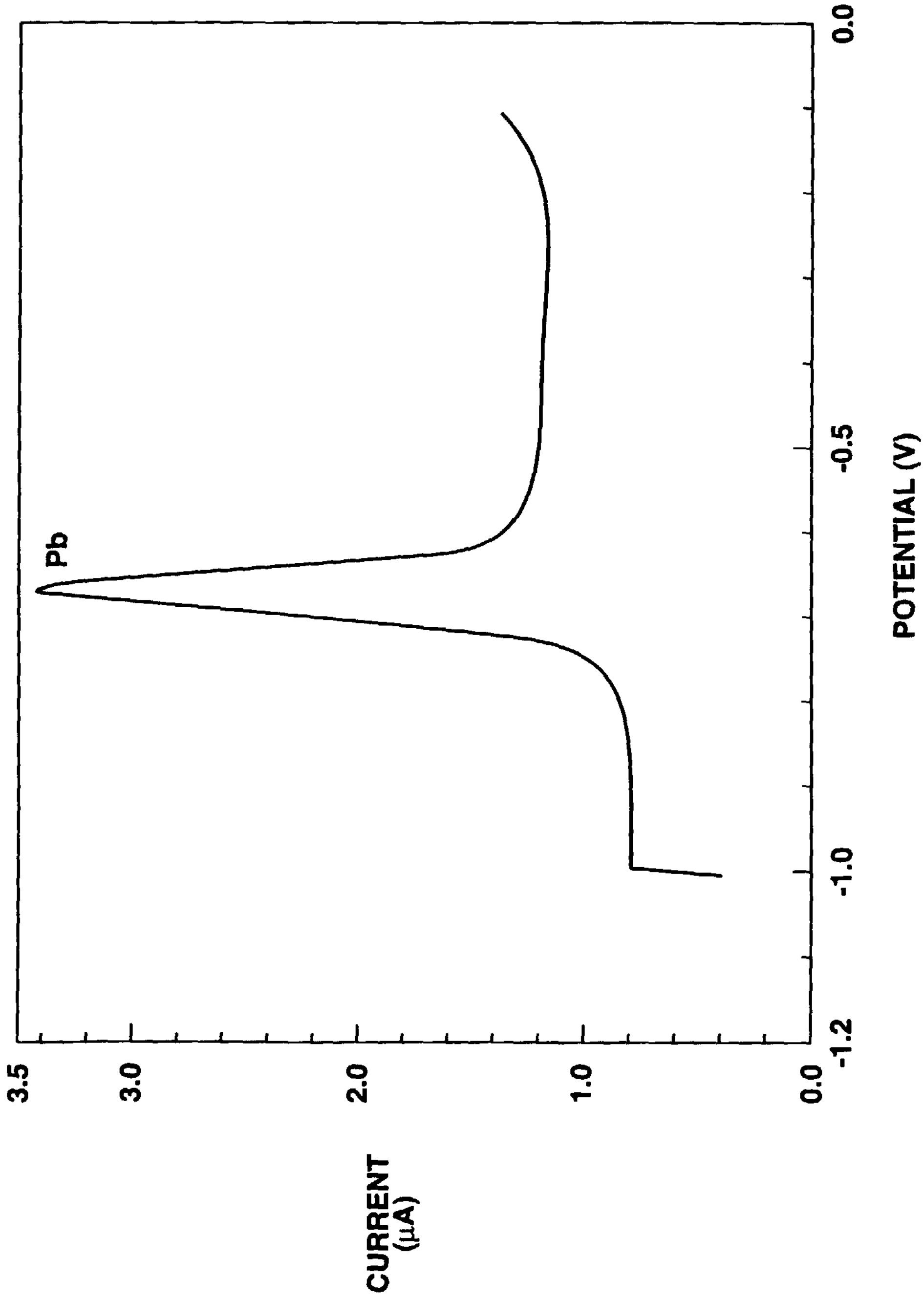

# FIG.16

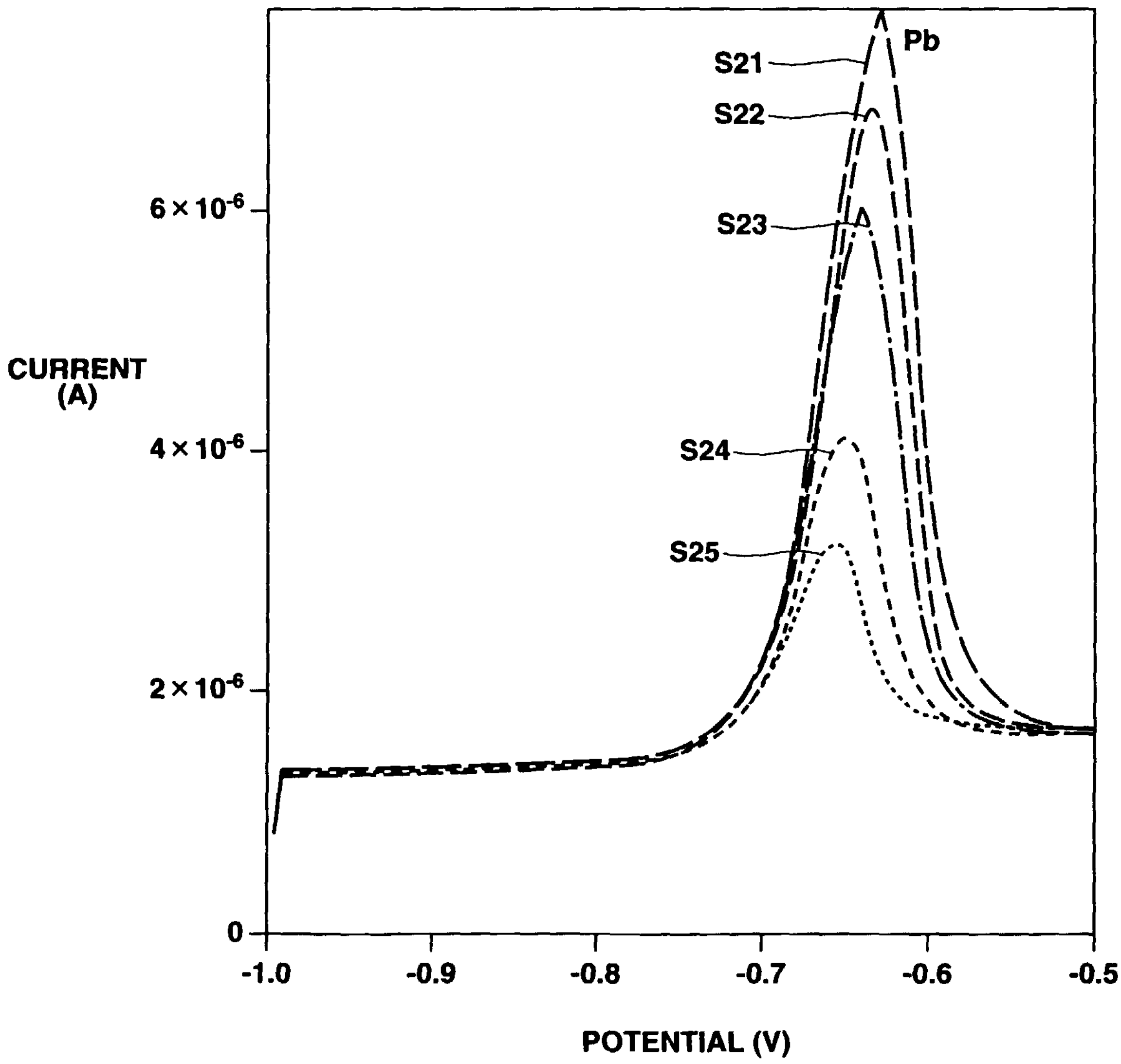

Pb
S21
S22
S23
S24
S25
6 × 10-6
4 × 10-6
2 × 10-6
0
CURRENT (A)
-1.0
-0.9
-0.8
-0.7
-0.6
-0.5
POTENTIAL (V)

FIG.17

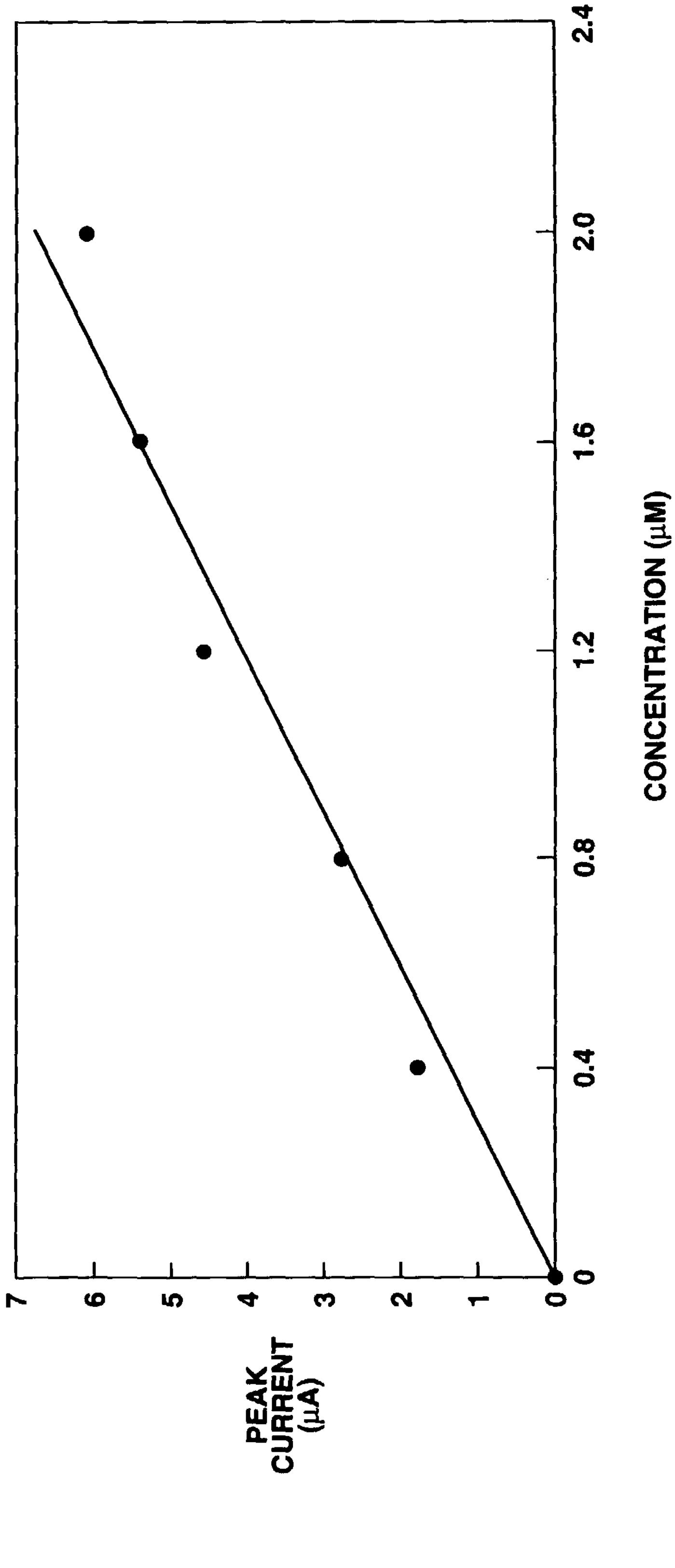

FIG.18

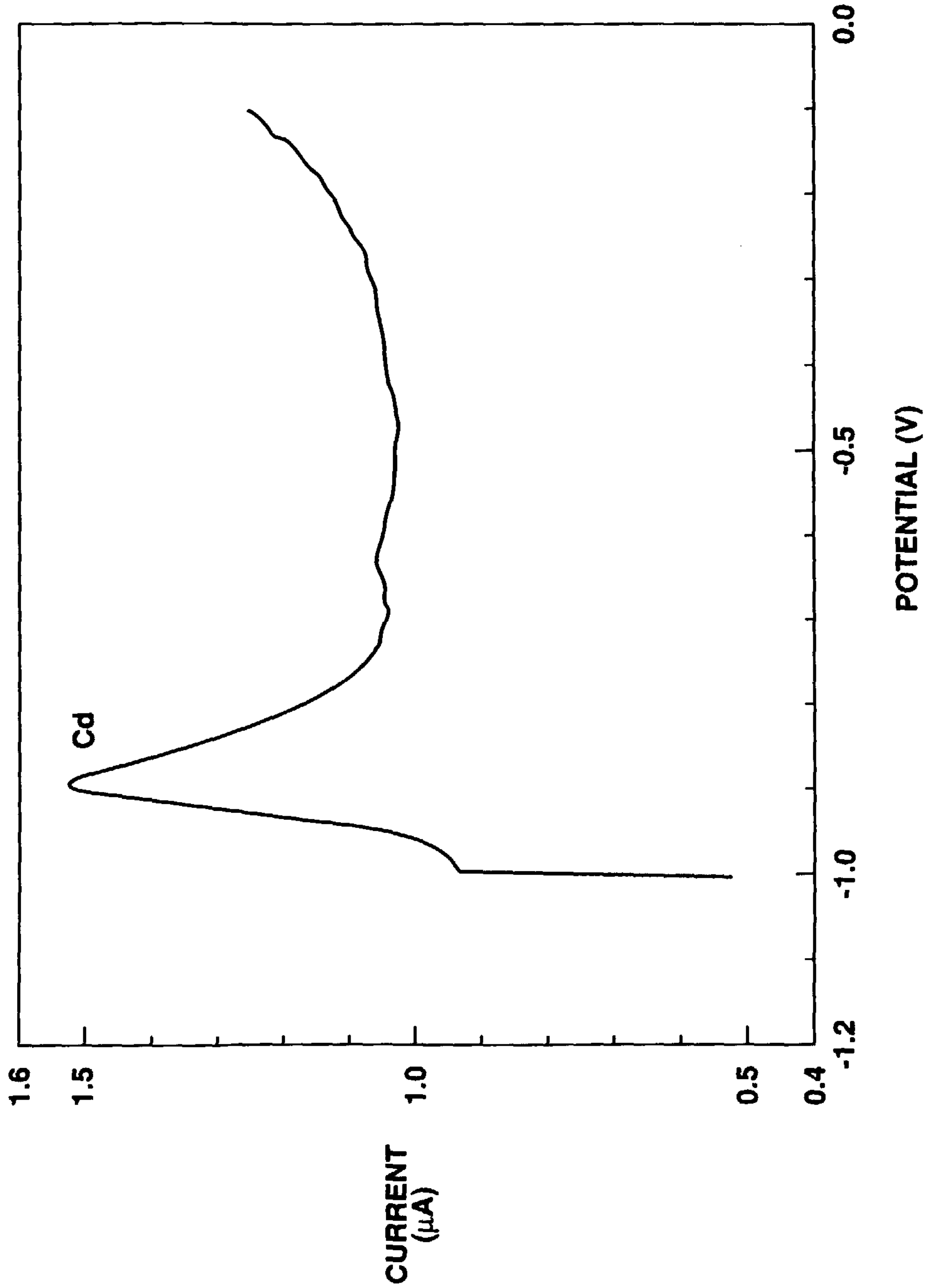

# FIG.19

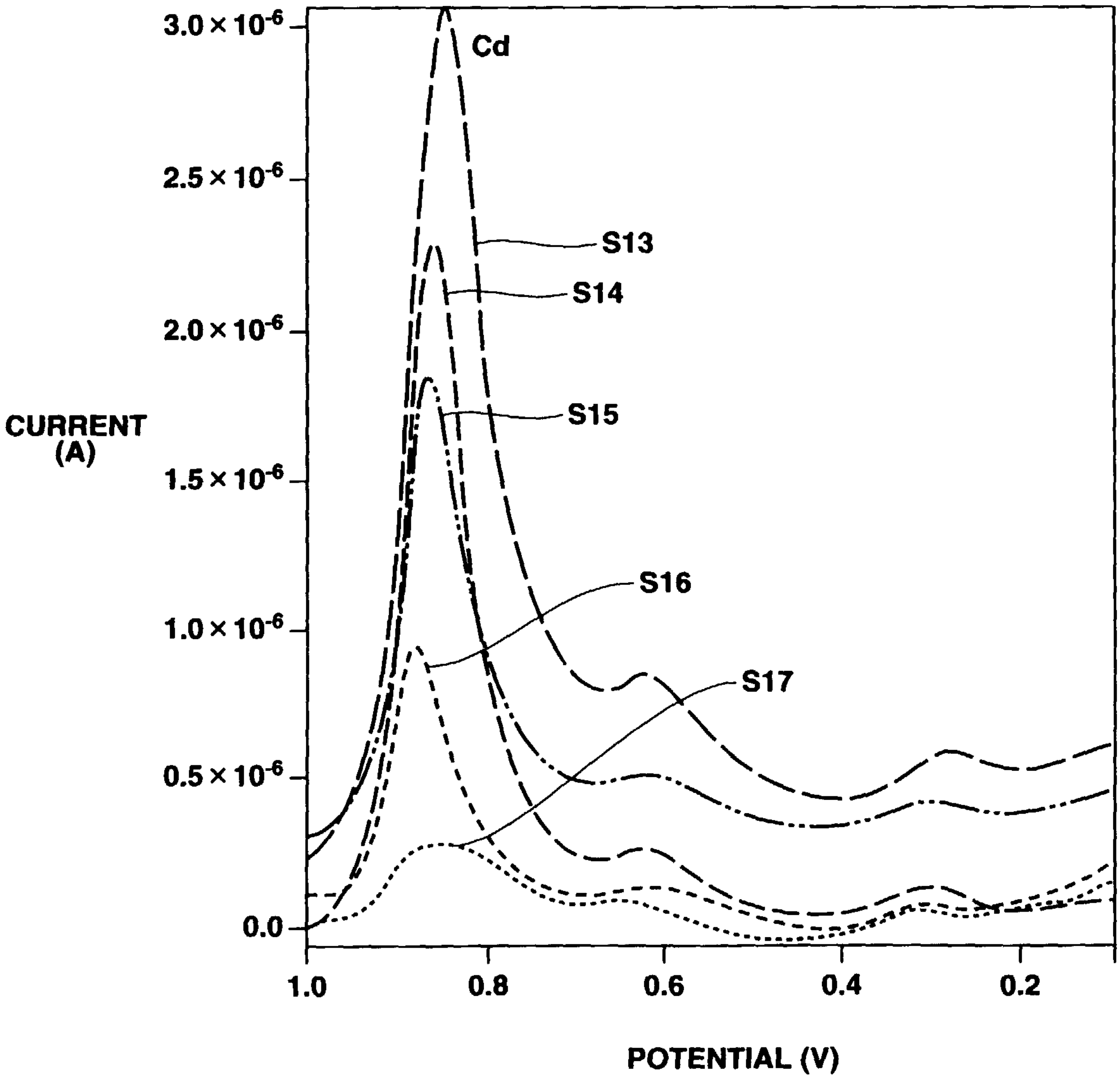
3.0 × 10⁻⁶
2.5 × 10⁻⁶
2.0 × 10⁻⁶
1.5 × 10⁻⁶
1.0 × 10⁻⁶
0.5 × 10⁻⁶
0.0
CURRENT (A)
Cd
S13
S14
S15
S16
S17
1.0
0.8
0.6
0.4
0.2
POTENTIAL (V)

# FIG.20

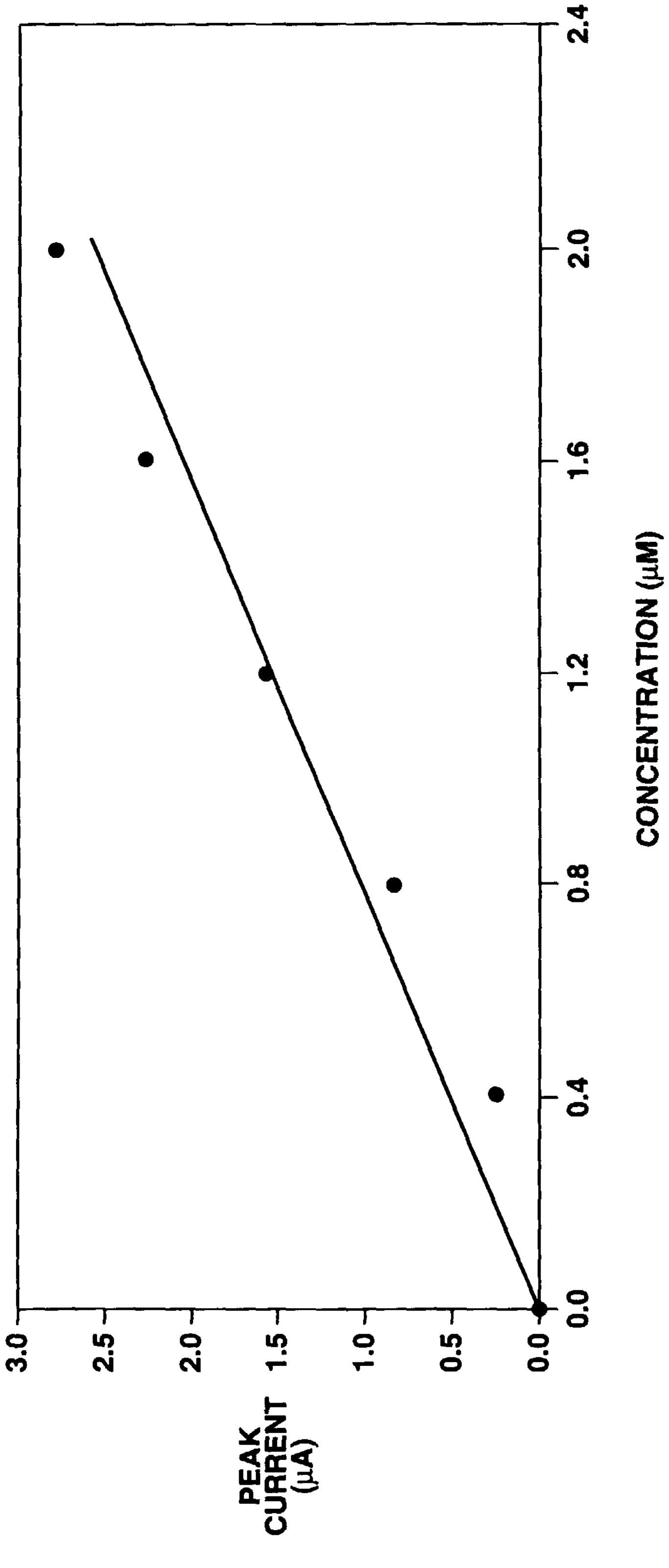
PEAK CURRENT (μA)
3.0
2.5
2.0
1.5
1.0
0.5
0.0
0.0
0.4
0.8
1.2
1.6
2.0
2.4
CONCENTRATION (μM)

FIG.21

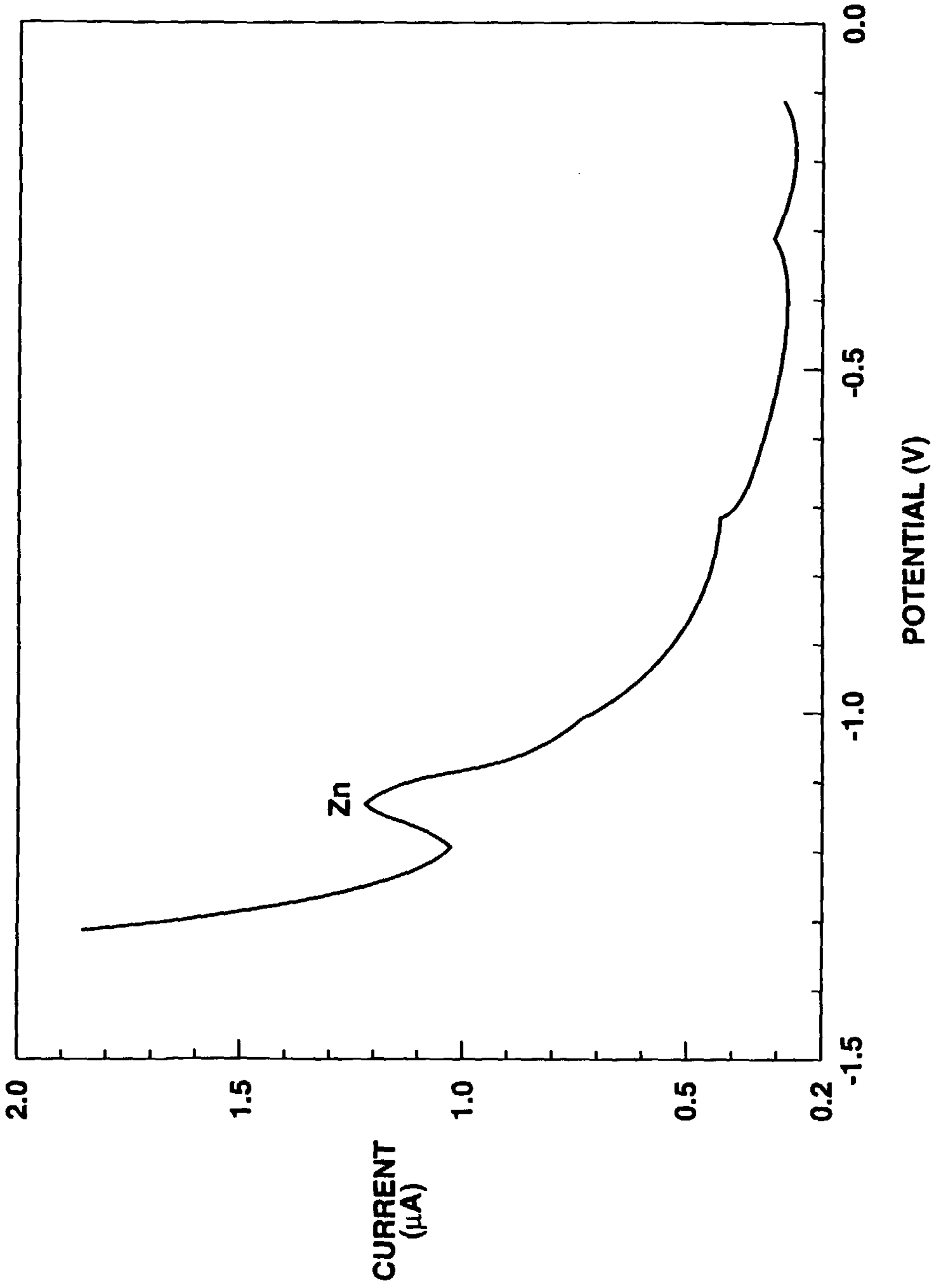

FIG.22

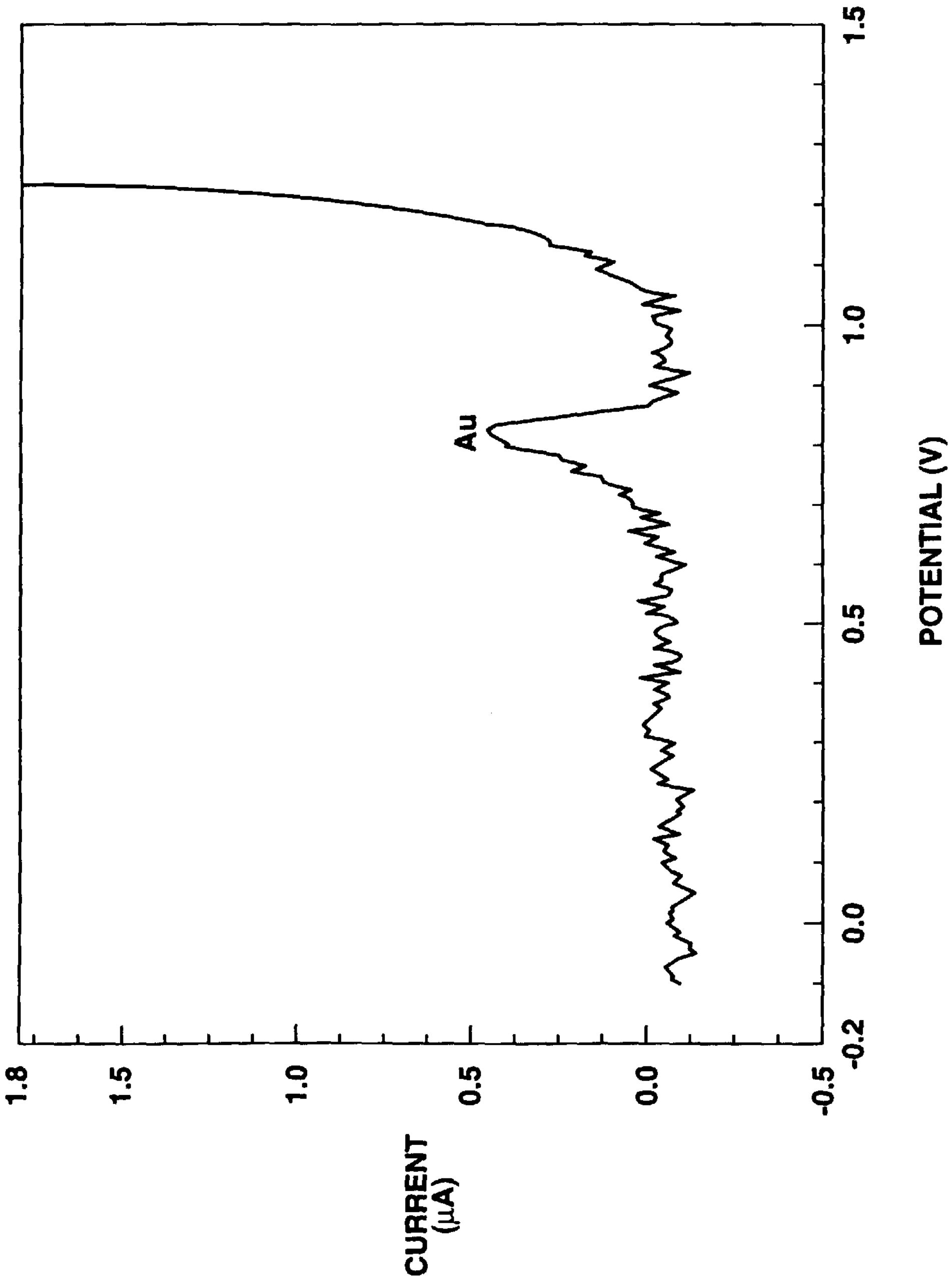

# FIG.23

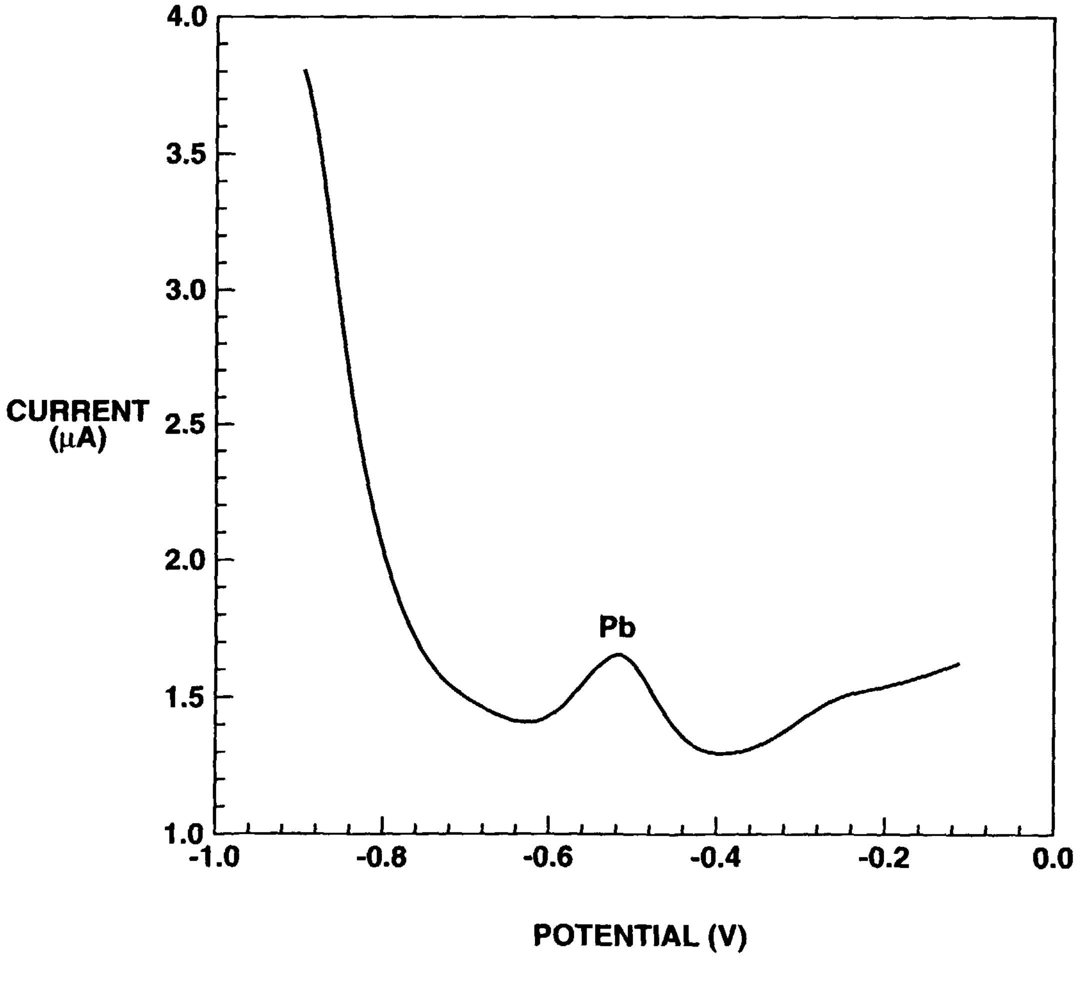

FIG.24

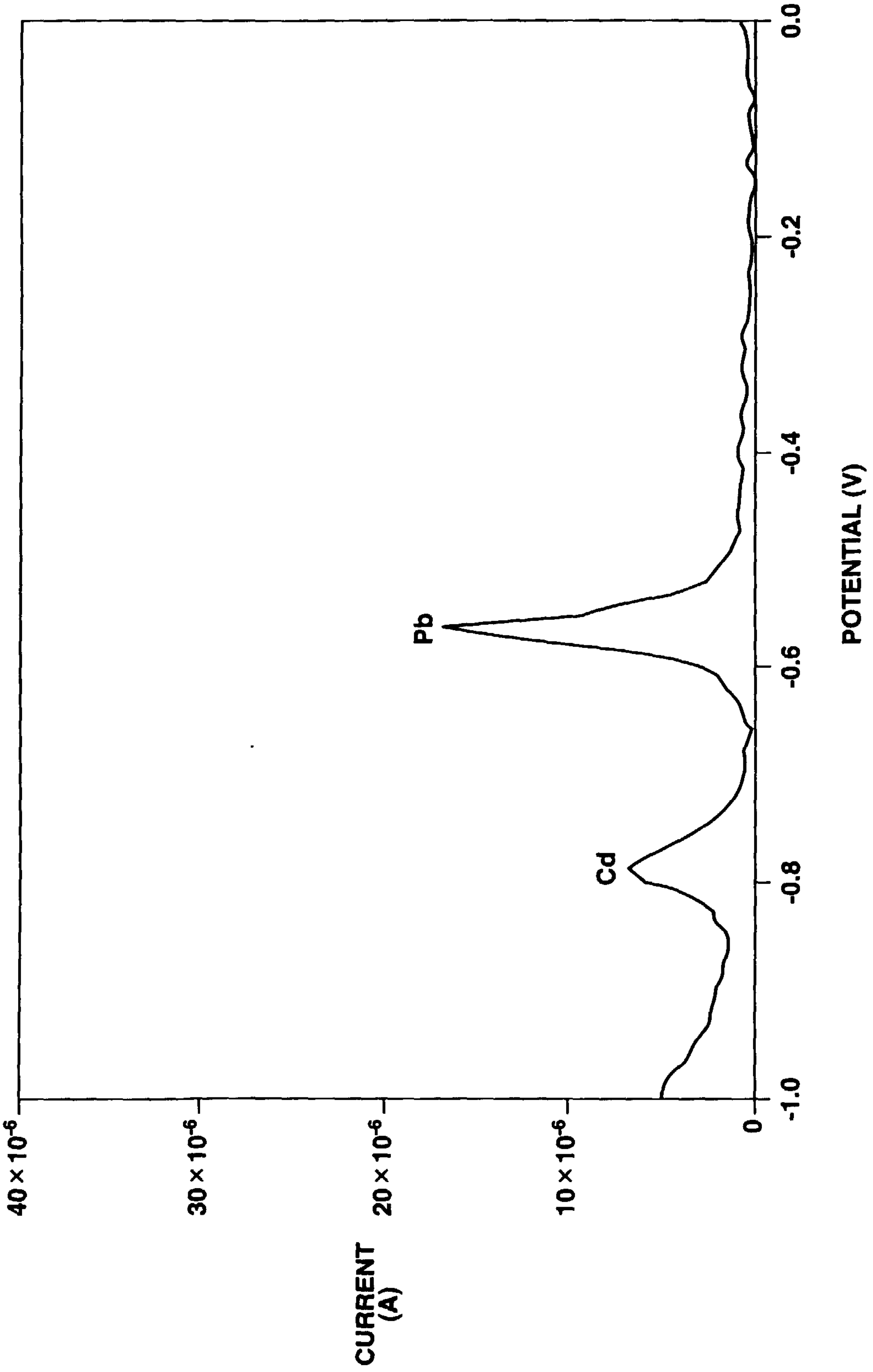
Pb
Cd
CURRENT (A)
40×10⁻⁶
30×10⁻⁶
20×10⁻⁶
10×10⁻⁶
0
-1.0
-0.8
-0.6
-0.4
-0.2
0.0
POTENTIAL (V)

FIG.25

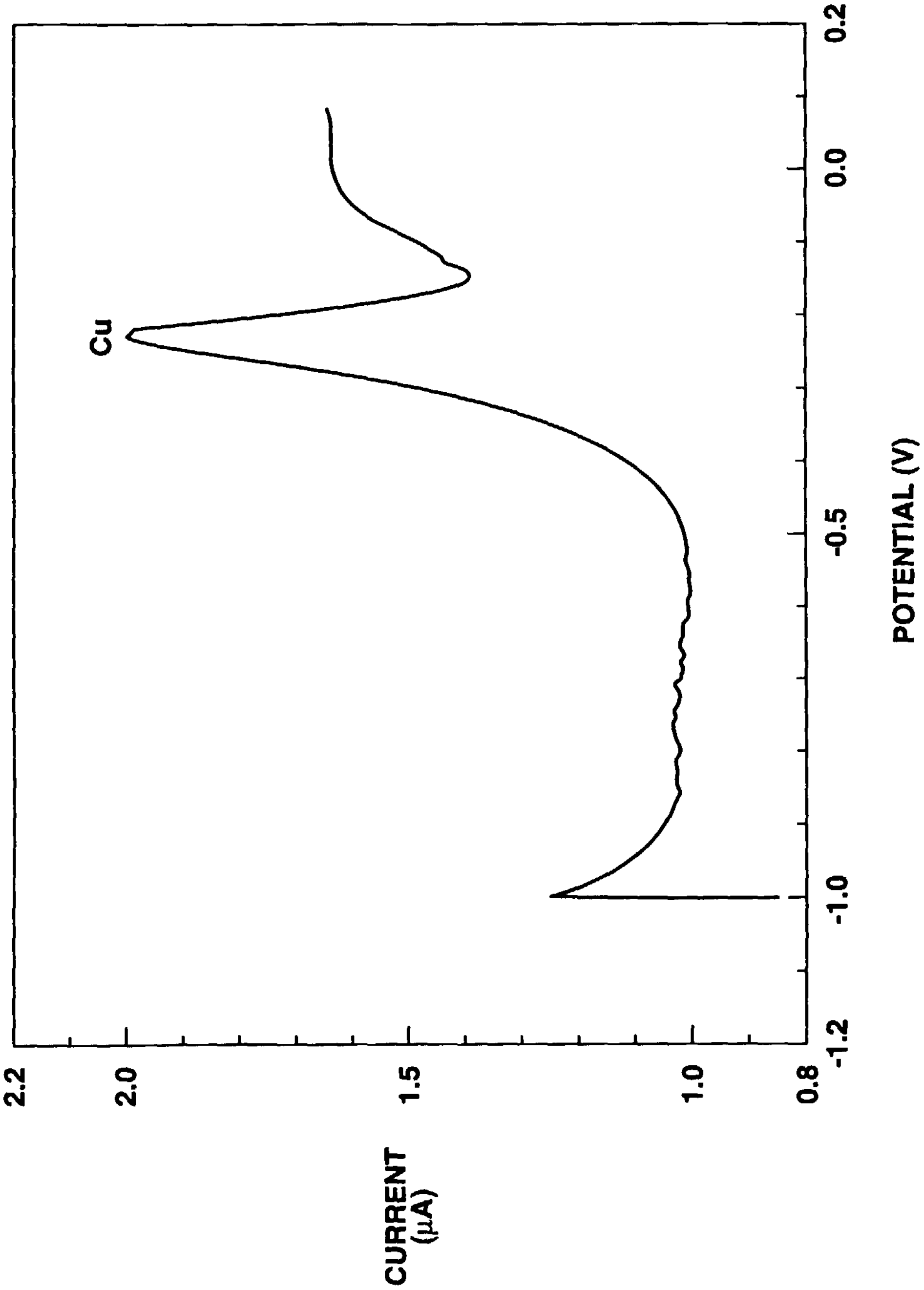

# FIG.26

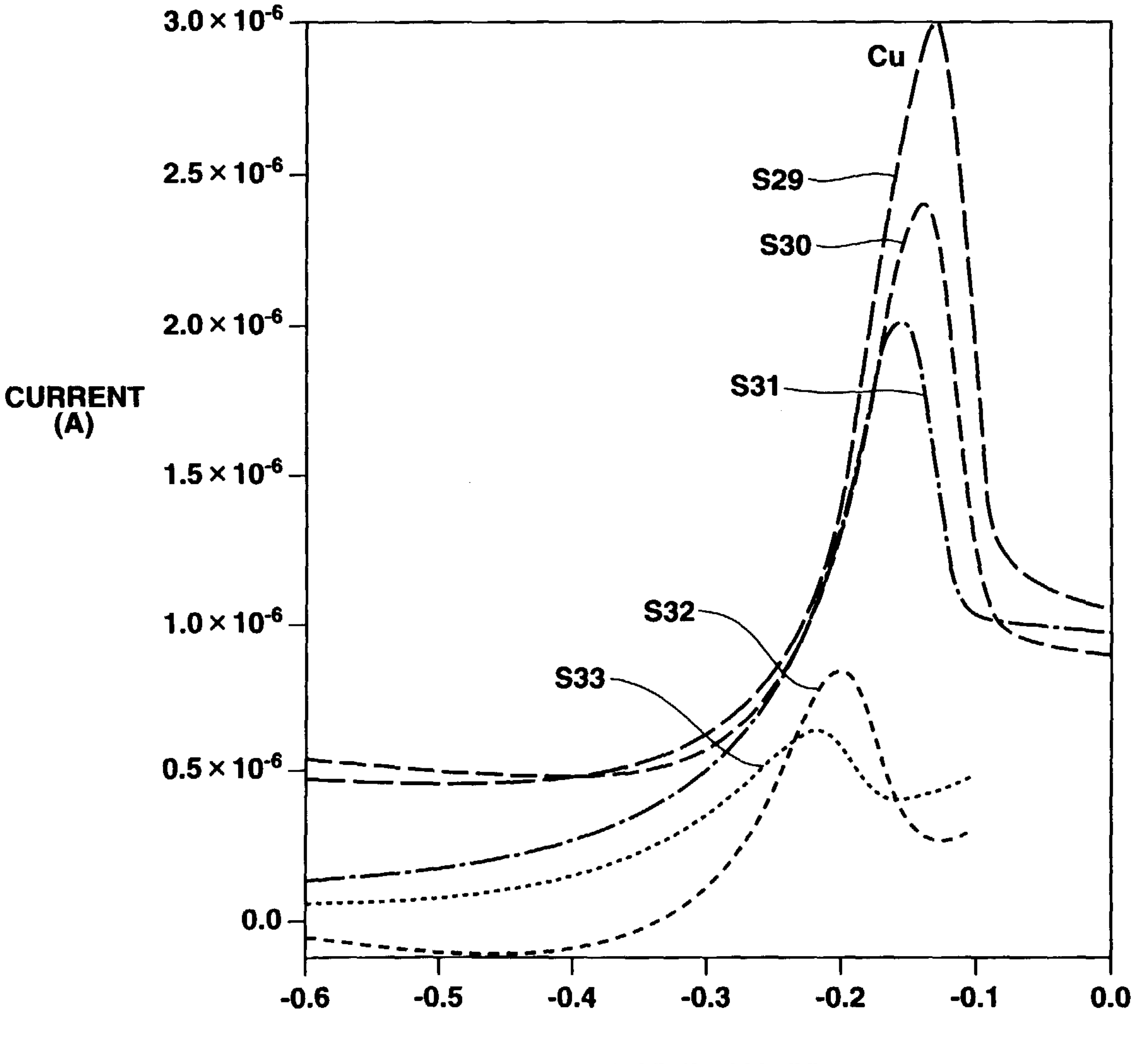
3.0×10⁻⁶
2.5×10⁻⁶
2.0×10⁻⁶
1.5×10⁻⁶
1.0×10⁻⁶
0.5×10⁻⁶
0.0
CURRENT (A)
-0.6
-0.5
-0.4
-0.3
-0.2
-0.1
0.0
POTENTIAL (V)
Cu
S29
S30
S31
S32
S33

FIG.27

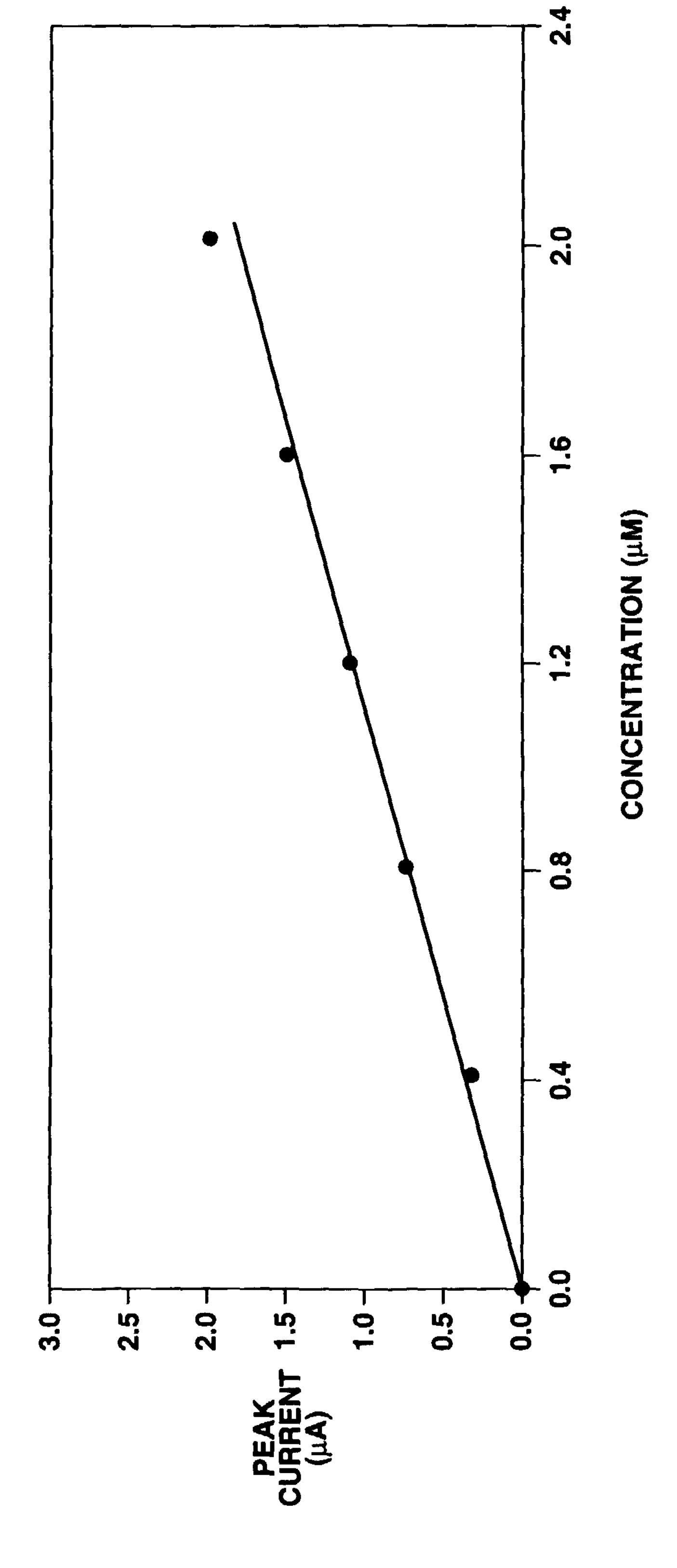
PEAK CURRENT (µA)
3.0
2.5
2.0
1.5
1.0
0.5
0.0
0.0
0.4
0.8
1.2
1.6
2.0
2.4
CONCENTRATION (µM)

FIG.28

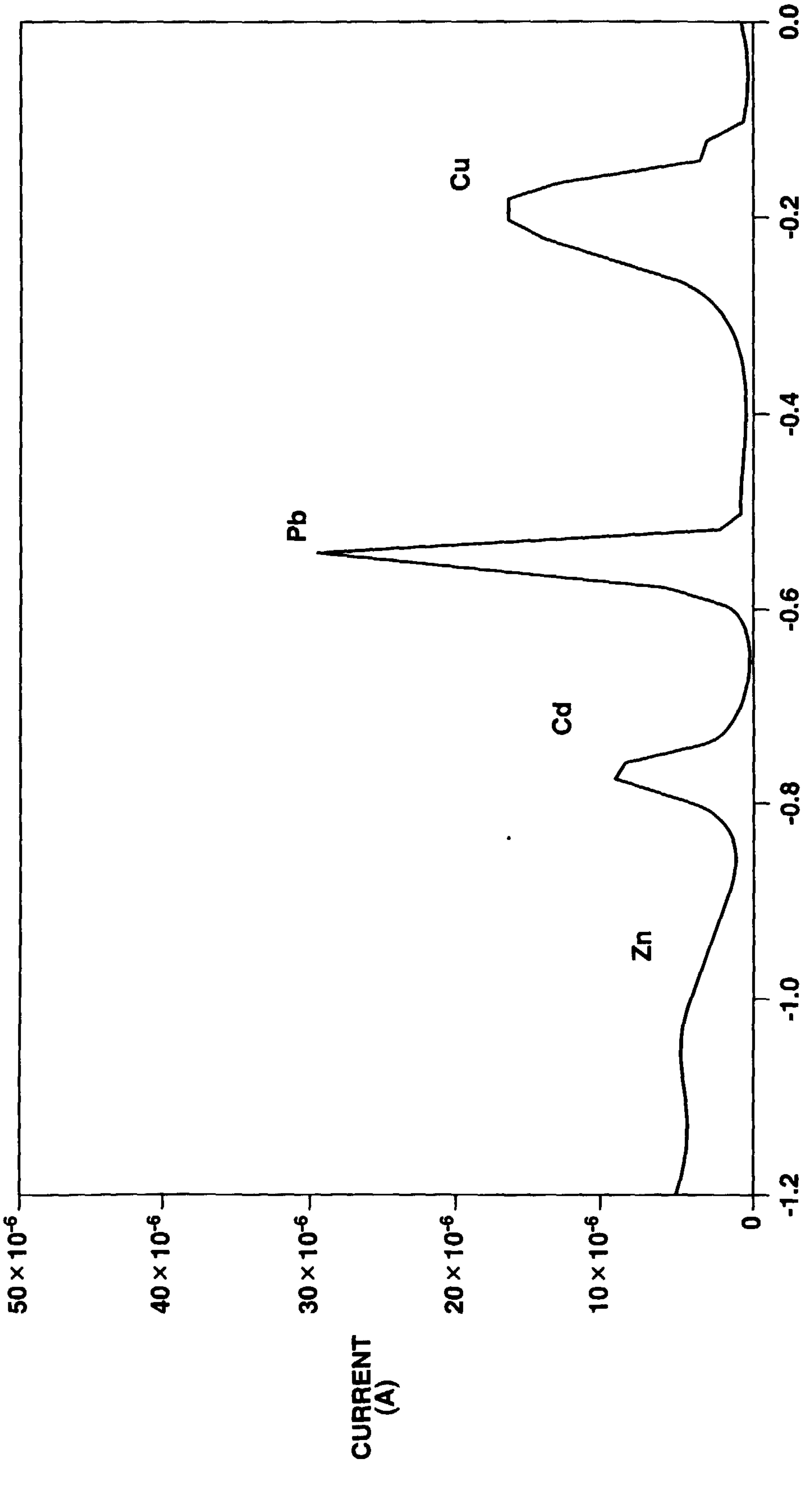
CURRENT (A)
50 × 10⁻⁶
40 × 10⁻⁶
30 × 10⁻⁶
20 × 10⁻⁶
10 × 10⁻⁶
0
Cu
Pb
Cd
Zn
-1.2
-1.0
-0.8
-0.6
-0.4
-0.2
0.0
POTENTIAL (V)

FIG.29

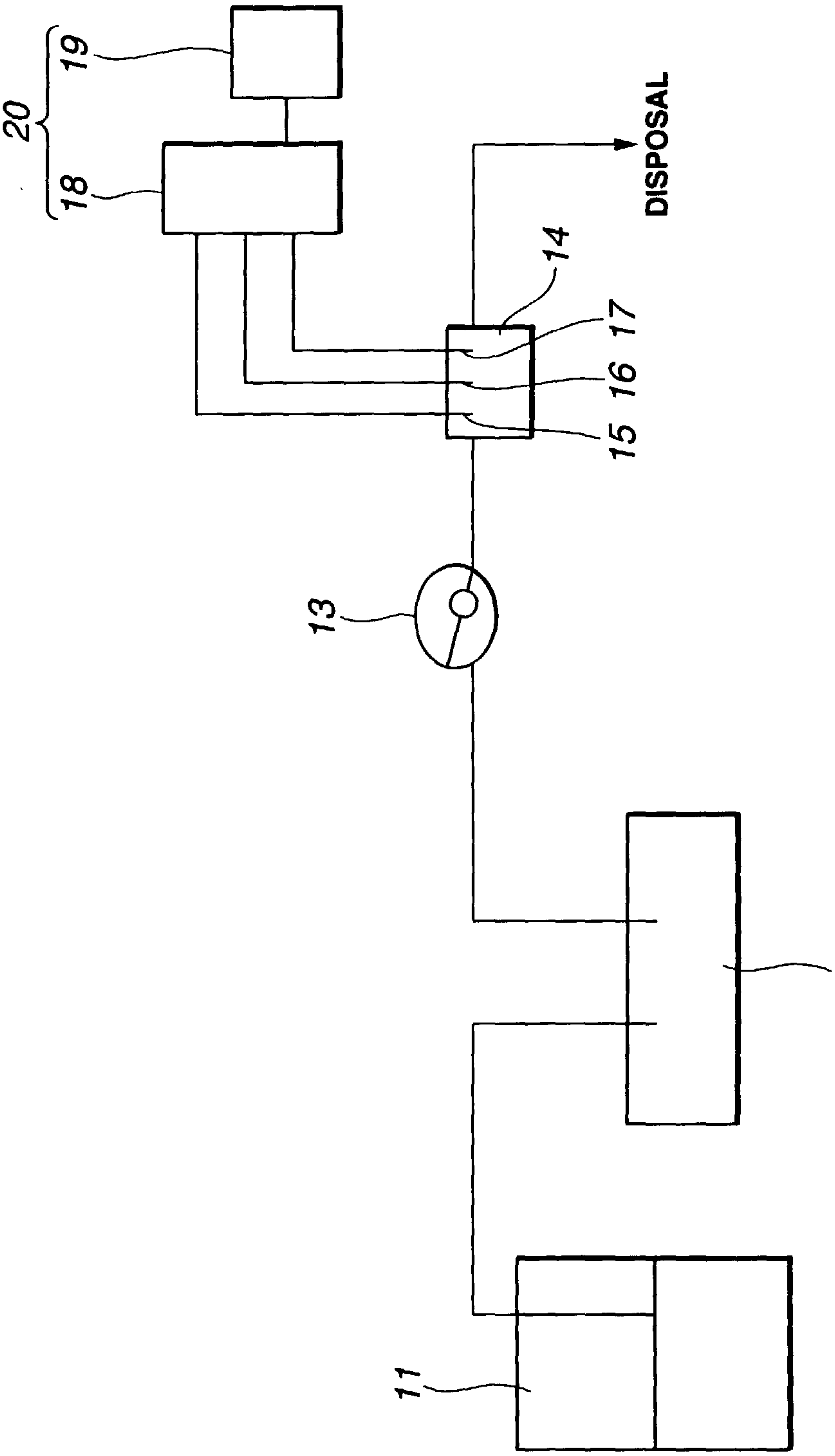

# FIG.30

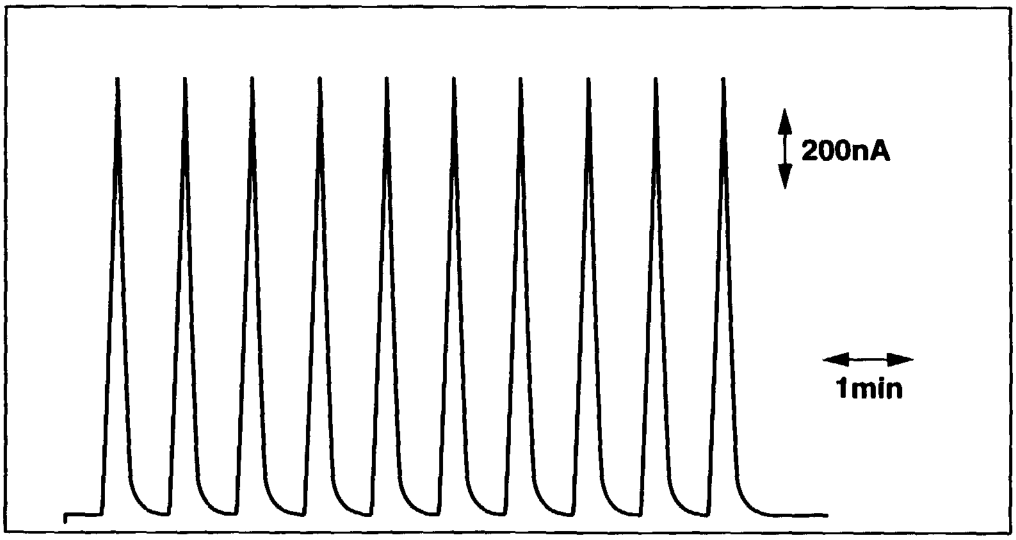

FIG.31A

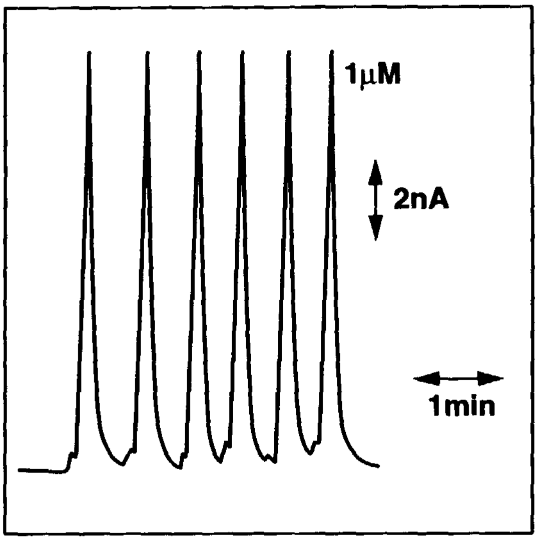


FIG.31B

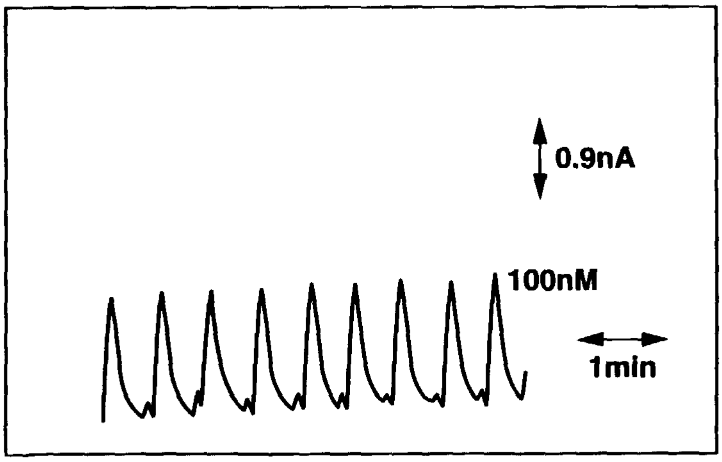


FIG.31C

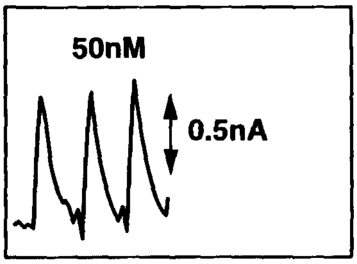

# FIG.32

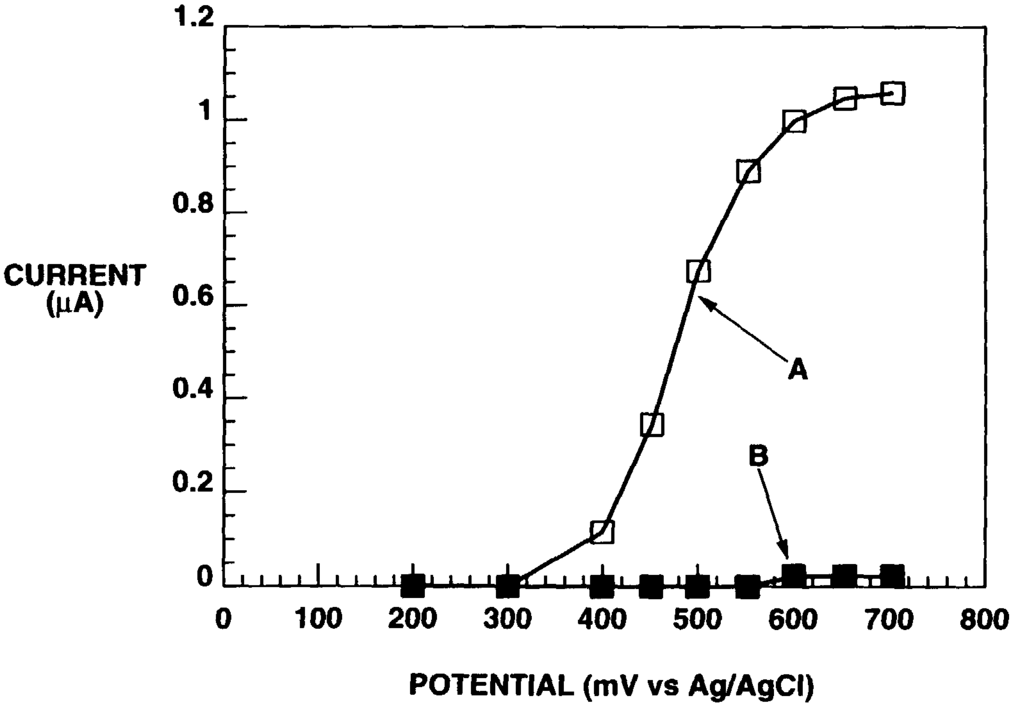
1.2
1
0.8
0.6
0.4
0.2
0
CURRENT
(μA)
A
B
0
100
200
300
400
500
600
700
800
POTENTIAL (mV vs Ag/AgCl)

# FIG.33

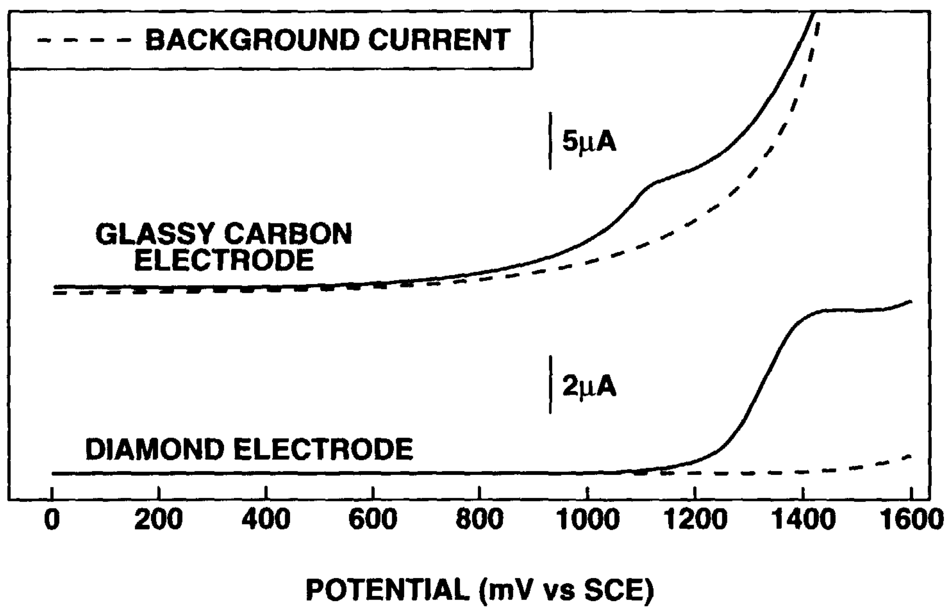
---- BACKGROUND CURRENT
5μA
GLASSY CARBON ELECTRODE
2μA
DIAMOND ELECTRODE
0
200
400
600
800
1000
1200
1400
1600
POTENTIAL (mV vs SCE)

# FIG.34

PHOSPHATE BUFFER POTENTIAL 1.3V vs Ag/AgCl

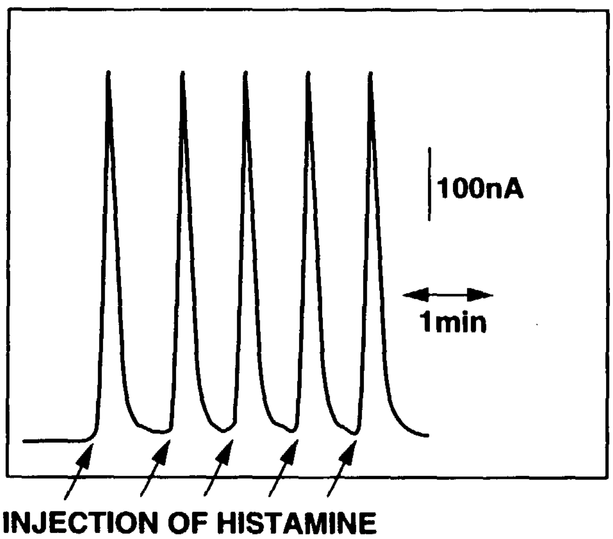

# FIG.35A

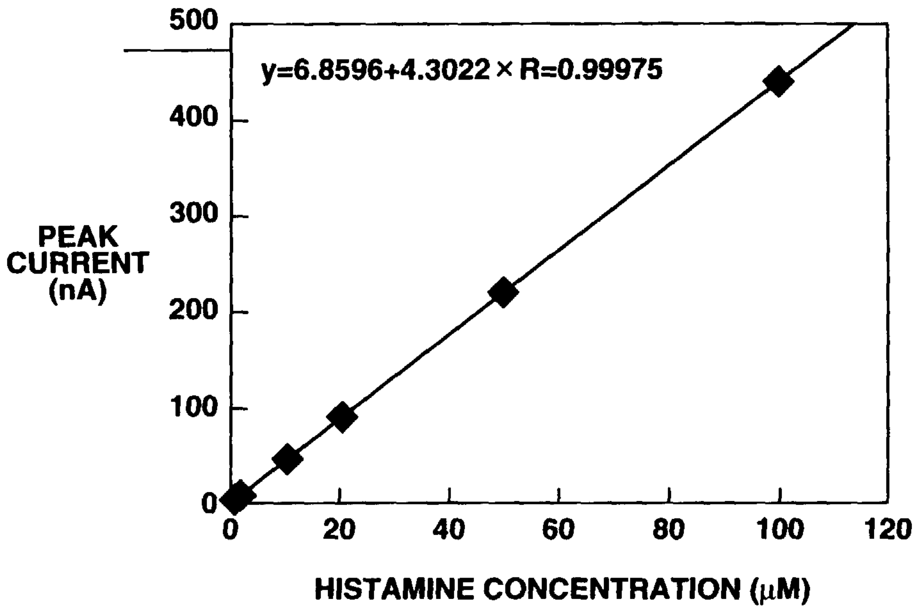


# FIG.35B

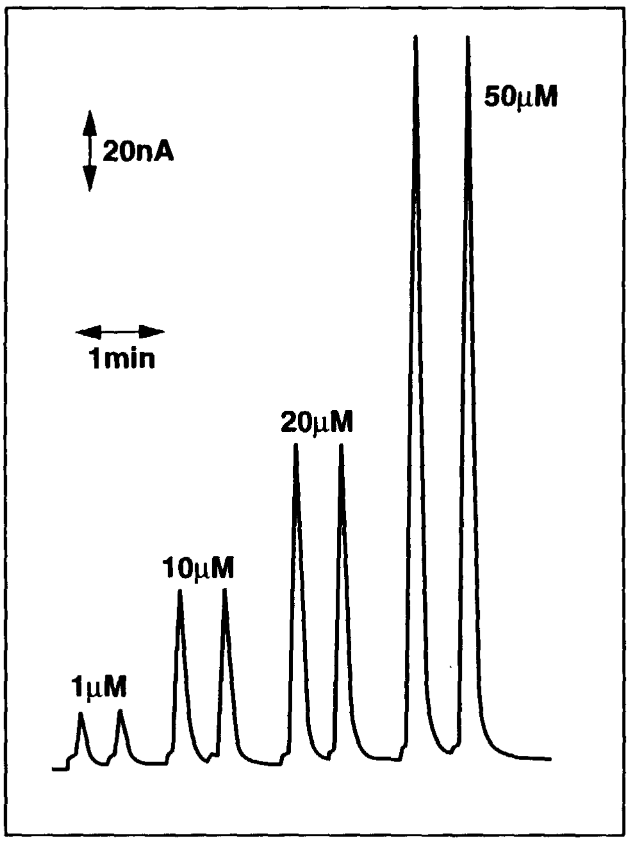

# FIG.36

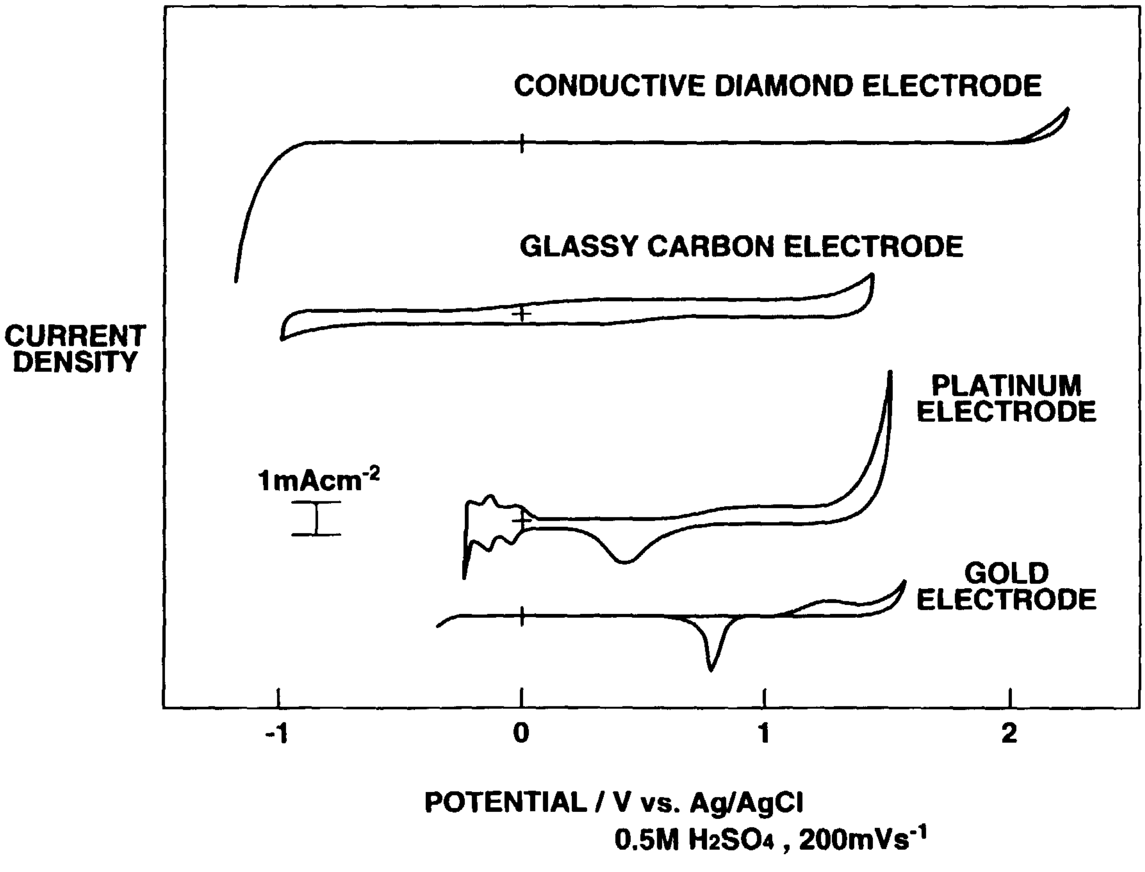
CONDUCTIVE DIAMOND ELECTRODE
GLASSY CARBON ELECTRODE
CURRENT DENSITY
PLATINUM ELECTRODE
1mAcm-2
GOLD ELECTRODE
-1
0
1
2
POTENTIAL / V vs. Ag/AgCl
0.5M H2SO4 , 200mVs-1

# FIG.37

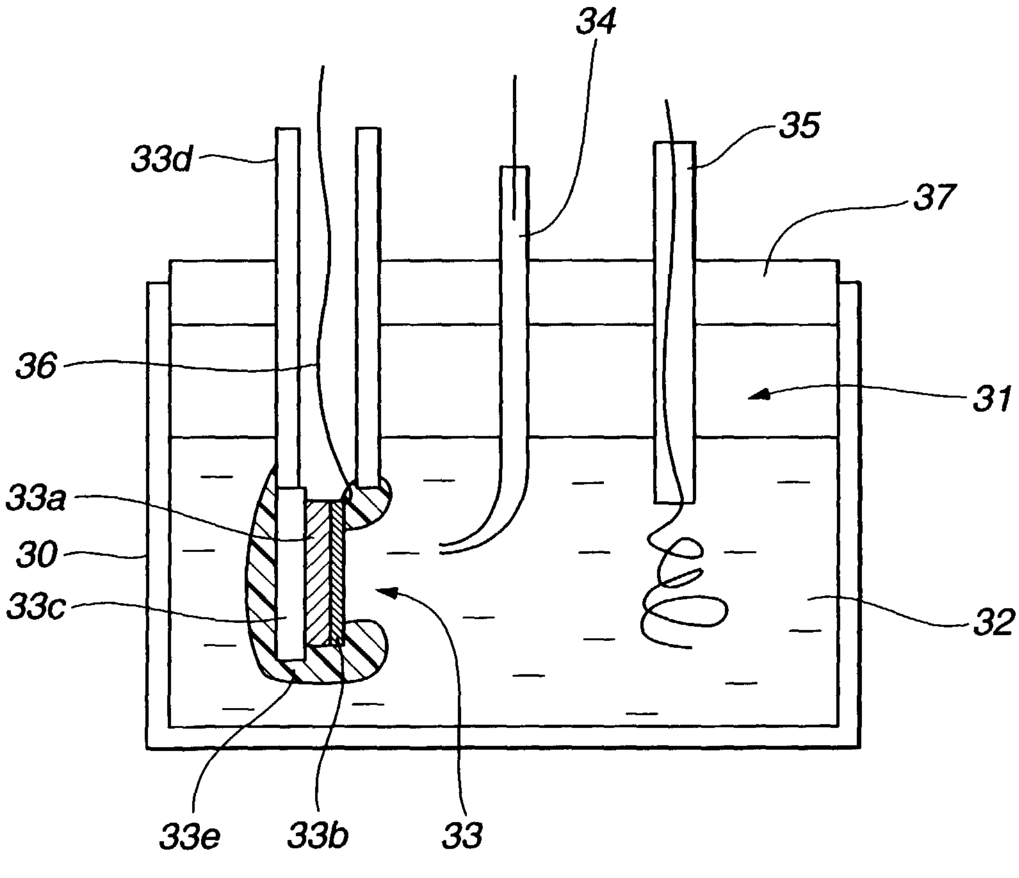

FIG.38

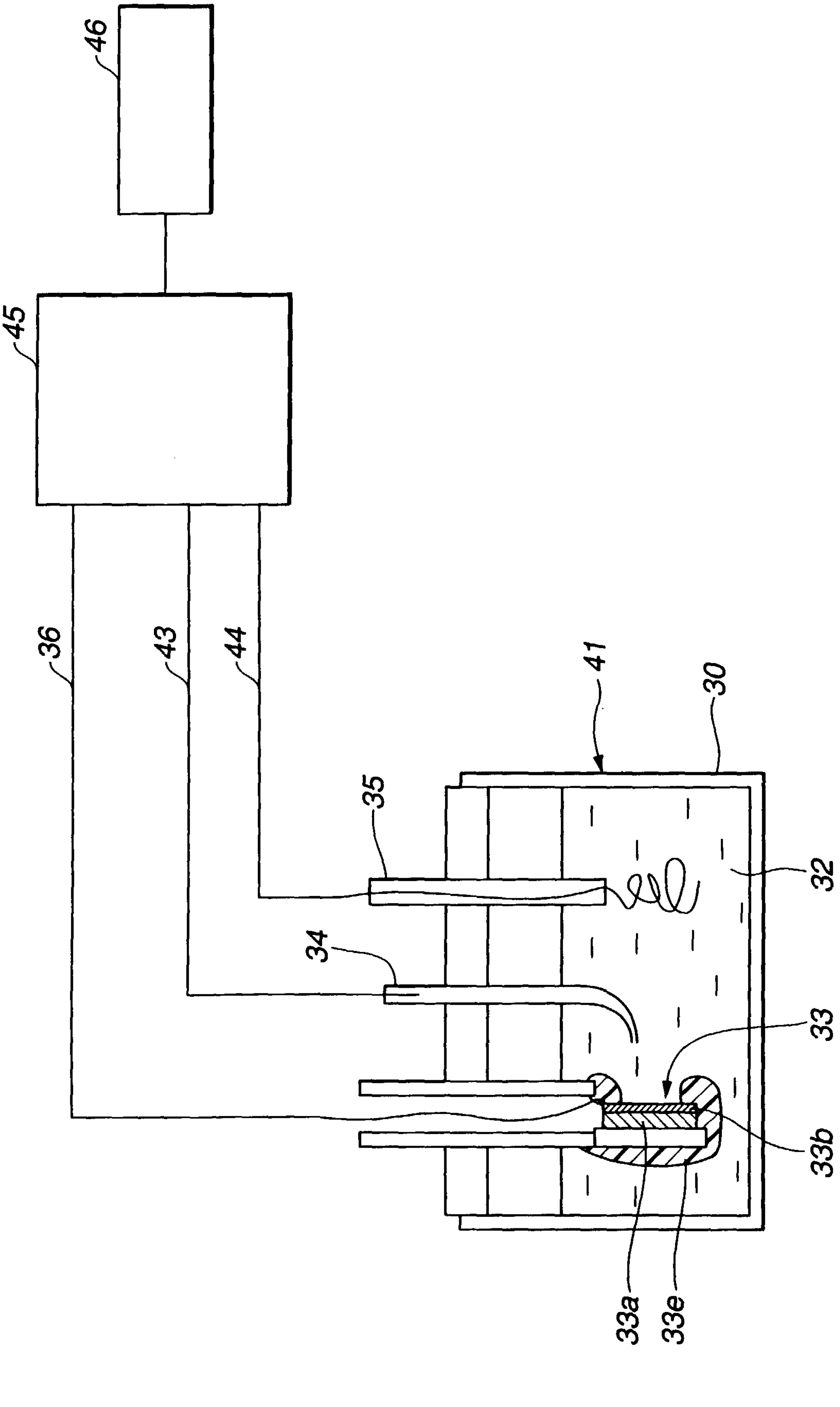

FIG.39

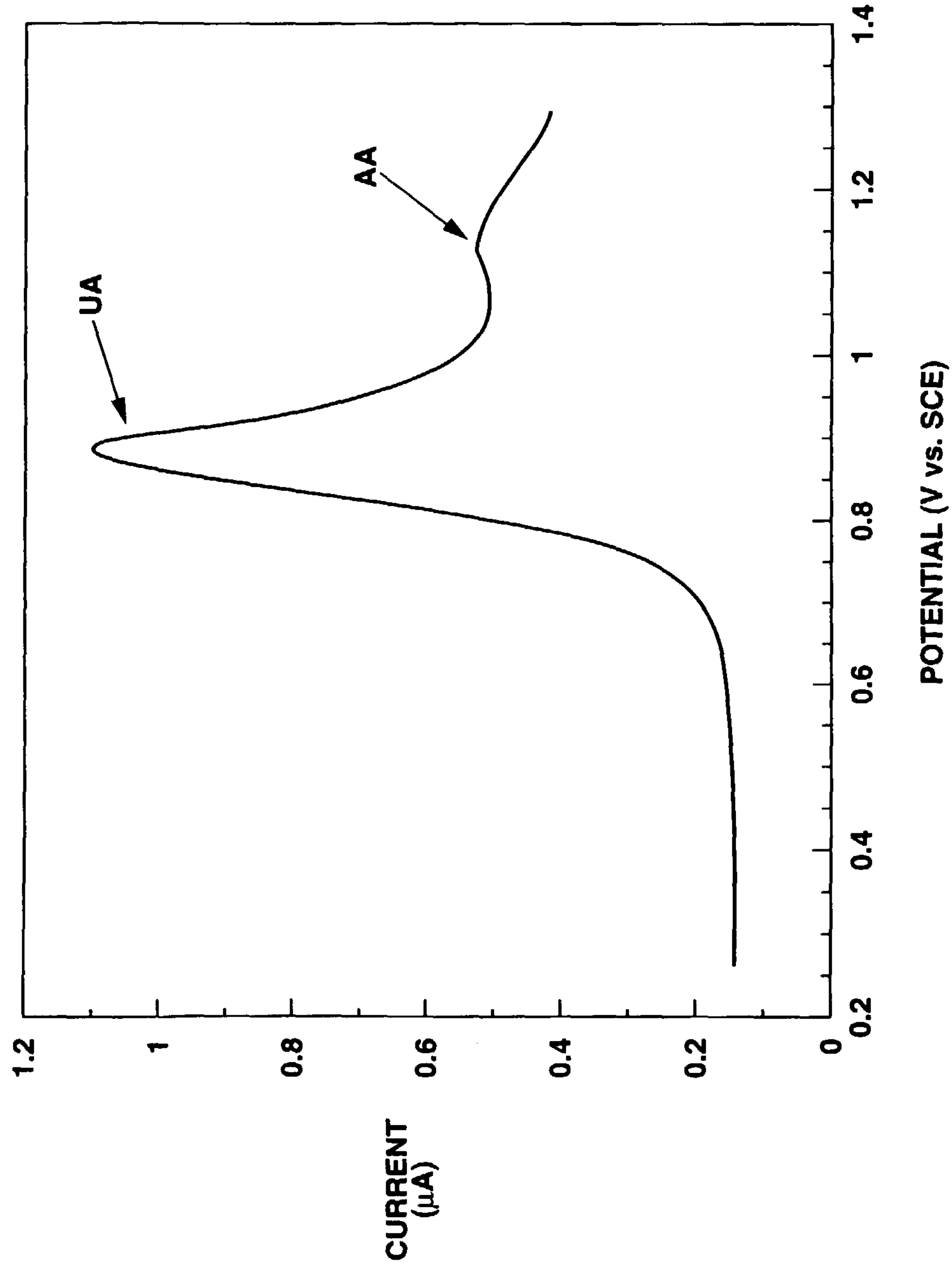
CURRENT
(μA)
1.2
1
0.8
0.6
0.4
0.2
0
0.2
0.4
0.6
0.8
1
1.2
1.4
POTENTIAL (V vs. SCE)
UA
AA

FIG.40

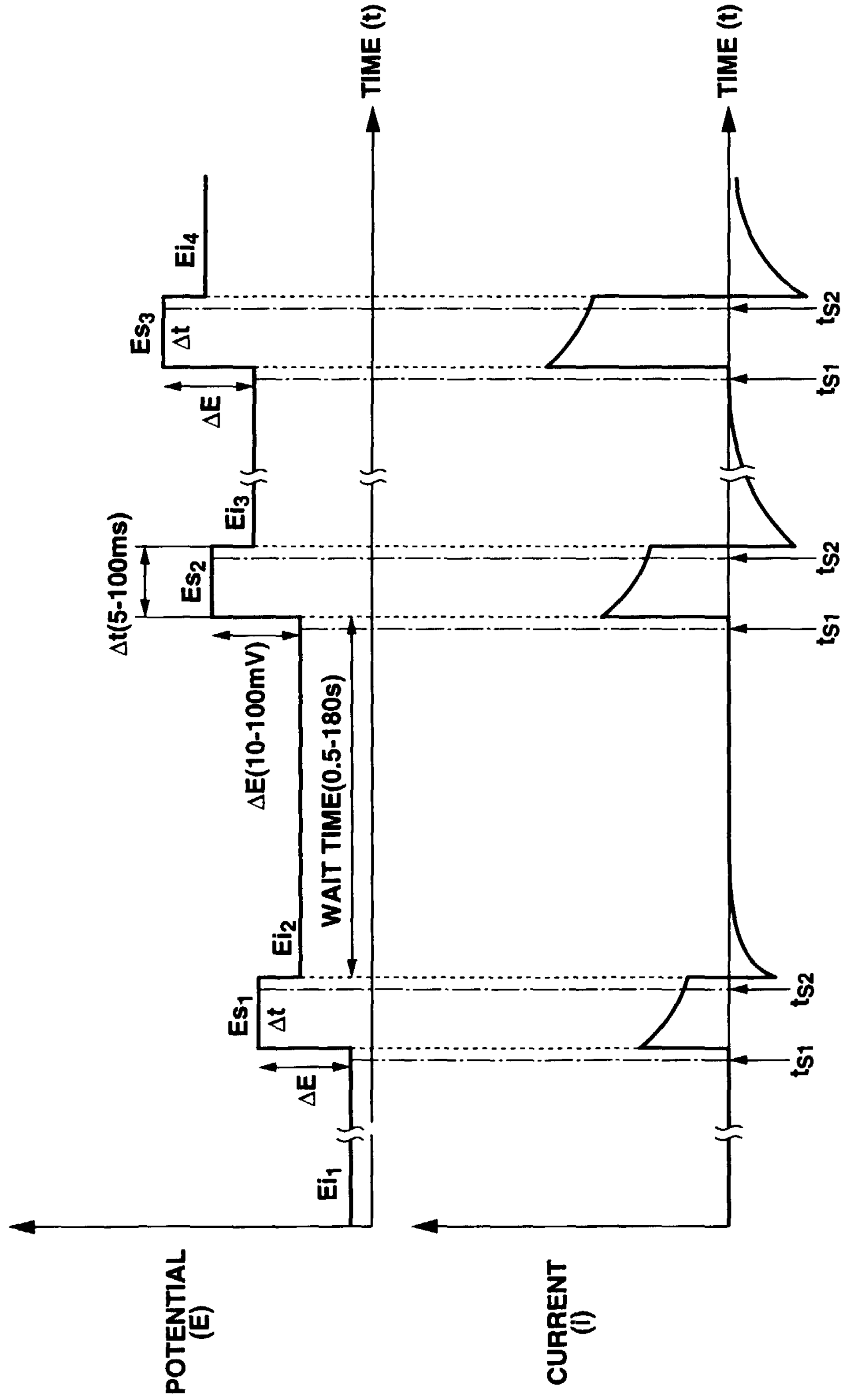
POTENTIAL (E)
CURRENT (i)
TIME (t)
TIME (t)
Ei1
ΔE
Es1
Δt
Ei2
WAIT TIME(0.5-180s)
ΔE(10-100mV)
Δt(5-100ms)
Es2
Ei3
ΔE
Es3
Δt
Ei4
tS1
tS2
tS1
tS2
tS1
tS2

FIG.41

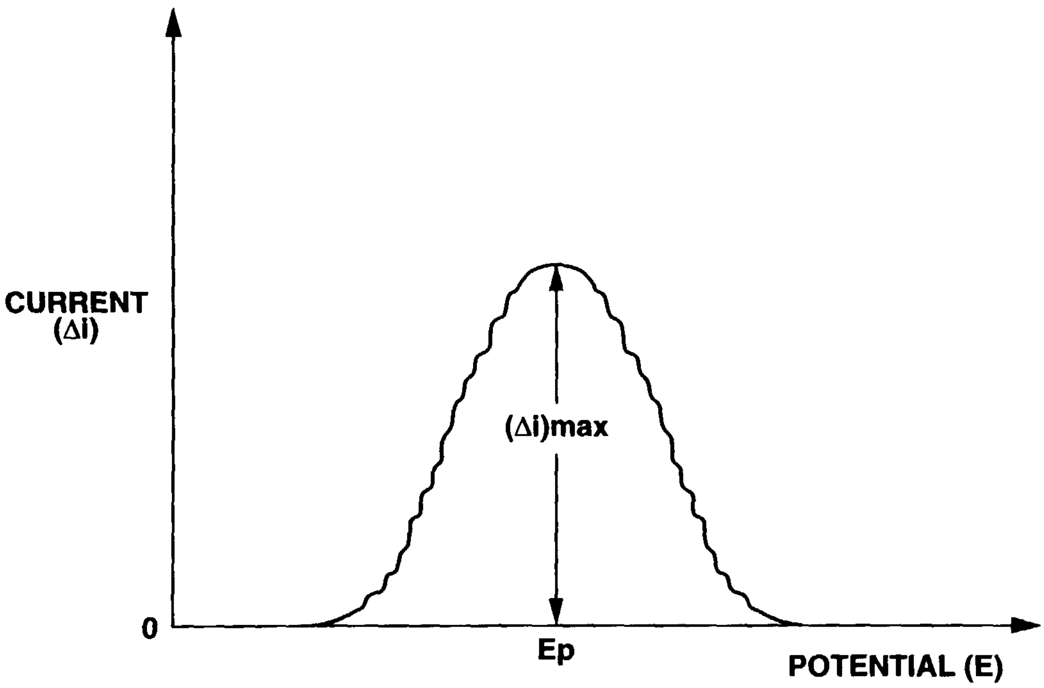

FIG.42

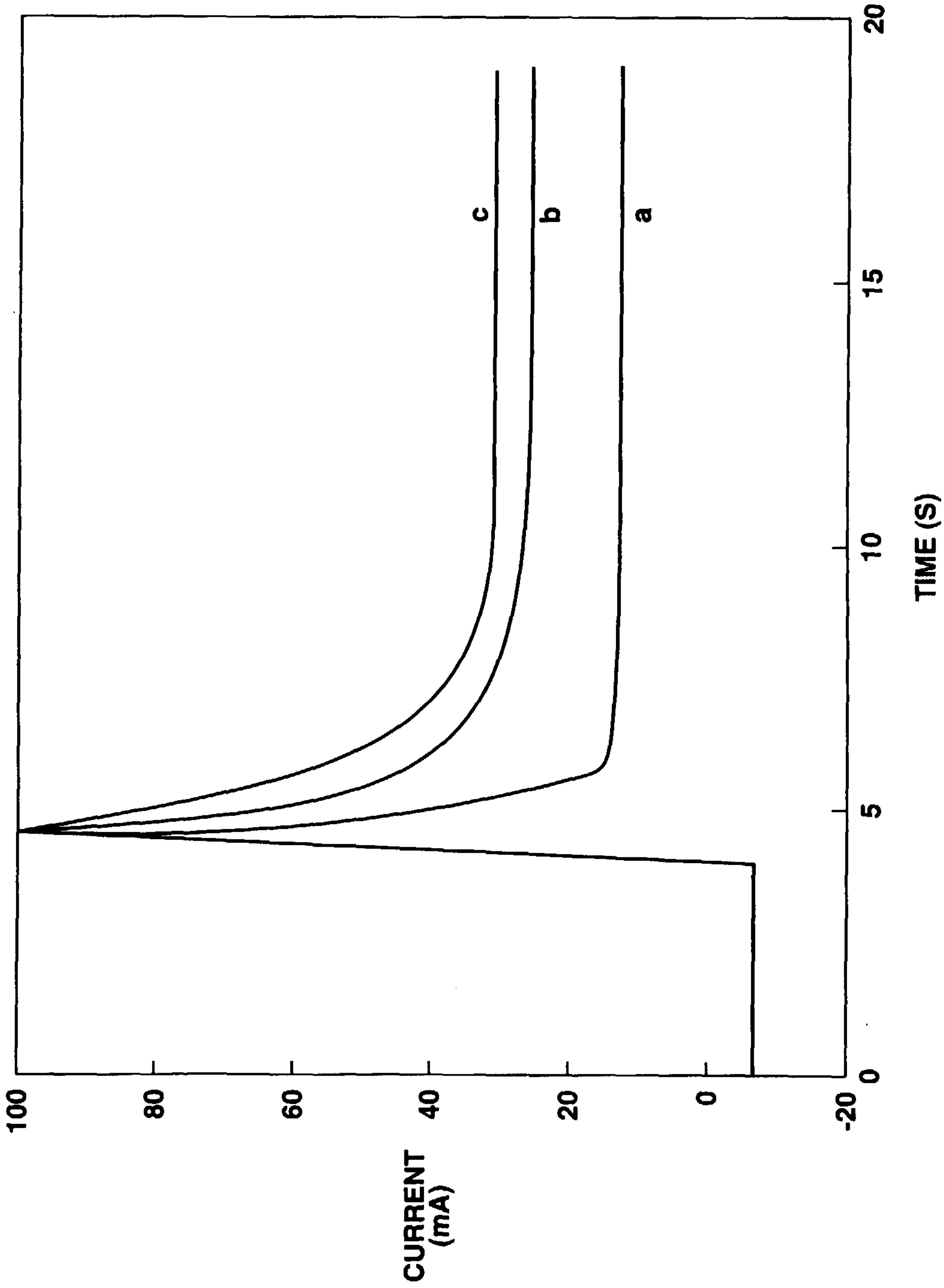

FIG.43

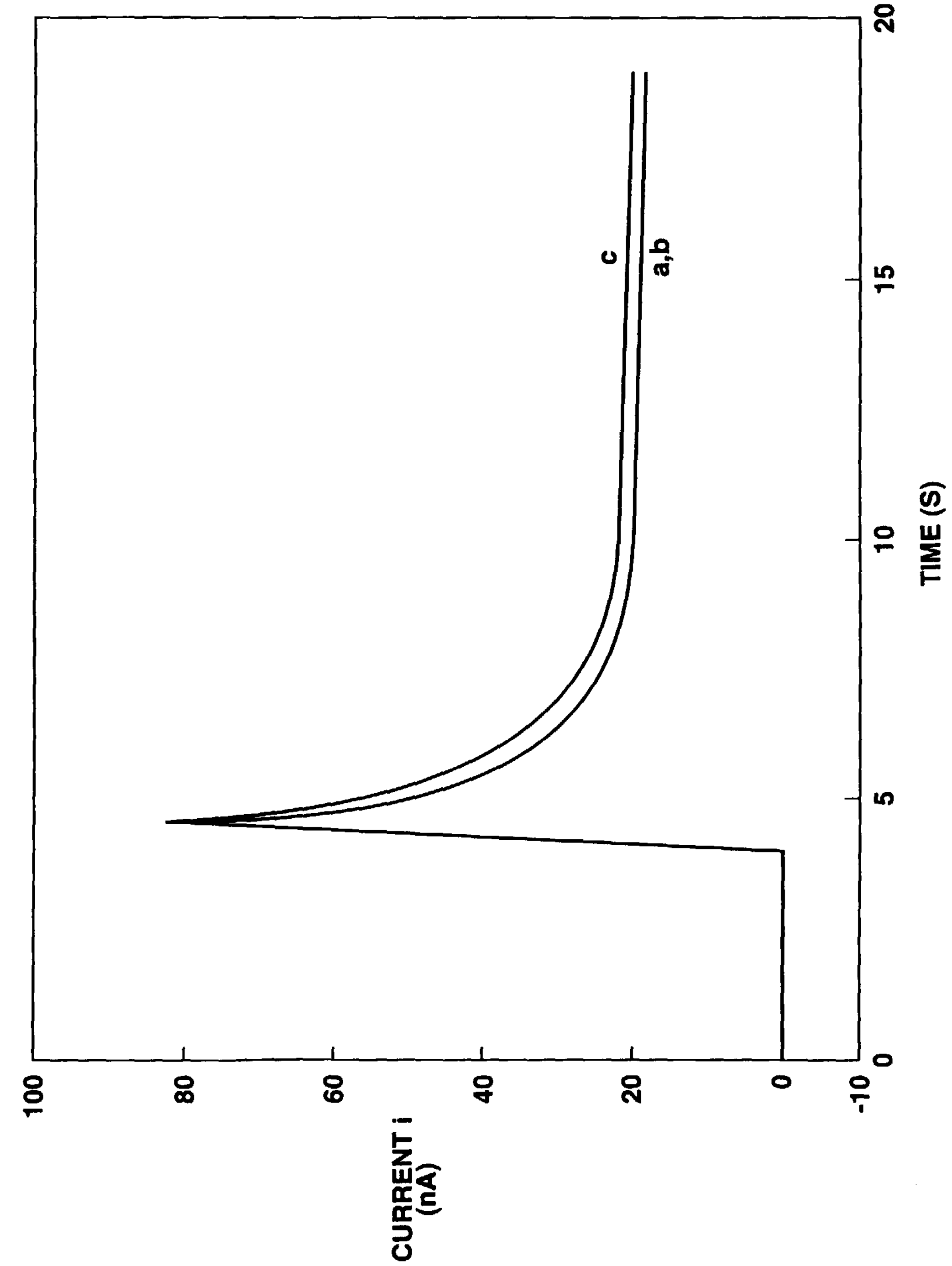

FIG.44

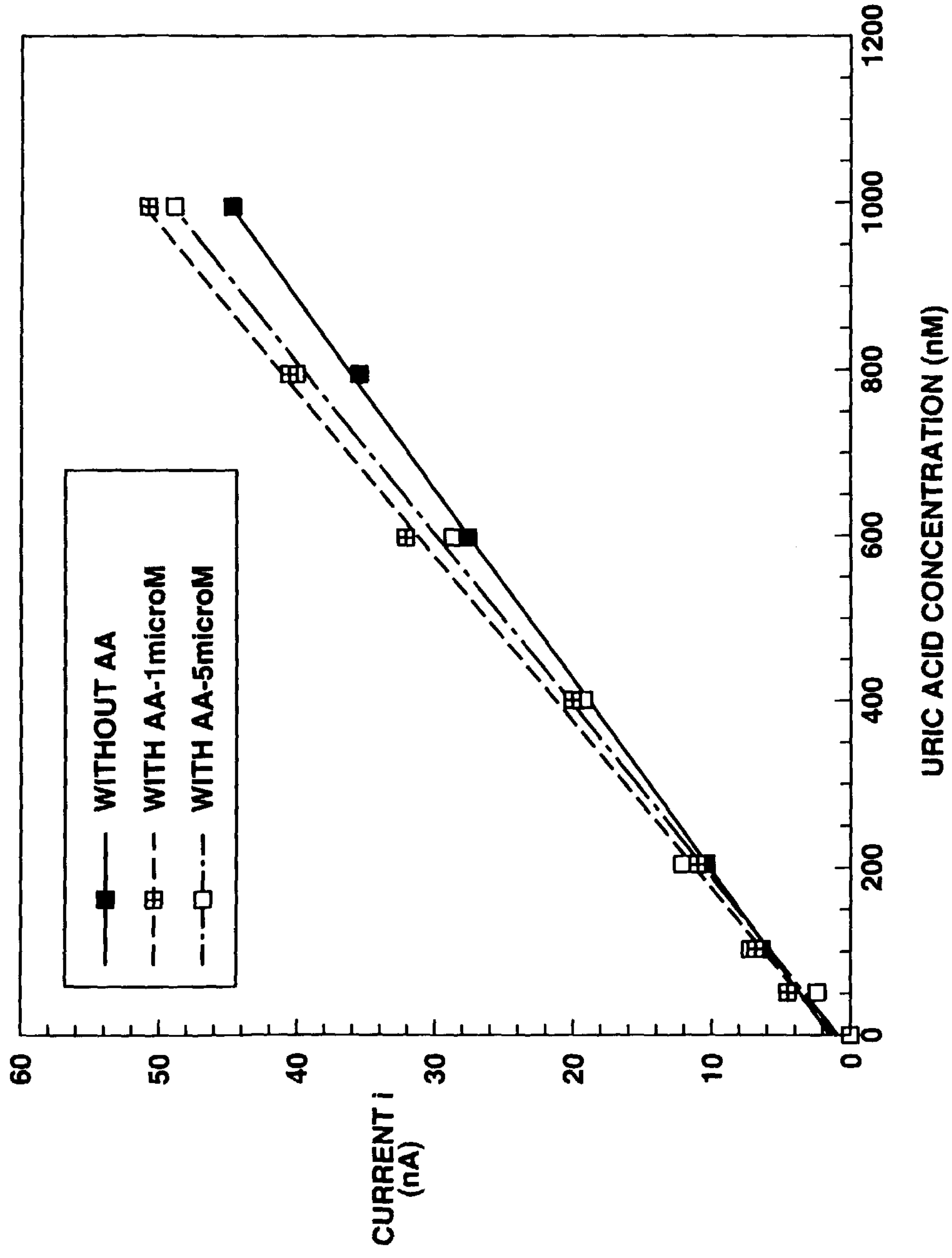
CURRENT i
(nA)
0
10
20
30
40
50
60
URIC ACID CONCENTRATION (nM)
0
200
400
600
800
1000
1200
WITHOUT AA
WITH AA-1microM
WITH AA-5microM

FIG.45

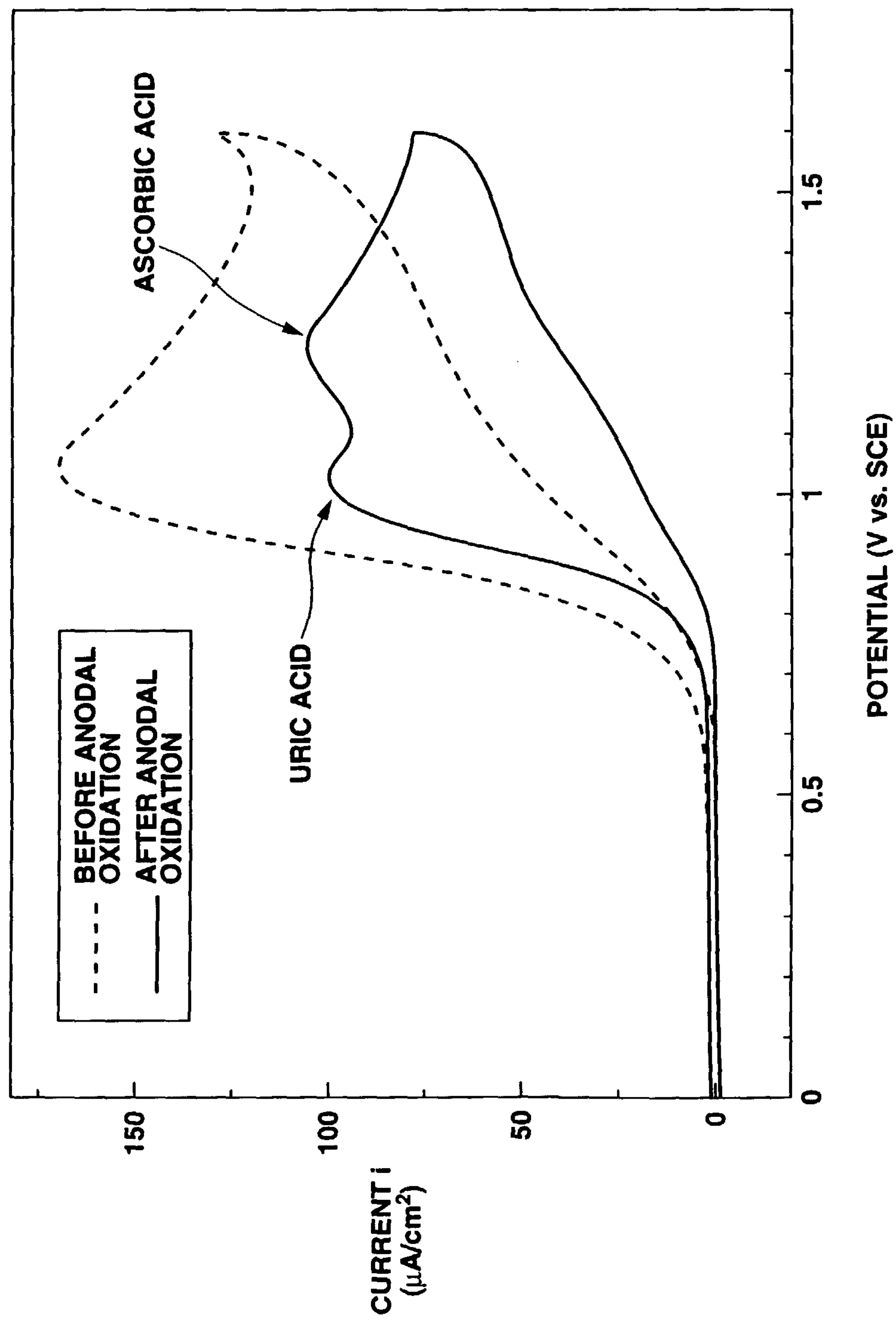
BEFORE ANODAL OXIDATION
AFTER ANODAL OXIDATION
URIC ACID
ASCORBIC ACID
CURRENT i (μA/cm2)
150
100
50
0
0
0.5
1
1.5
POTENTIAL (V vs. SCE)

# FIG.46A

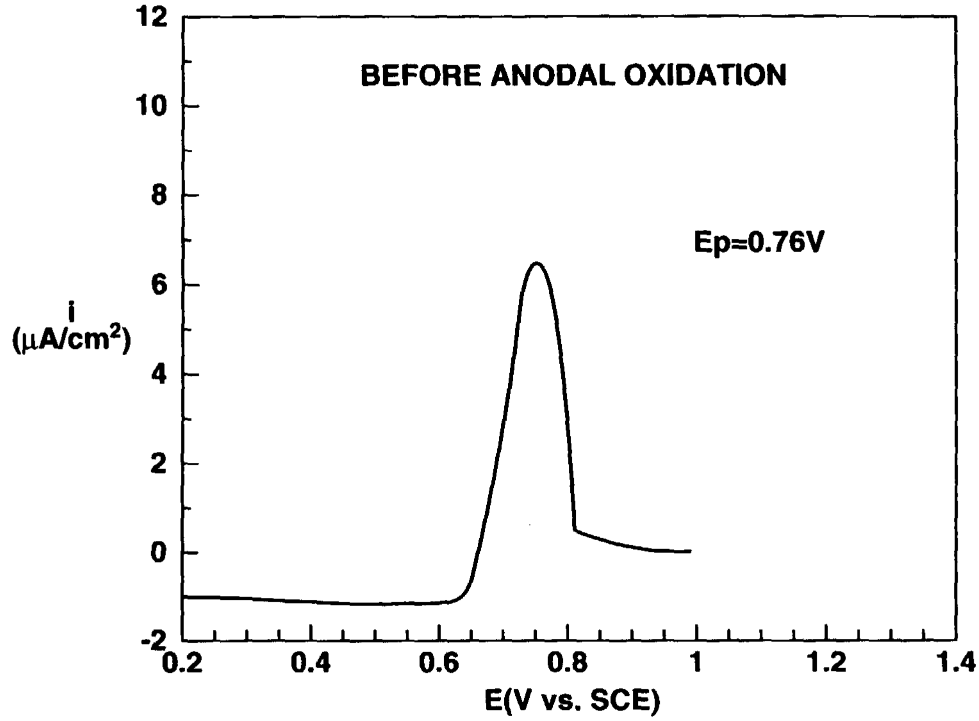


# FIG.46B

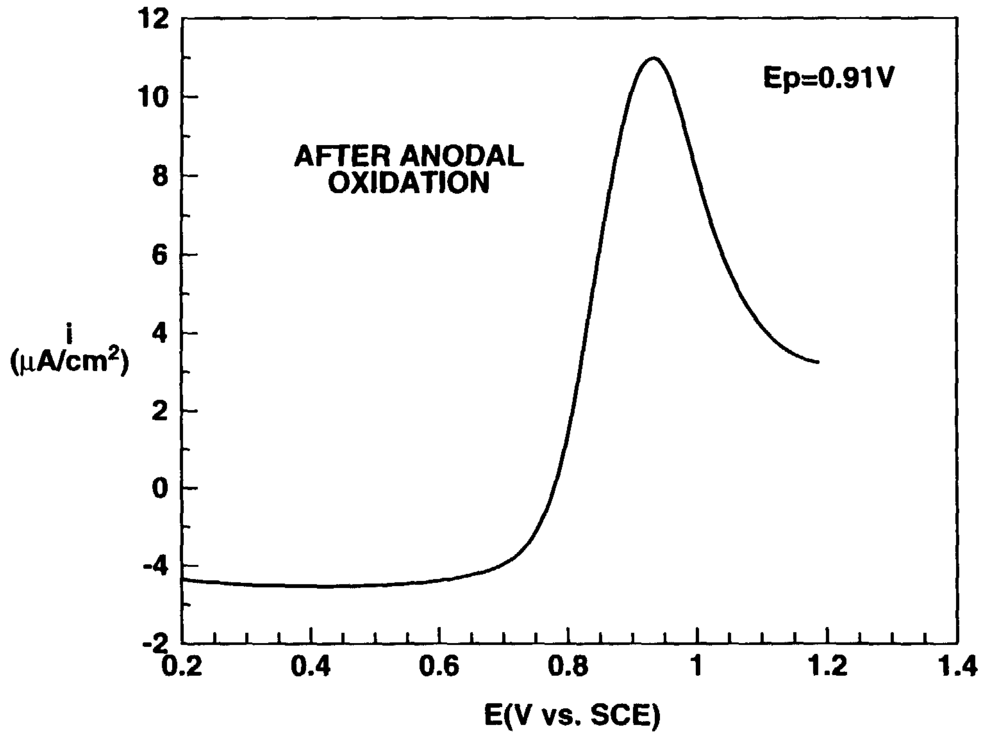

# FIG.47A

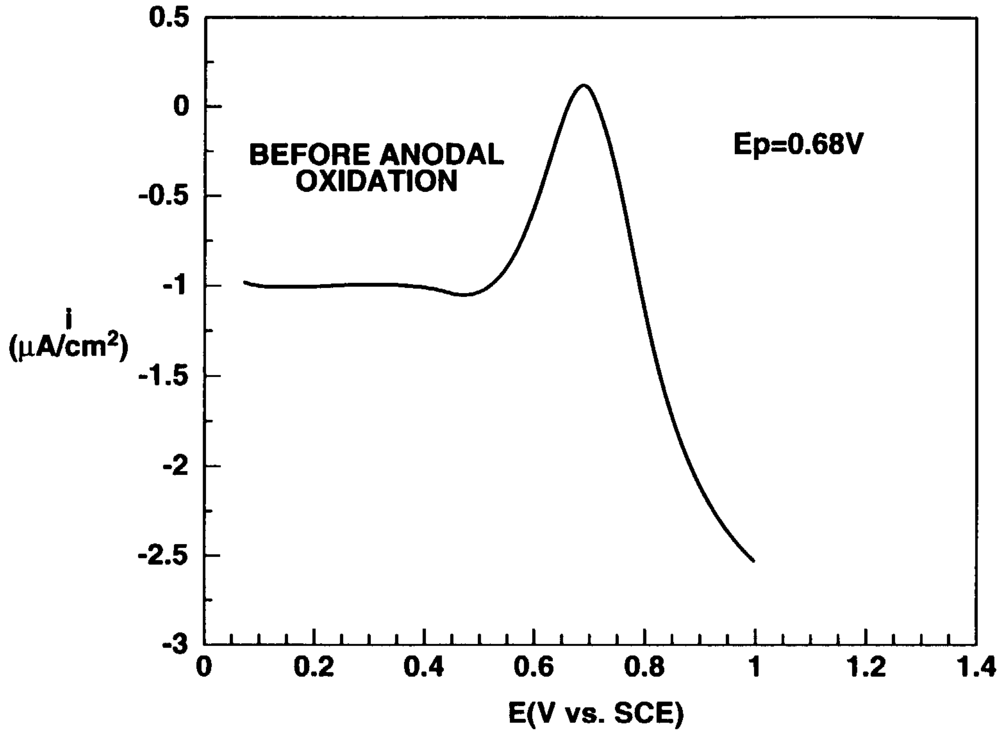


# FIG.47B

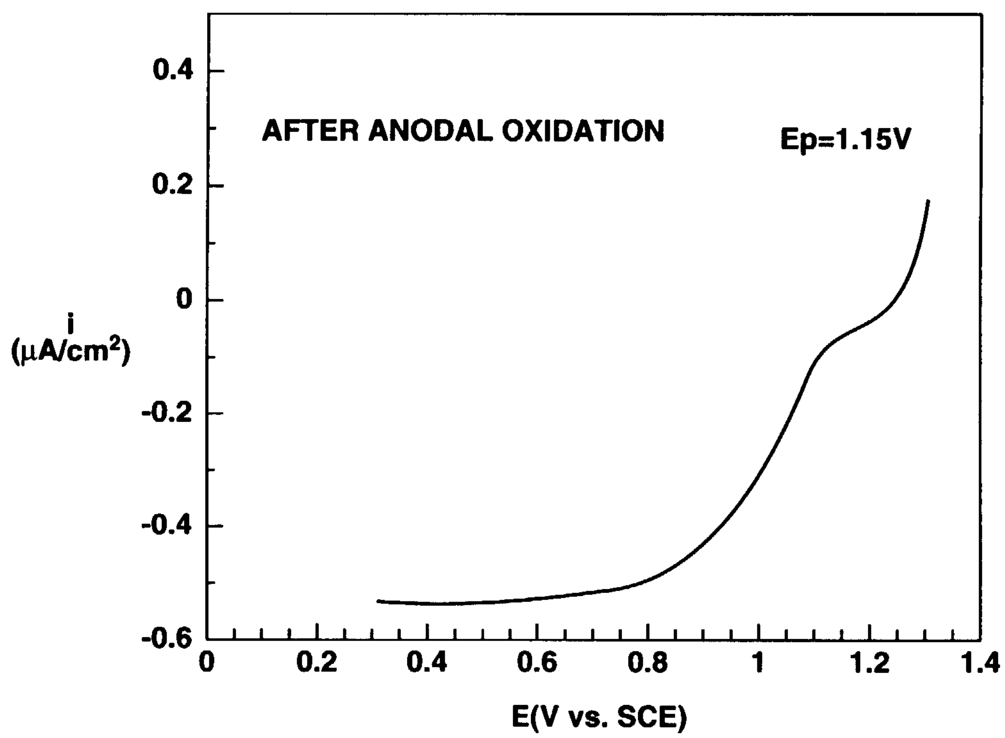

# FIG.48

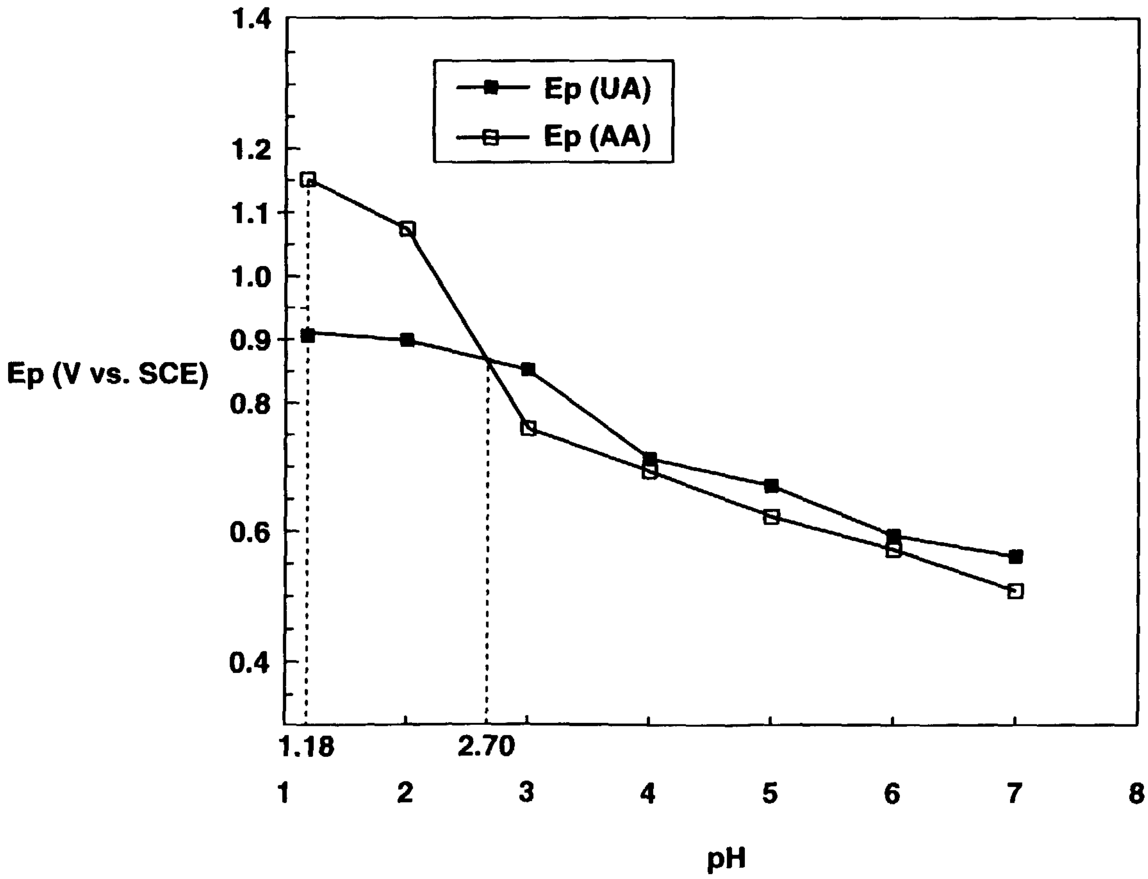

FIG.49

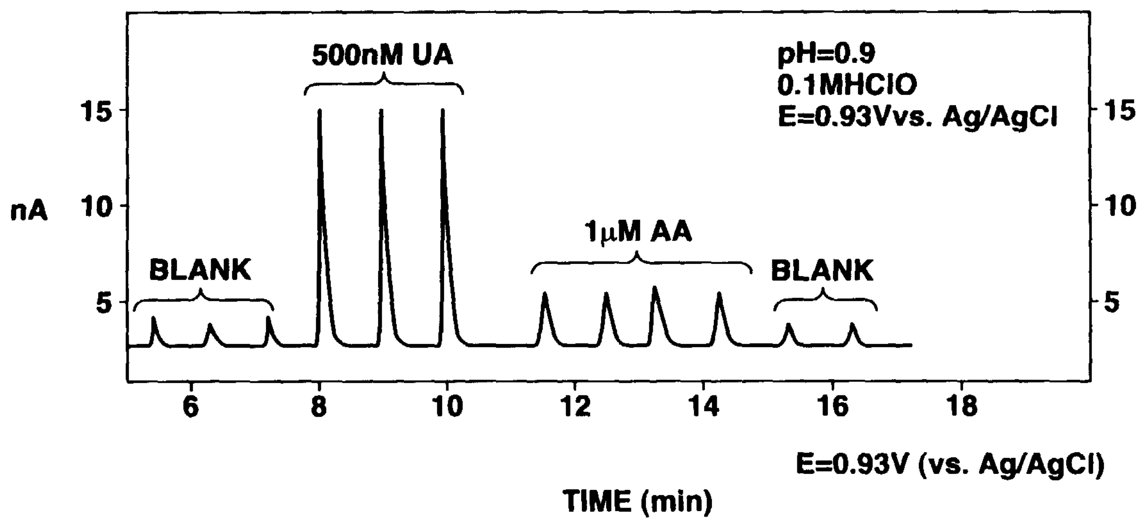
500nM UA
pH=0.9
0.1MHClO
E=0.93Vvs. Ag/AgCl
15
10
5
nA
1μM AA
BLANK
BLANK
6
8
10
12
14
16
18
E=0.93V (vs. Ag/AgCl)
TIME (min)